# EUROPEAN PATENT APPLICATION

(11) **EP 4 838 791 A1**
(43) Date of publication of application: **11.11.2026**
(21) Application number: 24914688.7
(22) Date of filing: 05.01.2024
(51) Int. Cl.: H04B 7/0456

(54) **COMMUNICATION METHOD, TERMINAL, NETWORK DEVICE, COMMUNICATION SYSTEM AND STORAGE MEDIUM**

(71) Applicant: Beijing Xiaomi Mobile Software Co., Ltd., Beijing 100085 (CN)
(72) Inventor: ZHANG, Zhenyu, Beijing 100085 (CN)
(74) Representative: Dehns Germany Partnerschaft mbB
(86) International application number: PCT/CN2024/070974
(87) International publication number: WO 2025/145459

(57) **Abstract**

A communication method, a terminal, a network device, a communication system and a storage medium. The method comprises: a terminal determining a first codeword in a first codebook, wherein the first codebook is obtained on the basis of an angle parameter set and a distance parameter set, and the first codebook is a codebook used when the terminal is located in a near-field region of a first antenna array; and the terminal sending first information to a network device, wherein the first information is used for indicating the first codeword. A first codeword determined by a terminal can better match wireless propagation characteristics of a near-field region, thereby improving the transmission performance of the near-field region.

## Description

### TECHNICAL FIELD

The present disclosure relates to the technical field of communication, and in particular, to communication methods, a terminal, a network device, a communication system, and a storage medium.

### BACKGROUND

Multiple-Input Multiple-Output (MIMO) technology effectively improves system capacity and throughput by adopting multi-antenna technology. On one hand, continuously increasing the number of antennas will further boost system performance; on the other hand, the introduction of higher frequency bands will bring higher path loss, while a larger number of antennas can provide higher beamforming gain.

### SUMMARY

The embodiments of the present disclosure provide communication methods, a terminal, a network device, a communication system, and a storage medium.

According to a first aspect of the embodiments of the present disclosure, a communication method is provided. The method includes:
determining, by a terminal a first codeword in a first codebook, where the first codebook is obtained based on an angle parameter set and a distance parameter set, and the first codebook is a codebook used when the terminal is located in a near-field region of a first antenna array; and
sending, by the terminal, first information to the network device, where the first information is used to indicate the first codeword.

According to a second aspect of the embodiments of the present disclosure, a communication method is provided. The method includes:
receiving, by a network device, first information sent by a terminal, where the first information is used to indicate a first codeword; the first codeword is a codeword in a first codebook; the first codebook is obtained based on an angle parameter set and a distance parameter set; and the first codebook is a codebook used when the terminal is located in a near-field region of a first antenna array.

According to a third aspect of the embodiments of the present disclosure, a terminal is provided. The terminal includes:
a processing module, configured to determine a first codeword in a first codebook, where the first codebook is obtained based on an angle parameter set and a distance parameter set, and the first codebook is a codebook used when the terminal is located in a near-field region of a first antenna array; and
a transceiver module, configured to send first information to the network device, where the first information is used to indicate the first codeword.

According to a fourth aspect of the embodiments of the present disclosure, a network device is provided. The network device includes:
a transceiving module, configured to receive first information sent by a terminal, where the first information is used to indicate a first codeword; the first codeword is a codeword in a first codebook; the first codebook is obtained based on an angle parameter set and a distance parameter set; and the first codebook is a codebook used when the terminal is located in a near-field region of a first antenna array.

According to a fifth aspect of the embodiments of the present disclosure, a terminal is provided, including:
one or more processors;
a memory coupled to the one or more processors, where the memory stores executable instructions that, when executed by the one or more processors, cause the terminal to perform the communication method according to the first aspect.

According to a sixth aspect of the embodiments of the present disclosure, a network device is provided, including:
one or more processors; and
a memory coupled to the one or more processors, where the memory stores executable instructions that, when executed by the one or more processors, cause the network device to perform the communication method according to the second aspect.

According to a seventh aspect of the embodiments of the present disclosure, a communication system is provided, including a terminal and a network device. The terminal is configured to implement the communication method according to the first aspect, and the network device is configured to implement the communication method according to the second aspect.

According to an eighth aspect of the embodiments of the present disclosure, a storage medium is provided. The storage medium stores instructions that, when run on a communication device, cause the communication device to perform the communication method according to the first aspect or the second aspect.

In the foregoing embodiments, the first codebook for the near-field region can be constructed based on angle parameters and distance parameters. The first codeword determined by the terminal can better match the wireless propagation characteristics of the near-field region, so as to improve the transmission performance in the near-field region.

### BRIEF DESCRIPTION OF THE DRAWINGS

To more clearly illustrate the technical solutions in the embodiments of the present disclosure, the accompanying drawings required for describing the embodiments are introduced below. The accompanying drawings merely show some embodiments of the present disclosure and shall not impose any specific limitation on the protection scope of the present disclosure.
FIG. 1A is an exemplary schematic diagram of an architecture of a communication system provided according to an embodiment of the present disclosure.
FIG. 1B is an exemplary schematic diagram of a first antenna array provided according to an embodiment of the present disclosure.
FIG. 1C is an exemplary schematic diagram of a first antenna array provided according to an embodiment of the present disclosure.
FIG. 2A is an exemplary schematic interaction diagram of a communication method provided according to an embodiment of the present disclosure.
FIG. 2B is an exemplary schematic diagram of rectangular quantization provided according to an embodiment of the present disclosure.
FIG. 2C is an exemplary schematic diagram of hexagonal quantization provided according to an embodiment of the present disclosure.
FIG. 3A is an exemplary flowchart of a communication method provided according to an embodiment of the present disclosure.
FIG. 3B is an exemplary flowchart of a communication method provided according to an embodiment of the present disclosure.
FIG. 4A is an exemplary flowchart of a communication method provided according to an embodiment of the present disclosure.
FIG. 4B is an exemplary flowchart of a communication method provided according to an embodiment of the present disclosure.
FIG. 5 is an exemplary schematic interaction diagram of a communication method provided according to an embodiment of the present disclosure.
FIG. 6 is an exemplary flowchart of a communication method provided according to an embodiment of the present disclosure.
FIG. 7A is an exemplary schematic structural diagram of a terminal provided according to an embodiment of the present disclosure.
FIG. 7B is an exemplary schematic structural diagram of a network device provided according to an embodiment of the present disclosure.
FIG. 8A is an exemplary schematic structural diagram of a communication device provided according to an embodiment of the present disclosure.
FIG. 8B is an exemplary schematic structural diagram of a communication device provided according to an embodiment of the present disclosure.

### DETAILED DESCRIPTION

In a first aspect, an embodiment of the present disclosure provides a communication method. The method includes:
determining, by a terminal, a first codeword in a first codebook, where the first codebook is obtained based on an angle parameter set and a distance parameter set, and the first codebook is a codebook used when the terminal is located in a near-field region of a first antenna array; and
sending, by the terminal, first information to the network device, where the first information is used to indicate the first codeword.

In the foregoing embodiments, the first codebook used for the near-field region can be constructed based on angle parameters and distance parameters. Accordingly, the terminal can determine the corresponding first codeword when it is in the near-field region, and feed back the angle parameters and distance parameters corresponding to the first codeword to the network device via the first information. The first codeword determined by the terminal can better match the wireless propagation characteristics of the near-field region, so as to improve the transmission performance within the near-field region.

With reference to the first aspect, the first antenna array is any one of the following: a uniform linear array; and a uniform planar array.

In the foregoing embodiments, the first codebook may be applied to antenna arrays adopting a uniform linear array or a uniform planar array structure. Accordingly, terminals located in such antenna arrays can achieve more reliable near-field transmission based on the first codebook.

With reference to some embodiments of the first aspect, in certain embodiments, the first antenna array includes *N*₁ antenna ports in the horizontal dimension and *N*₂ antenna ports in the vertical dimension, where *N*₁ is greater than or equal to 1, and *N*₂ is greater than or equal to 1.

In the foregoing embodiments, the first codebook can be applicable to antenna arrays with a number of antenna ports greater than or equal to 1 in both the horizontal and vertical dimensions. Accordingly, terminals located in such antenna arrays can achieve more reliable near-field transmission based on the first codebook.

With reference to some embodiments of the first aspect, in some embodiments, the angle parameter includes: at least one first angle parameter, where the first angle parameter is obtained by quantifying a horizontal-dimension angle domain in the near-field region according to the number of antenna ports *N*₁ in the horizontal dimension and an oversampling factor *O*₁ of the horizontal-dimension angle domain; and/or, at least one second angle parameter, where the second angle parameter is obtained by quantifying a vertical-dimension angle domain in the near-field region according to the number of antenna ports *N*₂ in the vertical dimension and an oversampling factor *O*₂ of the vertical-dimension angle domain;
the distance parameter includes:
at least one first distance parameter, where the first distance parameter is obtained by quantifying a horizontal-dimension distance domain in the near-field region according to the number of sampling points *N*₃ in the horizontal dimension and an oversampling factor *O*₂ of the horizontal-dimension distance domain; and/or, at least one second distance parameter, where the second distance parameter is obtained by quantifying a vertical-dimension distance domain in the near-field region according to the number of sampling points *N*₄ in the vertical dimension and an oversampling factor *O*₄ of the vertical-dimension distance domain.

In the foregoing embodiments, quantization can be performed on the angle domain and distance domain of each dimension based on the number of sampling points and the oversampling factor of the angle domain and distance domain in each foregoing dimension, so as to obtain a plurality of discrete angle parameters and distance parameters, thereby effectively reducing the quantity of codewords in the first codebook.

With reference to some embodiments of the first aspect, in some embodiments, multiple first distance parameters are distributed in K first distance parameter subsets, and quantization offsets of first angle parameters corresponding to the first distance parameters distributed in different first distance parameter subsets are different; and/or,
multiple second distance parameters are distributed in K second distance parameter subsets, and quantization offsets of second angle parameters corresponding to the second distance parameters distributed in different second distance parameter subsets are different.

In the foregoing embodiments, the distance parameters may be divided into at least one subset in the horizontal dimension and/or the vertical dimension, and different subsets correspond to different quantization offsets of angle parameters. As a result, each codeword in the first codebook can cover a larger area in the polarization domain, which reduces the number of codewords while guaranteeing communication quality.

With reference to some embodiments of the first aspect, in some embodiments, a quantization offset of a first angle parameter corresponding to a first distance parameter in a first distance parameter subset with index *k* is $\frac{k}{K}$, and the first angle parameter corresponding to the first distance parameter in the first distance parameter subset with index *k* satisfy $l ∈ \left\{\frac{k}{K},1+\frac{k}{K},⋯,{N}_{1}{O}_{1}-1+\frac{k}{K}\right\}$; and/or, a quantization offset of a second angle parameter corresponding to a second distance parameter in a second distance parameter subset with index *k* is $\frac{k}{K}$, and the second angle parameter corresponding to the second distance parameter in the second distance parameter subset with index *k* satisfy $m ∈ \left\{\frac{k}{K},1+\frac{k}{K},⋯,{N}_{2}{O}_{2}-1+\frac{k}{K}\right\}$; where 0≤*k*≤*K-*1 and *k* is an integer.

With reference to some embodiments of the first aspect, in some embodiments, *K*=2, the first distance parameter ${o}_{1} ∈ \left\{1, 2, ⋯, \left⌈\frac{2 \sqrt{2}}{3}\left({N}_{3}{O}_{3}-1\right)+1\right⌉\right\}$; and/or, the second distance parameter ${o}_{2} ∈ \left\{1, 2, ⋯, \left⌈\frac{2 \sqrt{2}}{3}\left({N}_{4}{O}_{4}-1\right)+1\right⌉\right\}$.

In the foregoing embodiments, K may be set to 2, so that hexagonal quantization can be implemented for distance parameters in the horizontal dimension and/or the distance dimension. The number of the first distance parameters can be reduced to $\left⌈\frac{2 \sqrt{2}}{3}\left({N}_{3}{O}_{3}-1\right)+1\right⌉$ and/or the number of the second distance parameters can be reduced to $\left⌈\frac{2 \sqrt{2}}{3}\left({N}_{4}{O}_{4}-1\right)+1\right⌉$.

With reference to some embodiments of the first aspect, in some embodiments, a basis vector of the first codebook is a Kronecker product of a first basis vector in the horizontal dimension and a second basis vector in the vertical dimension; an ${n}_{1}^{′}$-th element ${ν}_{{n}_{1}^{′}}$ in the first basis vector *v* is: ${ν}_{{n}_{1}^{′}} = exp \left(j\frac{2 π}{λ}\left(\frac{2 {ln}_{1}^{′} {d}_{x}}{{N}_{1} {O}_{1}}-\frac{\left({\left({n}_{1}^{′}\right)}^{2}-{n}_{1}^{′}\left({N}_{1}+1\right)\right) {d}_{x}^{2} λ {\left⌈\frac{2 \sqrt{2}}{3}\left({N}_{3}{O}_{3}-1\right)+1\right⌉}^{2}}{4 {o}_{1}^{2} {D}_{x}^{2}}\right)\right)$; and/or, an ${n}_{2}^{′}$-th element ${u}_{{n}_{2}^{′}}$ in the second basis vector u is: ${u}_{{n}_{2}^{′}} = exp \left(j\frac{2 π}{λ}\left(\frac{2 {mn}_{2}^{′} {d}_{z}}{{N}_{2} {O}_{2}}-\frac{\left({\left({n}_{2}^{′}\right)}^{2}-{n}_{2}^{′}\left({N}_{2}+1\right)\right) {d}_{z}^{2} λ {\left⌈\frac{2 \sqrt{2}}{3}\left({N}_{4}{O}_{4}-1\right)+1\right⌉}^{2}}{4 {o}_{2}^{2} {D}_{z}^{2}}\right)\right)$; where *j* is an imaginary unit, *λ* represents a wavelength of wireless signal, *dₓ* represents a horizontal-dimension antenna spacing of the first antenna array, *Dₓ* represents a horizontal-dimension length of the first antenna array, *d_{z}* represents a vertical-dimension antenna spacing of the first antenna array, and *D_{z}* represents a vertical-dimension length of the first antenna array.

In the foregoing embodiments, the first basis vector corresponding to each first distance parameter and the second basis vector corresponding to each second distance parameter can be accurately determined through the foregoing formulas. Moreover, codewords in the first codebook can be constructed based on these basis vectors, which can effectively guarantee the reliability of near-field transmission.

With reference to some embodiments of the first aspect, in some embodiments, ${d}_{x} = \frac{λ}{2} , {D}_{x} = {N}_{1} {d}_{x} = {N}_{1} \frac{λ}{2}$, *N*₁=*N*₃ and *O*₁ *= O*₃*,* the ${n}_{1}^{′}$-th element ${ν}_{{n}_{1}^{′}}$ in the first basis vector *v* is: ${ν}_{{n}_{1}^{′}} = exp \left(\frac{j 2 {πln}_{1}^{′}}{{N}_{1} {O}_{1}}-\frac{jπ \left({\left({n}_{1}^{′}\right)}^{2}-{n}_{1}^{′}\left({N}_{1}+1\right)\right) {\left⌈\frac{2 \sqrt{2}}{3}\left({N}_{1}{O}_{1}-1\right)+1\right⌉}^{2}}{2 {o}_{1}^{2} {N}_{1}^{2}}\right)$; and/or, ${d}_{z} = \frac{λ}{2} , {D}_{z} = {N}_{2} {d}_{z} = {N}_{2} \frac{λ}{2}$*, N*₂ = *N*₄ and *O*₂ *= O*₄, the ${n}_{2}^{′}$-th element ${u}_{{n}_{2}^{′}}$ in the second basis vector *u* is: ${u}_{{n}_{2}^{′}} = exp \left(\frac{j 2 {πmn}_{2}^{′}}{{N}_{2} {O}_{2}}-\frac{jπ \left({\left({n}_{2}^{′}\right)}^{2}-{n}_{2}^{′}\left({N}_{2}+1\right)\right) {\left⌈\frac{2 \sqrt{2}}{3}\left({N}_{2}{O}_{2}-1\right)+1\right⌉}^{2}}{2 {o}_{2}^{2} {N}_{2}^{2}}\right)$.

With reference to some embodiments of the first aspect, in some embodiments, multiple first angle parameters are distributed in *K* first angle parameter subsets, and quantization offsets of first distance parameters corresponding to the first angle parameters distributed in different first angle parameter subsets are different; and/or, multiple second angle parameters are distributed in *K* second angle parameter subsets, and quantization offsets of second distance parameters corresponding to the second angle parameters distributed in different second angle parameter subsets are different.

In the foregoing embodiments, the angle parameters may be divided into at least one subset in the horizontal dimension and/or the vertical dimension, and different subsets correspond to different quantization offsets of distance parameters. As a result, each codeword in the first codebook can cover a larger area in the polarization domain, which reduces the number of codewords while guaranteeing communication quality.

With reference to some embodiments of the first aspect, in some embodiments, a quantization offset of a first distance parameter corresponding to a first angle parameter in a first angle parameter subset with index *k* is $\frac{k}{K}$, and the first distance parameter corresponding to the first angle parameter in the first angle parameter subset with index *k* satisfy ${o}_{1} ∈ \left\{\frac{k}{K},1+\frac{k}{K},⋯,{N}_{3}{O}_{3}-1+\frac{k}{K}\right\}$; and/or, a quantization offset of a second distance parameter corresponding to a second angle parameter in a second angle parameter subset with index *k* is $\frac{k}{K}$, and the second distance parameters corresponding to the second angle parameter in the second angle parameter subset with index *k* satisfy ${o}_{2} ∈ \left\{\frac{k}{K},1+\frac{k}{K},⋯,{N}_{4}{O}_{4}-1+\frac{k}{K}\right\}$; where 0 *< k* ≤ *K* and *k* is an integer.

With reference to some embodiments of the first aspect, in some embodiments, *K*=2, the first angle parameter $l ∈ \left\{0, 1, 2, ⋯, \left⌈\frac{2 \sqrt{2}}{3}\left({N}_{1}{O}_{1}-1\right)\right⌉\right\}$; and/or, the second angle parameter $m ∈ \left\{0, 1, 2, ⋯, \left⌈\frac{2 \sqrt{2}}{3}\left({N}_{2}{O}_{2}-1\right)\right⌉\right\}$.

With reference to some embodiments of the first aspect, in some embodiments, an ${n}_{1}^{′}$ -th element ${ν}_{{n}_{1}^{′}}$ in the first basis vector *v* is: ${ν}_{{n}_{1}^{′}} = exp \left(j\frac{2 π}{λ}\left(\frac{2 {ln}_{1}^{′} {d}_{x}}{\left⌈\frac{2 \sqrt{2}}{3}\left({N}_{1}{O}_{1}-1\right)+1\right⌉}-\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)\right)$; and/ or, an ${n}_{2}^{′}$-th element ${u}_{{n}_{2}^{′}}$ in the second basis vector *u* is: ${u}_{{n}_{2}^{′}} = exp \left(j\frac{2 π}{λ}\left(\frac{2 {mn}_{2}^{′} {d}_{z}}{\left⌈\frac{2 \sqrt{2}}{3}\left({N}_{2}{O}_{2}-1\right)+1\right⌉}-\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)\right)$; where *j* is an imaginary unit, *λ* represents a wavelength of wireless signal, *dₓ* represents a horizontal-dimension antenna spacing of the first antenna array, *Dₓ* represents a horizontal-dimension length of the first antenna array, *d_{z}* represents a vertical-dimension antenna spacing of the first antenna array, and *D_{z}* represents a vertical-dimension length of the first antenna array.

With reference to some embodiments of the first aspect, in some embodiments, ${d}_{x} = \frac{λ}{2}$, ${D}_{x} = {N}_{1} {d}_{x} = {N}_{1} \frac{λ}{2}$*, N*₁ = *N*₃ and *O*₁ = *O*₃, the ${n}_{1}^{′}$-th element ${ν}_{{n}_{1}^{′}}$ in the first basis vector *v* is: ${ν}_{{n}_{1}^{′}} = exp \left(\frac{j 2 {πln}_{1}^{′}}{\left⌈\frac{2 \sqrt{2}}{3}\left({N}_{1}{O}_{1}-1\right)+1\right⌉}-\frac{jπ \left({\left({n}_{1}^{′}\right)}^{2}-{n}_{1}^{′}\left({N}_{1}+1\right)\right) {O}_{1}^{2}}{2 {o}_{1}^{2}}\right)$; and/or, ${d}_{z} = \frac{λ}{2} , {D}_{z} = {N}_{2} {d}_{z} = {N}_{2} \frac{λ}{2}$*, N*₂ *= N*₄ and *O*₂ = *O*₄, the ${n}_{2}^{′}$-th element ${u}_{{n}_{2}^{′}}$ in the second basis vector *u* is: ${u}_{{n}_{2}^{′}} = exp \left(\frac{j 2 {πmn}_{2}^{′}}{\left⌈\frac{2 \sqrt{2}}{3}\left({N}_{2}{O}_{2}-1\right)+1\right⌉}-\frac{jπ \left({\left({n}_{2}^{′}\right)}^{2}-{n}_{2}^{′}\left({N}_{2}+1\right)\right) {O}_{2}^{2}}{2 {o}_{2}^{2}}\right) .$

With reference to some embodiments of the first aspect, in some embodiments, the first information includes at least one of: a first indication field, where the first indication field is used to indicate a first angle parameter corresponding to the first codeword; a second indication field, where the second indication field is used to indicate a second angle parameter corresponding to the first codeword; a third indication field, where the third indication field is used to indicate a first distance parameter corresponding to the first codeword; a fourth indication field, where the fourth indication field is used to indicate a second distance parameter corresponding to the first codeword.

In the foregoing embodiments, each parameter corresponding to the first codeword may be reported to the network device via each of the foregoing indication fields. Accordingly, the network device can accurately obtain the first codeword determined by the terminal based on the first information, and implement reliable near-field transmission based on the first codeword.

With reference to some embodiments of the first aspect, in some embodiments, the first indication field includes at least $\left⌈{log}_{2} {N}_{1}{O}_{1}\right⌉$ bits; the second indication field includes at least $\left⌈{log}_{2} {N}_{2}{O}_{2}\right⌉$ bits; the third indication field includes at least $\left⌈{log}_{2}\left⌈\frac{2 \sqrt{2}}{3}\left({N}_{3}{O}_{3}-1\right)+1\right⌉\right⌉$ bits; and the fourth indication field includes at least $\left⌈{log}_{2}\left⌈\frac{2 \sqrt{2}}{3}\left({N}_{4}{O}_{4}-1\right)+1\right⌉\right⌉$ bits.

In the foregoing embodiments, reporting of the first codeword can be realized with the minimum number of bits, which effectively reduces resource overhead.

With reference to some embodiments of the first aspect, in some embodiments, the first indication field includes at least $\left⌈{log}_{2}\left⌈\frac{2 \sqrt{2}}{3}\left({N}_{1}{O}_{1}-1\right)+1\right⌉\right⌉$ bits; the second indication field includes at least $\left⌈{log}_{2}\left⌈\frac{2 \sqrt{2}}{3}\left({N}_{2}{O}_{2}-1\right)+1\right⌉\right⌉$ bits; the third indication field includes at least $\left⌈{log}_{2} {N}_{3}{O}_{3}\right⌉$ bits; and the fourth indication field includes at least $\left⌈{log}_{2} {N}_{4}{O}_{4}\right⌉$ bits.

With reference to some embodiments of the first aspect, in some embodiments, the first codebook is used for single-polarization single-layer transmission; or,
the first codebook is used for dual-polarization multi-layer transmission, and the first codebook is constructed based on an angle parameter, a distance parameter and a co-phase coefficient.

With reference to some embodiments of the first aspect, in some embodiments, the method further includes: sending, by the terminal, second information to the network device, where the second information is used to indicate a co-phase coefficient corresponding to the first codeword.

With reference to some embodiments of the first aspect, in some embodiments, the co-phase coefficient includes at least one of the following: binary phase shift keying (BPSK), quadrature phase shift keying (QPSK), and 8 phase shift keying (8-PSK).

In a second aspect, an embodiment of the present disclosure provides a communication method, the method includes: receiving, by a network device, first information sent by a terminal, where the first information is used to indicate a first codeword, the first codeword is a codeword in a first codebook, the first codebook is obtained based on an angle parameter set and a distance parameter set, and the first codebook is a codebook used when the terminal is located in a near-field region of a first antenna array.

With reference to some embodiments of the second aspect, in some embodiments, the first antenna array is any one of the following: a uniform linear array; and a uniform planar array.

With reference to some embodiments of the second aspect, in certain embodiments, the first antenna array includes *N*₁ antenna ports in the horizontal dimension and *N*₂ antenna ports in the vertical dimension, where *N*₁ is greater than or equal to 1, and *N*₂ is greater than or equal to 1.

With reference to some embodiments of the second aspect, in some embodiments, the angle parameter includes: at least one first angle parameter, where the first angle parameter is obtained by quantifying a horizontal-dimension angle domain in the near-field region according to the number of antenna ports *N*₁ in the horizontal dimension and an oversampling factor *O*₁ of the horizontal-dimension angle domain; and/or, at least one second angle parameter, where the second angle parameter is obtained by quantifying a vertical-dimension angle domain in the near-field region according to the number of antenna ports *N*₂ in the vertical dimension and an oversampling factor *O*₂ of the vertical-dimension angle domain.

The distance parameters includes: at least one first distance parameter, where the first distance parameter is obtained by quantifying a horizontal-dimension distance domain in the near-field region according to the number of sampling points *N*₃ in the horizontal dimension and an oversampling factor *O*₃ of the horizontal-dimension distance domain; and/or, at least one second distance parameter, where the second distance parameter is obtained by quantifying a vertical-dimension distance domain in the near-field region according to the number of sampling points *N*₄ in the vertical dimension and an oversampling factor *O*₄ of the vertical-dimension distance domain.

With reference to some embodiments of the second aspect, in some embodiments, multiple first distance parameters are distributed in K first distance parameter subsets, and quantization offsets of first angle parameters corresponding to the first distance parameters distributed in different first distance parameter subsets are different; and/or, multiple second distance parameters are distributed in K second distance parameter subsets, and quantization offsets of second angle parameters corresponding to the second distance parameters distributed in different second distance parameter subsets are different.

With reference to some embodiments of the second aspect, in some embodiments, a quantization offset of a first angle parameter corresponding to a first distance parameter in a first distance parameter subset with index *k* is $\frac{k}{K}$, and the first angle parameter corresponding to the first distance parameter in the first distance parameter subset with index *k* satisfy $l ∈ \left\{\frac{k}{K},1+\frac{k}{K},⋯,{N}_{1}{O}_{1}-1+\frac{k}{K}\right\}$; and/or, a quantization offset of a second angle parameter corresponding to a second distance parameter in a second distance parameter subset with index *k* is *K* , and the second angle parameter corresponding to the second distance parameter in the second distance parameter subset with index *k* satisfy $m ∈ \left\{\frac{k}{K},1+\frac{k}{K},⋯,{N}_{2}{O}_{2}-1+\frac{k}{K}\right\}$; where 0 ≤ *k* ≤ *K*-1 and kis an integer.

With reference to some embodiments of the second aspect, in some embodiments, *K* =2, the first distance parameter ${o}_{1} ∈ \left\{1, 2, ⋯, \left⌈\frac{2 \sqrt{2}}{3}\left({N}_{3}{O}_{3}-1\right)+1\right⌉\right\}$; and/or, the second distance parameter ${o}_{2} ∈ \left\{1, 2, ⋯, \left⌈\frac{2 \sqrt{2}}{3}\left({N}_{4}{O}_{4}-1\right)+1\right⌉\right\}$.

With reference to some embodiments of the second aspect, in some embodiments, a basis vector of the first codebook is a Kronecker product of a first basis vector in the horizontal dimension and a second basis vector in the vertical dimension; an ${n}_{1}^{′}$-th element ${ν}_{{n}_{1}^{′}}$ in the first basis vector *v* is: ${ν}_{{n}_{1}^{′}} = exp \left(j\frac{2 π}{λ}\left(\frac{2 {ln}_{1}^{′} {d}_{x}}{{N}_{1} {O}_{1}}-\frac{\left({\left({n}_{1}^{′}\right)}^{2}-{n}_{1}^{′}\left({N}_{1}+1\right)\right) {d}_{x}^{2} λ {\left⌈\frac{2 \sqrt{2}}{3}\left({N}_{3}{O}_{3}-1\right)+1\right⌉}^{2}}{4 {o}_{1}^{2} {D}_{x}^{2}}\right)\right)$; and/or, an ${n}_{2}^{′}$-th element ${u}_{{n}_{2}^{′}}$ in the second basis vector *u* is: ${u}_{{n}_{2}^{′}} = exp \left(j\frac{2 π}{λ}\left(\frac{2 {mn}_{2}^{′} {d}_{z}}{{N}_{2} {O}_{2}}-\frac{\left({\left({n}_{2}^{′}\right)}^{2}-{n}_{2}^{′}\left({N}_{2}+1\right)\right) {d}_{z}^{2} λ {\left⌈\frac{2 \sqrt{2}}{3}\left({N}_{4}{O}_{4}-1\right)+1\right⌉}^{2}}{4 {o}_{2}^{2} {D}_{z}^{2}}\right)\right)$; where J is an imaginary unit, *λ* represents a wavelength of wireless signal, *dₓ* represents a horizontal-dimension antenna spacing of the first antenna array, *Dₓ* represents a horizontal-dimension length of the first antenna array, *d_{z}* represents a vertical-dimension antenna spacing of the first antenna array, and *D_{z}* represents a vertical-dimension length of the first antenna array.

With reference to some embodiments of the second aspect, in some embodiments, ${d}_{x} = \frac{λ}{2} , {D}_{x} = {N}_{1} {d}_{x} = {N}_{1} \frac{λ}{2}$*, N*₁ *= N*₃ and *O*₁ = *O*₃, the ${n}_{1}^{′}$-th element ${ν}_{{n}_{1}^{′}}$ in the first basis vector *v* is: ${ν}_{{n}_{1}^{′}} = exp \left(\frac{j 2 {πln}_{1}^{′}}{{N}_{1} {O}_{1}}-\frac{jπ \left({\left({n}_{1}^{′}\right)}^{2}-{n}_{1}^{′}\left({N}_{1}+1\right)\right) {\left⌈\frac{2 \sqrt{2}}{3}\left({N}_{1}{O}_{1}-1\right)+1\right⌉}^{2}}{2 {o}_{1}^{2} {N}_{1}^{2}}\right)$; and/or, ${d}_{z} = \frac{λ}{2} , {D}_{z} = {N}_{2} {d}_{z} = {N}_{2} \frac{λ}{2}$, *N*₂ *= N*₄ and *O*₂ = *O*₄, the ${n}_{2}^{′}$-th element ${u}_{{n}_{2}^{′}}$ in the second basis vector *u* is: ${u}_{{n}_{2}^{′}} = exp \left(\frac{j 2 {πmn}_{2}^{′}}{{N}_{2} {O}_{2}}-\frac{jπ \left({\left({n}_{2}^{′}\right)}^{2}-{n}_{2}^{′}\left({N}_{2}+1\right)\right) {\left⌈\frac{2 \sqrt{2}}{3}\left({N}_{2}{O}_{2}-1\right)+1\right⌉}^{2}}{2 {o}_{2}^{2} {N}_{2}^{2}}\right)$.

With reference to some embodiments of the second aspect, in some embodiments, multiple first angle parameters are distributed in K first angle parameter subsets, and quantization offsets of first distance parameters corresponding to the first angle parameters distributed in different first angle parameter subsets are different; and/or,
multiple second angle parameters are distributed in *K* second angle parameter subsets, and quantization offsets of second distance parameters corresponding to the second angle parameters distributed in different second angle parameter subsets are different.

With reference to some embodiments of the second aspect, in some embodiments, a quantization offset of a first distance parameter corresponding to a first angle parameter in a first angle parameter subset with index *k* is $\frac{k}{K}$*,* and the first distance parameter corresponding to the first angle parameter in the first angle parameter subset with index *k* satisfy ${o}_{1} ∈ \left\{\frac{k}{K},1+\frac{k}{K},⋯,{N}_{3}{O}_{3}-1+\frac{k}{K}\right\}$; and/or, a quantization offset of a second distance parameter corresponding to a second angle parameter in a second angle parameter subset with index *k* is $\frac{k}{K}$, and the second distance parameters corresponding to the second angle parameter in the second angle parameter subset with index *k* satisfy ${o}_{2} ∈ \left\{\frac{k}{K},1+\frac{k}{K},⋯,{N}_{4}{O}_{4}-1+\frac{k}{K}\right\}$; where 0 *< k* ≤ *K* and *k* is an integer.

With reference to some embodiments of the second aspect, in some embodiments, K =2, the first angle parameter $l ∈ \left\{0, 1, 2, ⋯, \left⌈\frac{2 \sqrt{2}}{3}\left({N}_{1}{O}_{1}-1\right)\right⌉\right\}$; and/or, the second angle parameter $m ∈ \left\{0, 1, 2, ⋯, \left⌈\frac{2 \sqrt{2}}{3}\left({N}_{2}{O}_{2}-1\right)\right⌉\right\}$.

With reference to some embodiments of the second aspect, in some embodiments, an ${n}_{1}^{′}$-th element ${ν}_{{n}_{1}^{′}}$ in the first basis vector *v* is: ${ν}_{{n}_{1}^{′}} = exp \left(j\frac{2 π}{λ}\left(\frac{2 {ln}_{1}^{′} {d}_{x}}{\left⌈\frac{2 \sqrt{2}}{3}\left({N}_{1}{O}_{1}-1\right)+1\right⌉}-\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)\right)$; and/ or, an ${n}_{2}^{′}$-th element ${u}_{{n}_{2}^{′}}$ in the second basis vector *u* is: ${u}_{{n}_{2}^{′}} = exp \left(j\frac{2 π}{λ}\left(\frac{2 {mn}_{2}^{′} {d}_{z}}{\left⌈\frac{2 \sqrt{2}}{3}\left({N}_{2}{O}_{2}-1\right)+1\right⌉}-\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)\right)$;
where *j* is an imaginary unit, *λ* represents a wavelength of wireless signal, *dₓ* represents a horizontal-dimension antenna spacing of the first antenna array, *Dₓ* represents a horizontal-dimension length of the first antenna array, *d_{z}* represents a vertical-dimension antenna spacing of the first antenna array, and *D_{z}* represents a vertical-dimension length of the first antenna array.

With reference to some embodiments of the second aspect, in some embodiments, ${d}_{x} = \frac{λ}{2} , {D}_{x} = {N}_{1} {d}_{x} = {N}_{1} \frac{λ}{2}$, *N*₁ *= N*₃ and *O*₁ = *O*₃, the ${n}_{1}^{′}$-th element ${ν}_{{n}_{1}^{′}}$ in the first basis vector *v* is: ${ν}_{{n}_{1}^{′}} = exp \left(\frac{j 2 {πln}_{1}^{′}}{\left⌈\frac{2 \sqrt{2}}{3}\left({N}_{1}{O}_{1}-1\right)+1\right⌉}-\frac{jπ \left({\left({n}_{1}^{′}\right)}^{2}-{n}_{1}^{′}\left({N}_{1}+1\right)\right) {O}_{1}^{2}}{2 {o}_{1}^{2}}\right)$; and/or, ${d}_{z} = \frac{λ}{2} , {D}_{z} = {N}_{2} {d}_{z} = {N}_{2} \frac{λ}{2}$, *N*₂ = *N*₄ and *O*₂ = *O*₄, the ${n}_{2}^{′}$-th element ${u}_{{n}_{2}^{′}}$ in the second basis vector *u* is: ${u}_{{n}_{2}^{′}} = exp \left(\frac{j 2 {πmn}_{2}^{′}}{\left⌈\frac{2 \sqrt{2}}{3}\left({N}_{2}{O}_{2}-1\right)+1\right⌉}-\frac{jπ \left({\left({n}_{2}^{′}\right)}^{2}-{n}_{2}^{′}\left({N}_{2}+1\right)\right) {O}_{2}^{2}}{2 {o}_{2}^{2}}\right)$.

With reference to some embodiments of the second aspect, in some embodiments, the first information includes at least one of:
a first indication field, where the first indication field is used to indicate a first angle parameter corresponding to the first codeword; a second indication field, where the second indication field is used to indicate a second angle parameter corresponding to the first codeword; a third indication field, where the third indication field is used to indicate a first distance parameter corresponding to the first codeword; a fourth indication field, where the fourth indication field is used to indicate a second distance parameter corresponding to the first codeword.

With reference to some embodiments of the second aspect, in some embodiments, the first indication field includes at least $\left⌈{log}_{2} {N}_{1}{O}_{1}\right⌉$ bits; the second indication field includes at least $\left⌈{log}_{2} {N}_{2}{O}_{2}\right⌉$ bits; the third indication field includes at least $\left⌈{log}_{2}\left⌈\frac{2 \sqrt{2}}{3}\left({N}_{3}{O}_{3}-1\right)+1\right⌉\right⌉$ bits; and the fourth indication field includes at least $\left⌈{log}_{2}\left⌈\frac{2 \sqrt{2}}{3}\left({N}_{4}{O}_{4}-1\right)+1\right⌉\right⌉$ bits.

With reference to some embodiments of the second aspect, in some embodiments, the first indication field includes at least $\left⌈{log}_{2}\left⌈\frac{2 \sqrt{2}}{3}\left({N}_{1}{O}_{1}-1\right)+1\right⌉\right⌉$ bits; the second indication field includes at least $\left⌈{log}_{2}\left⌈\frac{2 \sqrt{2}}{3}\left({N}_{2}{O}_{2}-1\right)+1\right⌉\right⌉$ bits; the third indication field includes at least $\left⌈{log}_{2} {N}_{3}{O}_{3}\right⌉$ bits; and the fourth indication field includes at least $\left⌈{log}_{2} {N}_{4}{O}_{4}\right⌉$ bits.

With reference to some embodiments of the second aspect, in some embodiments, the first codebook is used for single-polarization single-layer transmission; or, the first codebook is used for dual-polarization multi-layer transmission, and the first codebook is constructed based on an angle parameter, a distance parameter and a co-phase coefficient.

With reference to some embodiments of the second aspect, in some embodiments, the method further includes: receiving, by the network device, second information sent by the terminal, wherein the second information is used to indicate a co-phase coefficient corresponding to the first codeword.

With reference to some embodiments of the second aspect, in some embodiments, the co-phase coefficient includes at least one of the following: binary phase shift keying (BPSK), quadrature phase shift keying (QPSK), and 8 phase shift keying (8-PSK).

In a third aspect, an embodiment of the present disclosure provides a terminal, the terminal includes:
a processing module, configured to determine a first codeword in a first codebook, where the first codebook is obtained based on an angle parameter set and a distance parameter set, and the first codebook is a codebook used when the terminal is located in a near-field region of a first antenna array; and
a transceiver module, configured to send first information to a network device, where the first information is used to indicate the first codeword.

In a fourth aspect, an embodiment of the present disclosure provides a network device, the network device includes:
a transceiver module, configured to receive first information sent by a terminal, where the first information is used to indicate a first codeword, the first codeword is a codeword in a first codebook, the first codebook is obtained based on an angle parameter set and a distance parameter set, and the first codebook is a codebook used when the terminal is located in a near-field region of a first antenna array.

In a fifth aspect, an embodiment of the present disclosure provides a terminal, including: one or more processors; a memory coupled to the one or more processors, where the memory stores executable instructions that, when executed by the one or more processors, cause the terminal to perform the communication method according to the first aspect.

In a sixth aspect, an embodiment of the present disclosure provides a network device, including: one or more processors; a memory coupled to the one or more processors, where the memory stores executable instructions that, when executed by the one or more processors, cause the network device to perform the communication method according to the second aspect.

In a seventh aspect, an embodiment of the present disclosure provides a communication system. The communication system includes a terminal and a network device. The terminal is configured to perform the method described in the optional implementations of the first aspect, and the network device is configured to perform the method described in the optional implementations of the second aspect.

In an eighth aspect, an embodiment of the present disclosure provides a storage medium. The storage medium stores instructions that, when run on a communication device, cause the communication device to perform the methods described in the optional implementations of the first aspect and the second aspect.

In a ninth aspect, an embodiment of the present disclosure provides a program product. The program product, when executed by a communication device, causes the communication device to perform the methods described in the optional implementations of the first aspect and the second aspect.

In a tenth aspect, an embodiment of the present disclosure provides a computer program. The computer program, when run on a computer, causes the computer to perform the methods described in the optional implementations of the first aspect and the second aspect.

In an eleventh aspect, an embodiment of the present disclosure provides a chip or a chip system. The chip or the chip system includes processing circuitry configured to perform the methods described in the optional implementations of the foregoing first aspect and second aspect.

It can be understood that the foregoing terminal, network device, communication system, storage medium, program product, computer program, chip or chip system are all configured to perform the methods provided by the embodiments of the present disclosure. Therefore, the beneficial effects they can achieve may be referred to the beneficial effects of the corresponding methods, which will not be repeated herein.

Embodiments of the present disclosure provide a communication method, a terminal, a network device, a communication system and a storage medium. In some embodiments, terms such as communication method, codebook determination method and codeword reporting method may be used interchangeably; terms such as communication apparatus, codebook determination apparatus and codeword reporting apparatus may be used interchangeably; and terms such as information processing system and communication system may be used interchangeably.

The embodiments of the present disclosure are not exhaustive and are merely illustrative of some embodiments, and are not intended to impose specific limitations on the protection scope of the present disclosure. In the absence of contradiction, each step in a certain embodiment may be implemented as an independent embodiment, and the steps may be arbitrarily combined. For example, a solution with some steps removed from a certain embodiment may also be implemented as an independent embodiment, and the order of the steps in a certain embodiment may be arbitrarily exchanged. In addition, the optional implementation manners in a certain embodiment may be arbitrarily combined. In addition, the various embodiments may be arbitrarily combined. For example, some or all steps of different embodiments may be arbitrarily combined, and a certain embodiment may be arbitrarily combined with the optional implementation manners of other embodiments.

In various embodiments of the present disclosure, unless otherwise specified or existing logical contradictions, the terms and/or descriptions between the various embodiments are consistent and can be referred to each other. The technical features in different embodiments can be combined to form new embodiments according to their inherent logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "the above-mentioned", "said", "the aforesaid", "this", etc., may mean "one and only one", and may also mean "one or more", "at least one", etc. For example, when articles such as "a", "an" and "the" in English are used in translation, the noun following the article may be understood as a singular expression or a plural expression.

In the embodiments of the present disclosure, "plurality" refers to two or more.

In some embodiments, the terms "at least one of", "one or more", "a plurality of", "multiple", etc., may be used interchangeably.

In some embodiments, recitations such as "at least one of A and B", "A and/or B", "A in one case and B in another case", "perform A in response to one scenario and perform B in response to another scenario" may include the following technical solutions as appropriate: in some embodiments, only A is performed (A is executed independently of B); in some embodiments, only B is performed (B is executed independently of A); in some embodiments, either A or B is selectively performed (A and B are selectively executed); in some embodiments, both A and B are performed (both A and B are executed). The above logic applies similarly when there are more alternatives such as A, B and C.

In some embodiments, recitations such as "A or B" may include the following technical solutions as appropriate: in some embodiments, only A is performed (A is executed independently of B); in some embodiments, only B is performed (B is executed independently of A); in some embodiments, either A or B is selectively performed (A and B are selectively executed). The above logic applies similarly when there are more alternatives such as A, B and C.

In the embodiments of the present disclosure, prefixes such as "first" and "second" are only used to distinguish different described objects, and do not constitute any restriction on the position, order, priority, quantity, content, or other aspects of the described objects. For statements about the described objects, reference shall be made to the descriptions in the context of the claims or the embodiments, and no redundant limitation shall be constituted due to the use of these prefixes. For example, if the described object is a "field", the ordinal numbers before "field" in "first field" and "second field" do not limit the position or order between the "fields"; "first" and "second" do not restrict whether the "fields" they modify are in the same message, nor do they limit the sequence order between the "first field" and the "second field". For another example, if the described object is a "level", the ordinal numbers before the "level" in "first level" and "second level" do not limit the priority between the "levels". For yet another example, the quantity of the described object is not limited by the ordinal number, and may be one or more. Taking the "first apparatus" as an example, the quantity of the "apparatus" therein may be one or more. In addition, objects modified by different prefixes may be the same or different. For instance, if the described object is an "apparatus", the "first apparatus" and the "second apparatus" may be the same apparatus or different apparatuses, and their types may be the same or different; for another example: if the described object is "information", the "first information" and the "second information" may be the same information or different information, and their contents may be the same or different.

In some embodiments, expressions such as "including A", "containing A", "used to indicate A", and "carrying A" can be interpreted as directly carrying A, and can also be interpreted as indirectly indicating A.

In some embodiments, terms such as "time/frequency" and "time-frequency domain" refer to the time domain and/or the frequency domain.

In some embodiments, terms such as " in response to...", "in response to determining that...", "in the case of...", "when...", "in the case that...", "if...", and "in the event that...", etc., may be used interchangeably.

In some embodiments, terms such as "greater than", "greater than or equal to", "not less than", "more than", "more than or equal to", "no less than", "higher than", "higher than or equal to", "not lower than", and "above" may be replaced with one another; terms such as "less than", "less than or equal to", "not greater than", "fewer than", "fewer than or equal to", "no more than", "lower than", "lower than or equal to", "not higher than", and "below" may be used interchangeably.

In some embodiments, terms such as "apparatus" may be interpreted as either physical or virtual entities, and their names are not limited to those recorded in the embodiments. Terms including "apparatus", "equipment", "device", "circuit", "network function", "node", "function", "unit", "section", "system", "network", "chip", "chip system", "entity", and "subject" may be used interchangeably.

In some embodiments, "network" may be interpreted as apparatuses included in a network (e.g., access network devices, core network devices, etc.).

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", and "bandwidth part (BWP)" may be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", and "client" may be used interchangeably.

In some embodiments, an access network device, a core network device, or a network device may be replaced with a terminal. For example, the various embodiments of the present disclosure may also be applied to a structure in which the communication between an access network device, a core network device, or a network device and a terminal is replaced with communication between multiple terminals (for example, this may also be referred to as device-to-device (D2D), vehicle-to-everything (V2X), etc.). In this case, a structure in which the terminal has all or part of the functions of the access network device may also be adopted. In addition, terms such as "uplink" and "downlink" may also be replaced with terms corresponding to inter-terminal communication (for example, "side"). For example, the uplink channel, the downlink channel, etc., may be replaced with a side channel, and the uplink, the downlink, etc., may be replaced with a sidelink.

In some embodiments, a terminal may be replaced with an access network device, a core network device, or a network device. In this case, a structure may also be adopted in which the access network device, the core network device, or the network device has all or part of the functions of a terminal.

In some embodiments, obtaining data, information, etc., may comply with the laws and regulations of the country where it is obtained.

In some embodiments, data, information, etc., may be obtained after acquiring the user's consent.

In addition, each element, each row, or each column in the tables of the embodiments of the present disclosure may be implemented as an independent embodiment, and any combination of any element, any row, or any column may also be implemented as an independent embodiment.

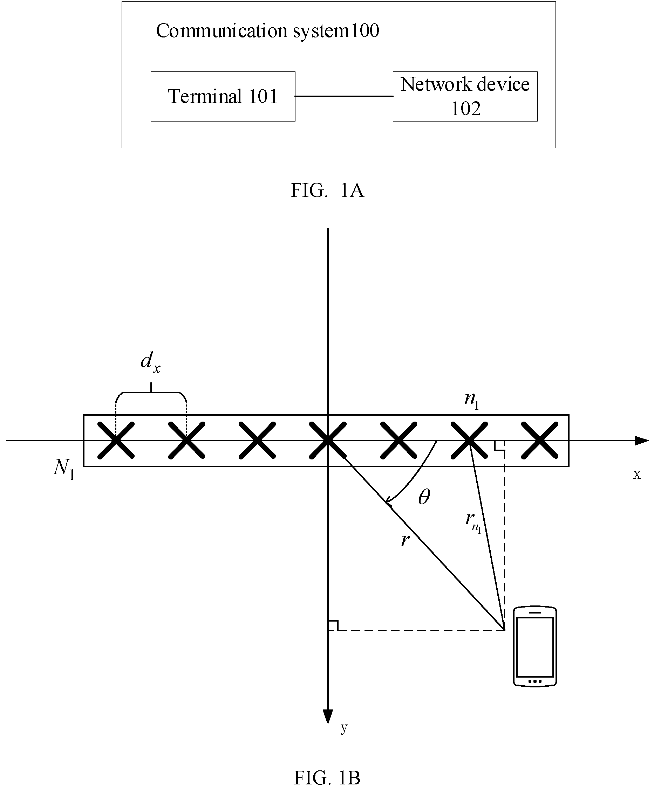

FIG. 1A is a schematic diagram illustrating an architecture of a communication system according to an embodiment of the present disclosure (the system diagram only includes main bodies related to the inventive concept and their important opposite-end entities, and the quantity of main bodies corresponds to the quantity of main bodies involved in the inventive concept).

As shown in FIG. 1A, the communication system 100 includes a terminal 101 and a network device 102. The network device 102 may include at least one of an access network device and a core network device.

In some embodiments, the terminal 101 includes, for example, at least one of a mobile phone, a wearable device, an Internet of Things (IoT) device, a vehicle with communication functionality, an intelligent vehicle, a tablet computer (Pad), a computer with wireless transceiving functionality, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, an access network device is, for example, a node or device that accesses a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open radio access network(Open RAN), a cloud radio access network (Cloud RAN), a base station in other communication systems, and an access node in a wireless fidelity (WiFi) system, but is not limited thereto.

In some embodiments, the technical solutions of the present disclosure may be applied to the Open RAN architecture. In this case, the interfaces between access network devices or within an access network device involved in the embodiments of the present disclosure may become internal interfaces of the Open RAN, and the processes and information exchange between these internal interfaces can be implemented through software or programs.

In some embodiments, an access network device may be composed of a central unit (CU) and distributed units (DUs). The CU may also be referred to as a control unit. The adoption of the CU-DU structure may split the protocol layers of the access network device, with functions of some protocol layers being placed in the CU for centralized control, and the functions of the remaining part or all of the protocol layers being distributed in the DUs, which are centrally controlled by the CU, but is not limited thereto.

In some embodiments, a core network device may be a single device including a first network element, a second network element and the like, or may be multiple devices or a device cluster each including all or part of the first network element, the second network element, etc. A network element may be virtual or physical. For example, the core network includes at least one of an Evolved Packet Core (EPC), a 5G Core Network (5GCN), and a Next Generation Core (NGC).

It can be understood that the communication system described in the embodiments of the present disclosure is intended to more clearly illustrate the technical solutions of the embodiments of the present disclosure, and does not constitute a limitation on the technical solutions provided by the embodiments of the present disclosure. One of ordinary skills in the art can know that, with the evolution of system architectures and the emergence of new service scenarios, the technical solutions provided by the embodiments of the present disclosure are also applicable to similar technical problems.

The following embodiments of the present disclosure may be applied to the communication system 100 shown in FIG. 1A, or some entities thereof, but are not limited thereto. The various entities shown in FIG. 1A are illustrative only. The communication system may include all or part of the entities in FIG. 1A, and may also include other entities not shown in FIG. 1A. The numbers and forms of various entities are arbitrary. The connection relationships between the entities are illustrative only. The entities may be unconnected or connected, and the connection may be in any manner, which may be a direct connection or an indirect connection, a wired connection or a wireless connection.

Various embodiments of the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), 5G New Radio (NR), Future Radio Access (FRA), New-Radio Access Technology (New-RAT), New Radio (NR), New Radio Access (NX), Future Generation Radio Access (FX), Global System for Mobile Communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-Wide Band (UWB), Bluetooth (registered trademark), Public Land Mobile Network (PLMN), Device-to-Device (D2D) systems, Machine-to-Machine (M2M) systems, Internet of Things (IoT) systems, Vehicle-to-Everything (V2X), systems using other communication methods, next-generation systems extended based on these, etc. In addition, multiple systems may also be combined (for example, a combination of LTE or LTE-A and NR, etc.).

In some embodiments, the network device 102 may be a network device in an extremely large scale multiple input multiple output (XL-MIMO) system. The network device 102 may include a first antenna array, and the antenna array may be used by the network device to transmit wireless signals to a terminal. Optionally, types of the first antenna array include, but are not limited to: uniform linear array; uniform planar array.

In some embodiments, the radiation range of an antenna array can be divided into a near-field region and a far-field region. The boundary thereof can be represented by the Rayleigh distance, and the Rayleigh distance is proportional to the antenna aperture of the antenna array and the carrier frequency.

FIG. 1B is a schematic diagram of a first antenna array according to an exemplary embodiment. As shown in FIG. 1B, the first antenna array can be modeled on the x-axis of a two-dimension Cartesian coordinate system, and includes 7 antenna ports in the horizontal dimension with equal spacing between the 7 antenna ports. That is, the first antenna array is a uniform linear array where *N*₁ is equal to 7 and *N*₂ is equal to 1, and the spacing between each antenna port may be *dₓ*. Taking the antenna port with index 0 in the horizontal dimension of the first antenna array as the origin (0,0), the coordinate of the antenna port with index *n*₁ in the horizontal dimension is (*n*₁*dₓ,*0)*,* where *n*₁ is an integer satisfying *n*₁ ∈ {-(*N*₁-1)/2,···,0,···(*N*₁ -1)/2}. The length of the antenna array in the horizontal dimension is *Dₓ*, which can be represented as *Dₓ* = *N*₁*dₓ* or *Dₓ =* (*N*₁ -1)*dₓ.*

If a terminal is located on the x-y plane of the two-dimension Cartesian coordinate system, the distance between the terminal and the origin is r, and the angle between the terminal and the positive direction of the x-axis is *θ*, where 0 ≤ *θ* ≤ *π*. In this example, the equivalent antenna aperture of the antenna array in the horizontal dimension is *Dₓ = Dₓ* sin *θ*. When the terminal is on the x-y two-dimension plane, the Rayleigh distance can be calculated as $\frac{2 {{D}^{˜}}_{x}^{2}}{λ} = \frac{2 {D}_{x}^{2} {sin}^{2} θ}{λ}$. Accordingly, when the distance between the terminal and the first antenna array is less than or equal to the Rayleigh distance, it can be determined that the terminal is located in the near-field region; otherwise, the terminal is determined to be in the far-field region.

The distance between the antenna port with index *n*₁ in the first antenna array and the terminal can be calculated as: ${r}_{{n}_{1}} = \sqrt{{r}^{2} + {n}_{1}^{2} {d}_{x}^{2} - 2 {rn}_{1} {d}_{x} cos θ}$. According to the Taylor formula, the above formula is approximated by second-order Taylor expansion. Therefore, the distance between the antenna with index *n*₁ in the antenna array and the UE can be approximated as: ${r}_{{n}_{1}} = \sqrt{{r}^{2} + {n}_{1}^{2} {d}_{x}^{2} - 2 {rn}_{1} {d}_{x} cos θ} \approx r - {n}_{1} {d}_{x} cos θ + \frac{{n}_{1}^{2} {d}_{x}^{2} {sin}^{2} θ}{2 r}$.

The single-polarization array response vector of the first antenna array can be calculated as: ${\left[{a}_{ULA}^{near}\left(θ, r\right)\right]}_{{n}_{1}} = exp \left(-j\frac{2 π}{λ}\left(-{n}_{1}{d}_{x} cos θ+\frac{{n}_{1}^{2} {d}_{x}^{2} {sin}^{2} θ}{2 r}\right)\right)$.

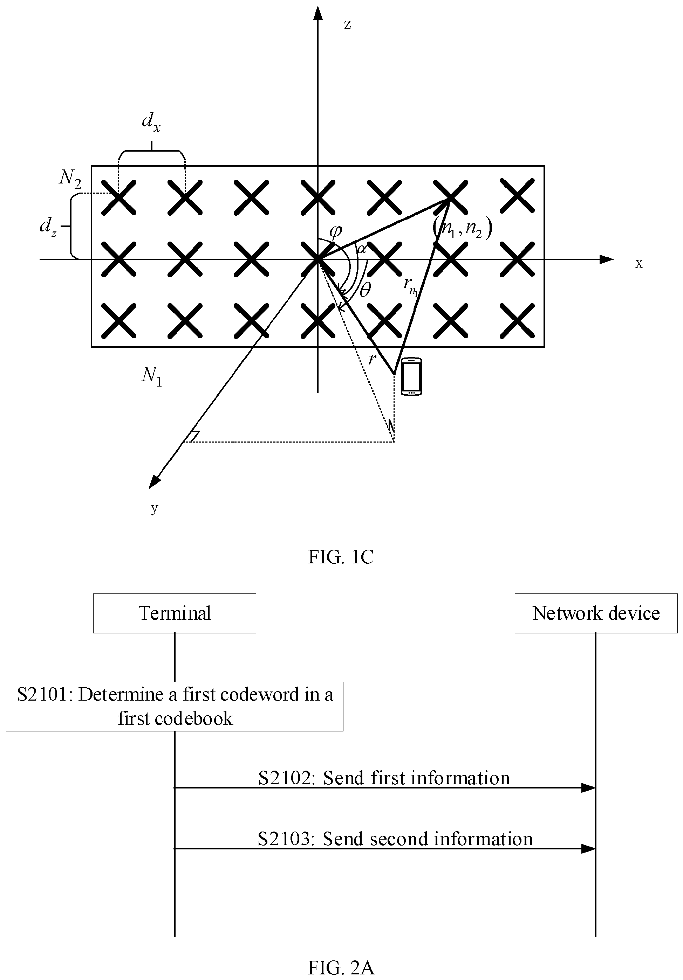

FIG. 1C is a schematic diagram of a first antenna array according to an exemplary embodiment. As shown in FIG. 1C, the first antenna array can be modeled on the x-y plane of a three-dimension Cartesian coordinate system. The antenna array includes 21 antenna ports, among which there are 7 antenna ports in the horizontal dimension and 3 antenna ports in the vertical dimension, with equal spacing between antenna ports in each respective dimension. That is, the first antenna array is a uniform planar array with *N*₁ equal to 7 and *N*₂ equal to 3. The spacing between antenna ports in the horizontal dimension may be *dₓ*, and the spacing between antenna ports in the vertical dimension may be *d_{z}.* Taking the antenna port with index 0 in both the horizontal dimension and the vertical dimension of the first antenna array as the origin (0,0,0), the coordinate of the antenna with indices (*n*₁*,n*₂) in the horizontal and vertical dimensions of the antenna array is (*n*₁*dₓ,*0*,n*₂*d_{z}*), where *n*₁ and *n*₂ are integers satisfying *n*₁ ∈ {-(*N*₁-1)/2,···,0,···(*N*₁-1)/2} and *n*₂ *∈* {-(*N*₂-1)/2,···,0,···(*N*₂-1)/2}.

If a terminal is located in the x-y-z space of the three-dimension Cartesian coordinate system, the distance between the terminal and the origin is *r,* the angle between the terminal and the positive x-axis is *θ* and 0 ≤ *θ* ≤ *π*, and the angle between the terminal and the positive z-axis is *φ* and 0 ≤ *φ* ≤ *π*. According to geometric relations, cos *α* = -cos*θ*sin*φ* can be derived. In this example, the equivalent antenna aperture of the antenna array in the horizontal dimension is *D̃ₓ = Dₓ*sin*θ*, and the equivalent antenna aperture in the vertical dimension is *D̃_{z} = D_{z}* sin*φ.* When the terminal is located in the x-y-z three-dimension space, the horizontal-dimension Rayleigh distance is calculated as $\frac{2 {{D}^{˜}}_{x}^{2}}{λ} = \frac{2 {D}_{x}^{2} {sin}^{2} α}{λ}$, and the vertical-dimension Rayleigh distance is calculated as $\frac{2 {{D}^{˜}}_{z}^{2}}{λ} = \frac{2 {D}_{z}^{2} {sin}^{2} φ}{λ}$. Accordingly, when the distance between the terminal and the first antenna array is less than or equal to the Rayleigh distance in the horizontal dimension and/or the vertical dimension, it can be determined that the terminal is located in the near-field region.

The distance between the antenna port with indices (n1, n2) in the first antenna array and the terminal can be calculated as: ${r}_{{n}_{1} , {n}_{2}} = \sqrt{{r}^{2} + {n}_{1}^{2} {d}_{x}^{2} + {n}_{2}^{2} {d}_{z}^{2} - 2 {rn}_{1} {d}_{x} cos θ sin φ - 2 {rn}_{2} {d}_{z} cos φ}$; Based on the Taylor formula, the above formula is approximated via second-order Taylor expansion. Therefore, the distance between the antenna with indices (n1, n2) in the antenna array and the terminal can be approximated as:
$\begin{matrix}{r}_{{n}_{1} , {n}_{2}} = \sqrt{{r}^{2} + {n}_{1}^{2} {d}_{x}^{2} + {n}_{2}^{2} {d}_{z}^{2} - 2 {rn}_{1} {d}_{x} cos θ sin φ - 2 {rn}_{2} {d}_{z} cos φ} \\ \approx r - {n}_{1} {d}_{x} cos θ sin φ + \frac{{n}_{1}^{2} {d}_{x}^{2} \left(1-{cos}^{2} θ {sin}^{2} φ\right)}{2 r} - {n}_{2} {d}_{z} cos φ + \frac{{n}_{2}^{2} {d}_{z}^{2} {sin}^{2} φ}{2 r} .\end{matrix}$

The single-polarization array response vector of the first antenna array can be calculated as:
${a}_{UPA}^{near} \left(θ, φ, r\right) = {a}_{x}^{near} \left(θ, φ, r\right) ⊗ {a}_{z}^{near} \left(φ, r\right) ;$${\left[{a}_{x}^{near}\left(θ, φ, r\right)\right]}_{{n}_{1}} = exp \left(-j\frac{2 π}{λ}\left(-{n}_{1}{d}_{x} cos θ sin φ+\frac{{n}_{1}^{2} {d}_{x}^{2} \left(1-{cos}^{2} θ {sin}^{2}φ\right)}{2 r}\right)\right) ;$${\left[{a}_{z}^{near}\left(φ, r\right)\right]}_{{n}_{2}} = exp \left(-j\frac{2 π}{λ}\left(-{n}_{2}{d}_{z} cos φ+\frac{{n}_{2}^{2} {d}_{z}^{2} {sin}^{2} φ}{2 r}\right)\right) .$

In some embodiments, only the far-field region is considered, and both the channel model and codebook design are directed to far-field MIMO. With the significant enlargement of antenna arrays and the increase of frequency bands, the Rayleigh distance increases to a certain extent. As a result, terminals in a communication system are more likely to enter the near-field region of the antenna array. Electromagnetic waves propagate in the form of spherical waves in the near-field region, while planar waves are adopted for electromagnetic wave propagation in the far-field region. Therefore, codebooks designed for the far-field region cannot guarantee the communication quality in the near-field region.

It should be noted that the first antenna arrays shown in the foregoing FIG. 1B and FIG. 1C are merely illustrative. The number of antenna ports in the first antenna array may be smaller or larger than that shown in FIG. 1B or FIG. 1C, which is not limited by the embodiments of the present disclosure. For example, the first antenna array may be an antenna array with 64 ports in both the horizontal dimension and the vertical dimension.

FIG. 2A is a schematic interaction diagram of a communication method according to an embodiment of the present disclosure. As shown in FIG. 2A, the communication method according to the embodiment of the present disclosure includes the following steps.

In step S2101, a terminal determines a first codeword in a first codebook.

In some embodiments, the first codebook is a codebook used when the terminal is located in the near-field region of the first antenna array.

In some embodiments, the terminal determines the first codeword in the first codebook. Optionally, the terminal determines the first codeword in the first codebook according to a measurement result. Optionally, the terminal determines that it is located in the near-field region of the first antenna array according to a measurement result, and then determines the first codeword in the first codebook.

For example, the terminal may first receive CSI-RS transmitted by a network device, perform channel estimation based on the CSI-RS to determine whether it is in the near-field region, and then traverse each codeword in the first codebook to obtain the optimal first codeword.

It can be understood that the near-field region of the first antenna array refers to a scenario where the distance between the terminal and the antenna array is relatively short. For example, when the distance between the terminal and the antenna array in the horizontal dimension and/or the vertical dimension is less than or equal to the Rayleigh distance, it can be determined that the terminal is located in the near-field region of the first antenna array.

Optionally, the terminal determines that it is located in the near-field region if the distance from the terminal to the first antenna array satisfies at least one of the following: $0 < r \leq \frac{2 {D}_{x}^{2} {sin}^{2} θ}{λ} , 0 < r \leq \frac{2 {D}_{x}^{2} {sin}^{2} α}{λ}$ and $0 < r \leq \frac{2 {D}_{z}^{2} {sin}^{2} φ}{λ}$, where cos*α* = cos*θ*sin*φ*.

In some embodiments, the first antenna array is an antenna array through which the network device transmits wireless signals to the terminal. For example, the network device may pre-code data in a data stream according to codewords in the first codebook, so that wireless signals transmitted by the network device can be accurately and reliably received by the terminal located in the near-field region.

In some embodiments, the first codebook or the basis vectors of the first codebook are constructed based on an angle parameter set and a distance parameter set. Optionally, the terminal determines the angle parameter and the distance parameter corresponding to the first codeword in the first codebook.

The angle parameter set may include various angles in the angle domain of the near-field region of the first antenna array or the index corresponding to each angle; the distance parameter set may include various distances in the distance domain of the near-field region of the first antenna array or the index corresponding to each distance. The first codebook may be a set of codewords corresponding to various angles and distances. That is, the first codebook or the basis vectors thereof may be constructed according to the codewords corresponding to various angles and distances.

Optionally, the first codebook includes a plurality of codewords corresponding to various angles and various distances in the near-field region; or the basis vectors of the first codebook include basis vectors corresponding to various angles and various distances in the near-field region. Optionally, each codeword in the first codebook corresponds to a distinct angle parameter and/or distance parameter. Optionally, at least one of the distance parameter and the angle parameter of any two codewords in the first codebook is different.

In some embodiments, the first antenna array may be any one of the following: a uniform linear array; a uniform planar array. Optionally, the first antenna array may also be a triangular array or a circular array, which is not limited by the embodiments of the present disclosure.

In some embodiments, the first antenna array includes *N*₁ antenna ports in the horizontal dimension and *N*₂ antenna ports in the vertical dimension, where *N*₁ is greater than or equal to 1 and *N*₂ is greater than or equal to 1.

Herein, a uniform linear array can be regarded as a special type of uniform planar array. That is, a uniform linear array corresponds to a uniform planar array with only one antenna port in either the horizontal dimension or the vertical dimension.

It can be understood that when either *N*₁ or *N*₂ equals to 1 and the spacing between all antenna ports is identical, the first antenna array is a uniform linear array. When *N*₁ and/or *N*₂ are greater than 1 and the spacing between all antenna ports is identical, the first antenna array is a uniform planar array. The spacing between antenna ports in the horizontal dimension is denoted as *dₓ*, and the spacing in the vertical dimension is denoted as *d_{z}.* The horizontal length of the antenna array is denoted as *Dₓ*, where *Dₓ = N*₁*dₓ* or *Dₓ =* (*N*₁*-*¹)*dₓ*; other expressions are also acceptable, which is not limited by the embodiments of the present disclosure. The vertical length of the antenna array is denoted as *D_{z},* where *D_{z} = N*₂*d_{z}* or *D_{z} =* (*N*₂-1)*d_{z}*; other expressions are also acceptable, which is not limited by the embodiments of the present disclosure.

In some embodiments, the angle parameter includes at least one of the following: at least one first angle parameter, which is obtained by quantizing the horizontal-dimension angle domain within the near-field region according to the number *N*₁ of antenna ports in the horizontal dimension and the oversampling factor *O*₁ of the horizontal-dimension angle domain; at least one second angle parameter, which is obtained by quantizing the vertical-dimension angle domain within the near-field region according to the number *N*₂ of antenna ports in the vertical dimension and the oversampling factor *O*₂ of the vertical-dimension angle domain.

The first angle parameter may be obtained by quantizing possible values of cos*θ* or cos*θ*sin*φ* in the horizontal-dimension angle domain, where -1 ≤ cos*φ* ≤ 1 and -1≤ cos*θ* ≤1. The second angle parameter may be obtained by quantizing possible values of cos*φ* in the vertical-dimension angle domain. The first distance parameter may be obtained by quantizing possible values in the horizontal-dimension distance domain $\left(0, \frac{2 {D}_{x}^{2} {sin}^{2} θ}{λ}\right]$ or $\left(0, \frac{2 {D}_{x}^{2} {sin}^{2} α}{λ}\right]$. The second distance parameter may be obtained by quantizing possible values in the vertical-dimension distance domain $\left(0, \frac{2 {D}_{z}^{2} {sin}^{2} φ}{λ}\right]$.

For example, when the first antenna array is a uniform linear array, if the distance between the terminal and the first antenna array in the horizontal dimension (i.e., the horizontal-dimension distance domain) is less than or equal to $\frac{2 {D}_{x}^{2} {sin}^{2} θ}{λ}$, or when the first antenna array is a uniform linear array and the horizontal-dimension distance between the terminal and the first antenna array is less than or equal to $\frac{2 {D}_{x}^{2} {sin}^{2} α}{λ}$, it can be determined that the terminal is located in the near-field region in the horizontal dimension. If the distance between the terminal and the first antenna array in the vertical dimension is less than or equal to $\frac{2 {D}_{z}^{2} {sin}^{2} φ}{λ}$, it can be determined that the terminal is located in the near-field region in the vertical dimension.

It can be understood that when the first antenna array is a uniform linear array, the possible value of the horizontal angle domain or the vertical angle domain is unique. For example, *N*₁*O*₁ may be greater than 1 and *N*₂*O*₂ may equal 1. In this case, the angle parameters may include *N*₁*O*₁ first angle parameters and one second angle parameter with a value of zero.

In some embodiments, the basis vectors of the first codebook include a first basis vector for the horizontal dimension and a second basis vector for the vertical dimension.

Optionally, the basis vector of the first codebook may be the Kronecker product of the first basis vector and the second basis vector. For example, the basis vector of the first codebook can be represented as v⊗*u*.

In some embodiments, the ${n}_{1}^{′}$-th element ${ν}_{{n}_{1}^{′}}$ of the first basis vector *v* is: ${ν}_{{n}_{1}^{′}} = exp \left(j\frac{2 π}{λ}\left(\frac{2 {ln}_{1}^{′} {d}_{x}}{{N}_{1} {O}_{1}}-\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)\right)$; the ${n}_{2}^{′}$-th element ${u}_{{n}_{2}^{′}}$ of the second basis vector *u* is: ${u}_{{n}_{2}^{′}} = exp \left(j\frac{2 π}{λ}\left(\frac{2 {mn}_{2}^{′} {d}_{z}}{{N}_{2} {O}_{2}}-\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)\right)$.

Herein, ${n}_{1}^{′} = {n}_{1} + \left({N}_{1}+1\right) / 2 , {n}_{2}^{′} = {n}_{2} + \left({N}_{2}+1\right) / 2$, where *n*₁ denotes the index of the antenna port in the horizontal dimension, and *n*₂ denotes the index of the antenna port in the vertical dimension; *l* denotes the first angle parameter corresponding to the first basis vector, *m* denotes the second angle parameter corresponding to the second basis vector, *o*₁ denotes the first distance parameter corresponding to the first basis vector, and *o*₂ denotes the second distance parameter corresponding to the second basis vector, where *l* = 0,1,···,*N*₁O₁-1, *m* = 0,1,···*,N*₂*O*₂-1, *o*₁ *=* 1,2,*···,N₃O*₃, *o*₂ *=* 1,2,···*,N*₄*O*₄; *j* is the imaginary unit; *λ* denotes the wavelength of a wireless signal; *dₓ* denotes the antenna spacing in the horizontal dimension of the first antenna array; *Dₓ* denotes the length of the first antenna array in the horizontal dimension; *d_{z}* denotes the antenna spacing in the vertical dimension of the first antenna array; *D_{z}* denotes the length of the first antenna array in the vertical dimension.

In this embodiment, the quantization offsets of the first distance parameter, the second distance parameter, the first angle parameter and the second angle parameter may all be the same; for example, all quantization offsets may be zero.

It can be understood that the quantization scheme with identical quantization offsets in the foregoing embodiment may be referred to as "rectangular quantization". That is, the polarization domain is quantized by rectangular regions. Any single codeword can be used to quantize channels within its corresponding rectangular region, which means the coverage range of any precoding matrix is rectangular.

In other embodiments, the coverage range of a single precoding matrix can be expanded. In such cases, different quantization offsets can be adopted for parameters belonging to different sets; for instance, a "hexagonal quantization" scheme may be employed.

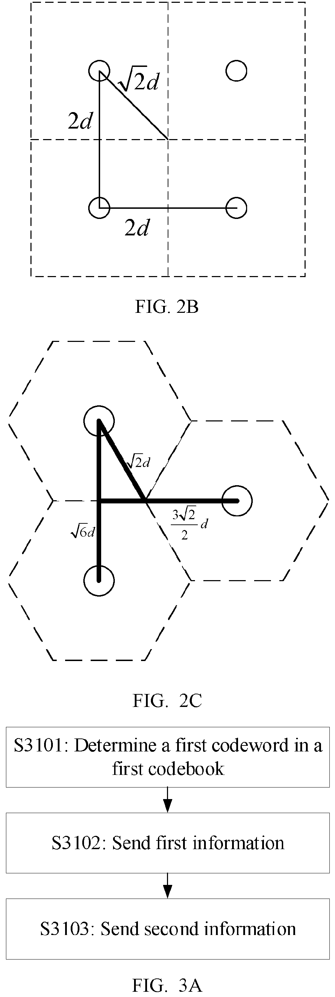

As shown in FIG. 2B and FIG. 2C, circles in the figures may represent quantization points, and each quantization point may correspond to one precoding matrix or one codeword. The "rectangular quantization" scheme is adopted in FIG. 2B, that is, the polarization domain is quantized by rectangular regions. Any codeword can be used to quantize channels within its corresponding rectangular region, which means that the coverage range of any precoding matrix is rectangular. The "hexagonal quantization" scheme is adopted in FIG. 2C, which means that the coverage region of any precoding matrix is a rectangle.

For example, with reference to FIG. 2B and FIG. 2C, it is assumed that in the "rectangular quantization" of FIG. 2B, the quantization interval of the distance domain is 2*d*, and the total number of quantization points is *N*₃*O*₃; in the "hexagonal quantization", the quantization interval of the distance domain is $\frac{3 \sqrt{2}}{2} d$, and the total number of quantization points is *X*. Therefore, it is only necessary to satisfy $2 d \left({N}_{3}{O}_{3}-1\right) = \frac{3 \sqrt{2}}{2} d \left(X-1\right)$ to ensure that the maximum distance from any codeword to the center under hexagonal quantization is consistent with that under rectangular quantization. That is to say, to ensure that the performance of hexagonal quantization is better than or equal to rectangular quantization, it is only necessary to satisfy $X = \left⌈\frac{2 \sqrt{2}}{3}\left({N}_{3}{O}_{3}-1\right)+1\right⌉$. In this way, the number of codewords in the first codebook can be effectively reduced.

It can be understood that the "hexagonal quantization" shown in FIG. 2C can be implemented by dividing the first distance parameters into two groups and adopting different quantization offsets. In other optional embodiments, the first distance parameters or other parameters may be divided into *K* groups with different quantization offsets, so as to reduce the number of codewords in the first codebook while guaranteeing communication quality.

In some embodiments, a plurality of first distance parameters are distributed into K first distance parameter subsets, and the quantization offsets of the first angle parameters corresponding to the first distance parameters in different first distance parameter subsets are different.

The multiple first distance parameters may be uniformly distributed. For example, each first distance parameter subset contains the same number of first distance parameters, and the values of the first distance parameters within various subsets may form an arithmetic sequence.

In some embodiments, the quantization offset of the first angle parameter corresponding to the first distance parameter in the first distance parameter subset with index *k* is $\frac{k}{K}$. The first angle parameters corresponding to the first distance parameters in the first distance parameter subset with index *k* satisfy $l ∈ \left\{\frac{k}{K},1+\frac{k}{K},⋯,{N}_{1}{O}_{1}-1+\frac{k}{K}\right\}$*,* where 0 ≤ *k* ≤ *K* -1 and *k* is an integer.

Optionally, *K* =2, the first distance parameter ${o}_{1} ∈ \left\{1, 2, ⋯, \left⌈\frac{2 \sqrt{2}}{3}\left({N}_{3}{O}_{3}-1\right)+1\right⌉\right\}$.

For example, when K=2, that is, the number of first distance parameter subsets is 2, the index *k* of the first distance parameter subset may be 0 or 1. When *k* is 0, the first distance parameters in this first distance parameter subset are odd numbers less than or equal to $\left⌈\frac{2 \sqrt{2}}{3}\left({N}_{3}{O}_{3}-1\right)+1\right⌉$. The quantization offset of the first angle parameters corresponding to this first distance parameter subset is 0, and the corresponding first angle parameters satisfy *l* ∈ {0,1,···,*N*₁*O*₁-1} . When *k* is 1, the first distance parameters in this first distance parameter subset are even numbers less than or equal to $\left⌈\frac{2 \sqrt{2}}{3}\left({N}_{3}{O}_{3}-1\right)+1\right⌉$. The quantization offset of the first angle parameters corresponding to this subset is $\frac{1}{2}$, and the corresponding first angle parameters satisfy $l ∈ \left\{\frac{1}{2},\frac{3}{2},⋯,{N}_{1}{O}_{1}-\frac{1}{2}\right\}$.

In some embodiments, the ${n}_{1}^{′}$-th element ${ν}_{{n}_{1}^{′}}$ of the first basis vector *v* is:
${ν}_{{n}_{1}^{′}} = exp \left(j\frac{2 π}{λ}\left(\frac{2 {ln}_{1}^{′} {d}_{x}}{{N}_{1} {O}_{1}}-\frac{\left({\left({n}_{1}^{′}\right)}^{2}-{n}_{1}^{′}\left({N}_{1}+1\right)\right) {d}_{x}^{2} λ {\left⌈\frac{2 \sqrt{2}}{3}\left({N}_{3}{O}_{3}-1\right)+1\right⌉}^{2}}{4 {o}_{1}^{2} {D}_{x}^{2}}\right)\right) ;$
where *j* is the imaginary unit; *λ* denotes the wavelength of a wireless signal; *dₓ* denotes the antenna spacing in the horizontal dimension of the first antenna array; *Dₓ* denotes the length of the first antenna array in the horizontal dimension; *d_{z}* denotes the antenna spacing in the vertical dimension of the first antenna array; *D_{z}* denotes the length of the first antenna array in the vertical dimension.

In some embodiments, ${d}_{x} = \frac{λ}{2} , {D}_{x} = {N}_{1} {d}_{x} = {N}_{1} \frac{λ}{2}$*, N*₁ *= N*₃ and *O*₁ = *O*₃ the ${n}_{1}^{′}$-th element ${ν}_{{n}_{1}^{′}}$ in the first basis vector *v* is:
${ν}_{{n}_{1}^{′}} = exp \left(\frac{j 2 {πln}_{1}^{′}}{{N}_{1} {O}_{1}}-\frac{jπ \left({\left({n}_{1}^{′}\right)}^{2}-{n}_{1}^{′}\left({N}_{1}+1\right)\right) {\left⌈\frac{2 \sqrt{2}}{3}\left({N}_{1}{O}_{1}-1\right)+1\right⌉}^{2}}{2 {o}_{1}^{2} {N}_{1}^{2}}\right) .$

The number of first distance parameters in the first distance parameter set may be $\left⌈\frac{2 \sqrt{2}}{3}\left({N}_{1}{O}_{1}-1\right)+1\right⌉$, meaning that the first codebook may include codewords corresponding to multiple first basis vectors of which first distance parameters are less than or equal to $\left⌈\frac{2 \sqrt{2}}{3}\left({N}_{1}{O}_{1}-1\right)+1\right⌉$.

Optionally, for an odd first distance parameter, the corresponding first angle parameter satisfies *l ∈* {0,1,···,*N*₁*O*₁-1}; for an even first distance parameter, the corresponding first angle parameter satisfies $l ∈ \left\{\frac{1}{2},\frac{3}{2},⋯,{N}_{1}{O}_{1}-\frac{1}{2}\right\}$. Alternatively, for an even first distance parameter, the corresponding first angle parameter satisfies *l* ∈ {0,1,···,*N*₁*O*₁-1} ; for an odd first distance parameter, the corresponding first angle parameter satisfies $l ∈ \left\{\frac{1}{2},\frac{3}{2},⋯,{N}_{1}{O}_{1}-\frac{1}{2}\right\}$.

For example, when *N*₃ *= N*₁ = 64 and *O*₃ = *O*₁ = 4 , then $\left⌈\frac{2 \sqrt{2}}{3}\left({N}_{3}{O}_{3}-1\right)+1\right⌉ = 242$. When *o*₁ ∈ {1,3,···,241} and *o*₁ is odd, *l* ∈ {0,1,···,255} ; when *o*₁ ∈ {2, 4,··· , 242} and *o*₁ is even, $l ∈ \left\{\frac{1}{2}, \frac{3}{2}, ⋯, \frac{509}{2}\right\}$. Alternatively, when *o*₁ ∈ {2, 4,···, 242} and *o*₁ is even, *l* ∈ {0,1,··· , 255} ; when *o*₁ ∈ {1, 3,··· , 241} and *o*₁ is odd, $l ∈ \left\{\frac{1}{2}, \frac{3}{2}, ⋯, \frac{509}{2}\right\}$.

In some embodiments, a plurality of the second distance parameters are distributed into *K* second distance parameter subsets, and the quantization offsets of the second angle parameters corresponding to the second distance parameters in different second distance parameter subsets are different.

The multiple second distance parameters may be uniformly distributed. For example, each second distance parameter subset contains the same number of second distance parameters, and the values of the second distance parameters within various subsets may form an arithmetic sequence.

In some embodiments, the quantization offset of the second angle parameter corresponding to the second distance parameter in the second distance parameter subset with index *k* is $\frac{k}{K}$. The second angle parameters corresponding to the second distance parameters in the second distance parameter subset with index *k* satisfy $m ∈ \left\{\frac{k}{K},1+\frac{k}{K},⋯,{N}_{1}{O}_{1}-1+\frac{k}{K}\right\}$, where 0≤*k*≤*K*-1 and *k* is an integer.

Optionally, K =2, the second distance parameter ${o}_{2} ∈ \left\{1, 2, ⋯, \left⌈\frac{2 \sqrt{2}}{3}\left({N}_{4}{O}_{4}-1\right)+1\right⌉\right\}$.

For example, when K=2, that is, the number of second distance parameter subsets is 2, the index *k* of the second distance parameter subset may be 0 or 1. When *k* is 0, the second distance parameters in this second distance parameter subset are odd numbers less than or equal to $\left⌈\frac{2 \sqrt{2}}{3}\left({N}_{4}{O}_{4}-1\right)+1\right⌉$. The quantization offset of the second angle parameters corresponding to this second distance parameter subset is 0, and the second angle parameters corresponding to the second distance parameter subset satisfy *m* ∈ {0,1,···,*N*₂*O*₂ -1}. When k=1, the second distance parameters in this second distance parameter subset are even numbers less than or equal to $\left⌈\frac{2 \sqrt{2}}{3}\left({N}_{4}{O}_{4}-1\right)+1\right⌉$. The quantization offset of the second angle parameters corresponding to this second distance parameter subset is $\frac{1}{2}$, and the second angle parameters corresponding to this second distance parameter subset satisfy $m ∈ \left\{\frac{1}{2},\frac{3}{2},⋯,{N}_{2}{O}_{2}-\frac{1}{2}\right\}$.

In some embodiments, the ${n}_{2}^{′}$-th element ${u}_{{n}_{2}^{′}}$ of the second basis vector *u* is:
${u}_{{n}_{2}^{′}} = exp \left(j\frac{2 π}{λ}\left(\frac{2 {mn}_{2}^{′} {d}_{z}}{{N}_{2} {O}_{2}}-\frac{\left({\left({n}_{2}^{′}\right)}^{2}-{n}_{2}^{′}\left({N}_{2}+1\right)\right) {d}_{z}^{2} λ {\left⌈\frac{2 \sqrt{2}}{3}\left({N}_{4}{O}_{4}-1\right)+1\right⌉}^{2}}{4 {o}_{2}^{2} {D}_{z}^{2}}\right)\right) ;$
where j is the imaginary unit; *λ* denotes the wavelength of a wireless signal; *dₓ* denotes the antenna spacing in the horizontal dimension of the first antenna array; *Dₓ* denotes the length of the first antenna array in the horizontal dimension; *d_{z}* denotes the antenna spacing in the vertical dimension of the first antenna array; *D_{z}* denotes the length of the first antenna array in the vertical dimension.

In some embodiments, ${d}_{z} = \frac{λ}{2} , {D}_{z} = {N}_{2} {d}_{z} = {N}_{2} \frac{λ}{2}$, *N*₂ = *N*₄ and *O*₂ *= O*₄, ${n}_{2}^{′}$-th element ${u}_{{n}_{2}^{′}}$ of the second basis vector u is:
${u}_{{n}_{2}^{′}} = exp \left(\frac{j 2 {πmn}_{2}^{′}}{{N}_{2} {O}_{2}}-\frac{jπ \left({\left({n}_{2}^{′}\right)}^{2}-{n}_{2}^{′}\left({N}_{2}+1\right)\right) {\left⌈\frac{2 \sqrt{2}}{3}\left({N}_{2}{O}_{2}-1\right)+1\right⌉}^{2}}{2 {o}_{2}^{2} {N}_{2}^{2}}\right) .$

The number of second distance parameters in the second distance parameter set may be $\left⌈\frac{2 \sqrt{2}}{3}\left({N}_{2}{O}_{2}-1\right)+1\right⌉$. That is, the first codebook may include codewords corresponding to multiple second basis vectors of which second distance parameters are less than or equal to $\left⌈\frac{2 \sqrt{2}}{3}\left({N}_{2}{O}_{2}-1\right)+1\right⌉$.

Optionally, for an odd second distance parameter, the corresponding second angle parameter satisfies *m* ∈ {0,1,···,*N*₂*O*₂ -1} ; for an even second distance parameter, the corresponding second angle parameter satisfies $m ∈ \left\{\frac{1}{2},\frac{3}{2},⋯,{N}_{2}{O}_{2}-\frac{1}{2}\right\}$. Alternatively, for an even second distance parameter, the corresponding second angle parameter satisfies *m* ∈ {0,1,···,*N*₂*O*₂ -1} ; for an odd second distance parameter, the corresponding second angle parameter satisfies $m ∈ \left\{\frac{1}{2},\frac{3}{2},⋯,{N}_{2}{O}_{2}-\frac{1}{2}\right\}$.

For example, if *N*₄ *= N*₂ = 64 and *O*₄ *= O*₂ = 4 , then $\left⌈\frac{2 \sqrt{2}}{3}\left({N}_{2}{O}_{2}-1\right)+1\right⌉ = 242$. When *o*₂ ∈ {1, 3,··· , 241} and *o*₂ is odd, *m* ∈ {0,1,··· , 255} ; when *o*₂ ∈ {2, 4, ··· , 242} and *o*₂ is even, $m ∈ \left\{\frac{1}{2}, \frac{3}{2}, ⋯, \frac{509}{2}\right\}$. Alternatively, when *o*₂ ∈ {2, 4, ··· , 242} and *o*₂ is even, *m* ∈ {0, 1, ··· , 255} ; when *o*₂ ∈ {1, 3, ··· , 241} and *o*₂ is odd, $m ∈ \left\{\frac{1}{2}, \frac{3}{2}, ⋯, \frac{509}{2}\right\}$.

In some embodiments, a plurality of first angle parameters are distributed into K first angle parameter subsets, and the quantization offsets of the first distance parameters corresponding to the first angle parameters in different first angle parameter subsets are different.

The multiple first angle parameters may be uniformly distributed. For example, each first angle parameter subset contains the same number of first angle parameters, and the values of the first angle parameters within various subsets may form an arithmetic sequence.

In some embodiments, the quantization offset of the first distance parameter corresponding to the first angle parameter in the first angle parameter subset with index *k* is $\frac{k}{K}$. The first distance parameters corresponding to the first angle parameters in the first angle parameter subset with index *k* satisfy ${o}_{1} ∈ \left\{\frac{k}{K},1+\frac{k}{K},⋯,{N}_{3}{O}_{3}-1+\frac{k}{K}\right\}$, where 0<*k*≤*K* and *k* is an integer.

Optionally, *K* =2, the first angle parameter $l ∈ \left\{0, 1, 2, ⋯, \left⌈\frac{2 \sqrt{2}}{3}\left({N}_{1}{O}_{1}-1\right)\right⌉\right\}$.

For example, when K=2, that is, the number of first angle parameter subsets is 2, the index *k* of the first angle parameter subset may be 1 or 2. When *k*=1, the first angle parameters in this first angle parameter subset are odd numbers less than or equal to $\left⌈\frac{2 \sqrt{2}}{3}\left({N}_{1}{O}_{1}-1\right)+1\right⌉$. The quantization offset of the first distance parameters corresponding to this first angle parameter subset is 0, and the first distance parameters corresponding to the first angle parameter satisfy *o*₁ ∈ {1,···,*N*₃*O*₃ -1}. When *k* is 2, the first angle parameters in this first angle parameter subset are even numbers less than or equal to $\left⌈\frac{2 \sqrt{2}}{3}\left({N}_{1}{O}_{1}-1\right)+1\right⌉$. The quantization offset of the first distance parameters corresponding to this first angle parameter subset is $\frac{1}{2}$, and the first distance parameters corresponding to the first angle parameter subset satisfy ${o}_{1} ∈ \left\{\frac{1}{2},\frac{3}{2},⋯,{N}_{3}{O}_{3}-\frac{1}{2}\right\}$.

In some embodiments, the ${n}_{1}^{′}$-th element ${ν}_{{n}_{1}^{′}}$ of the first basis vector *ν* is:
${ν}_{{n}_{1}^{′}} = exp \left(j\frac{2 π}{λ}\left(\frac{2 {ln}_{1}^{′} {d}_{x}}{\left⌈\frac{2 \sqrt{2}}{3}\left({N}_{1}{O}_{1}-1\right)+1\right⌉}-\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)\right) ;$
where j is the imaginary unit; *λ* denotes the wavelength of a wireless signal; *dₓ* denotes the antenna spacing in the horizontal dimension of the first antenna array; *Dₓ* denotes the length of the first antenna array in the horizontal dimension; *d_{z}* denotes the antenna spacing in the vertical dimension of the first antenna array; *D_{z}* denotes the length of the first antenna array in the vertical dimension.

In some embodiments, ${d}_{x} = \frac{λ}{2} , {D}_{x} = {N}_{1} {d}_{x} = {N}_{1} \frac{λ}{2}$, *N*₁ *= N*₃ and *O*₁ = *O*₃. The ${n}_{1}^{′}$-th element ${ν}_{{n}_{1}^{′}}$ of the first basis vector V is:
${ν}_{{n}_{1}^{′}} = exp \left(\frac{j 2 {πln}_{1}^{′}}{\left⌈\frac{2 \sqrt{2}}{3}\left({N}_{1}{O}_{1}-1\right)+1\right⌉}-\frac{jπ \left({\left({n}_{1}^{′}\right)}^{2}-{n}_{1}^{′}\left({N}_{1}+1\right)\right) {O}_{1}^{2}}{2 {o}_{1}^{2}}\right) .$

Herein, the number of first angle parameters in the first angle parameter set may be $\left⌈\frac{2 \sqrt{2}}{3}\left({N}_{1}{O}_{1}-1\right)+2\right⌉$. That is, the first codebook may include codewords corresponding to multiple first basis vectors of which first angle parameters are less than or equal to $\left⌈\frac{2 \sqrt{2}}{3}\left({N}_{1}{O}_{1}-1\right)+1\right⌉$.

Optionally, for an odd first angle parameter, the corresponding first distance parameter satisfies *o*₁ ∈ {1,···*,N*₁*O*₁ -1} ; for an even first angle parameter, the corresponding first distance parameter satisfies ${o}_{1} ∈ \left\{\frac{1}{2},⋯,{N}_{1}{O}_{1}-\frac{1}{2}\right\}$. Alternatively, for an even first angle parameter, the corresponding first distance parameter satisfies *o*₁ ∈ {1,···,*N*₁*O*₁ -1} ; for an odd first angle parameter, the corresponding first distance parameter satisfies ${o}_{1} ∈ \left\{\frac{1}{2},\frac{3}{2},⋯,{N}_{1}{O}_{1}-\frac{1}{2}\right\}$.

For example, if *N*₃ *= N*₁ = 64 and *O*₃ = *O*₁ = 4 , then $\left⌈\frac{2 \sqrt{2}}{3}\left({N}_{1}{O}_{1}-1\right)+1\right⌉ = 242$, When *l* ∈ {1, 3, ··· , 241} and *l* is odd, *o*₁ ∈ {1, ··· , 255} ; when *l* ∈ {2, 4, ··· , 242} and *l* is even, ${o}_{1} ∈ \left\{\frac{1}{2}, \frac{3}{2}, ⋯, \frac{509}{2}\right\}$. Alternatively, when *l* ∈ {1, 3, ··· , 241} and *l* is even, *o*₁ ∈ {1, ··· , 255} ; when *l* ∈ {2, 4, ··· , 242} and *l* is odd, ${o}_{1} ∈ \left\{\frac{1}{2}, \frac{3}{2}, ⋯, \frac{509}{2}\right\}$.

In some embodiments, a plurality of second angle parameters are distributed into *K* second angle parameter subsets, and the quantization offsets of the second distance parameters corresponding to the second angle parameters in different second angle parameter subsets are different.

The multiple second angle parameters may be uniformly distributed. For example, each second angle parameter subset contains the same number of second angle parameters, and the values of the second angle parameters within various subsets may form an arithmetic sequence.

In some embodiments, the quantization offset of the second distance parameter corresponding to the second angle parameter in the second angle parameter subset with index *k* is $\frac{k}{K}$. The second distance parameters corresponding to the second angle parameters in the second angle parameter subset with index *k* satisfy ${o}_{2} ∈ \left\{\frac{k}{K},1+\frac{k}{K},⋯,{N}_{4}{O}_{4}-1+\frac{k}{K}\right\}$, where 0 < *k* ≤ *K* and *k* is an integer.

Optionally, *K* =2, the second angle parameter $m ∈ \left\{0, 1, 2, ⋯, \left⌈\frac{2 \sqrt{2}}{3}\left({N}_{2}{O}_{2}-1\right)\right⌉\right\}$.

For example, when K is 2, that is, the number of second angle parameter subsets is 2, the index *k* of the second angle parameter subset may be 1 or 2. When *k* is 1, the second angle parameters in this second angle parameter subset are odd numbers less than or equal to $\left⌈\frac{2 \sqrt{2}}{3}\left({N}_{2}{O}_{2}-1\right)+1\right⌉$. The quantization offset of the second distance parameters corresponding to this second angle parameter subset is 0, and the second distance parameters corresponding to the second angle parameter subset satisfy *o*₂ ∈ {1, ··· , *N*₄*O*₄ -1}. When *k* is 2, the second angle parameters in this second angle parameter subset are even numbers less than or equal to $\left⌈\frac{2 \sqrt{2}}{3}\left({N}_{2}{O}_{2}-1\right)+1\right⌉$. The quantization offset of the second distance parameters corresponding to this second angle parameter subset is $\frac{1}{2}$, and the second distance parameters corresponding to the second angle parameter subset satisfy ${o}_{2} ∈ \left\{\frac{1}{2},\frac{3}{2},⋯,{N}_{4}{O}_{4}-\frac{1}{2}\right\}$.

In some embodiments, the ${n}_{2}^{′}$-th element ${u}_{{n}_{2}^{′}}$ of the second basis vector *u* is:
${u}_{{n}_{2}^{′}} = exp \left(j\frac{2 π}{λ}\left(\frac{2 {mn}_{2}^{′} {d}_{z}}{\left⌈\frac{2 \sqrt{2}}{3}\left({N}_{2}{O}_{2}-1\right)+1\right⌉}-\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)\right) ;$
where *j* is the imaginary unit; *λ* denotes the wavelength of the wireless signal; *dₓ* denotes the antenna spacing in the horizontal dimension of the first antenna array; *Dₓ* denotes the length of the first antenna array in the horizontal dimension; *d_{z}* denotes the antenna spacing in the vertical dimension of the first antenna array; *D_{z}* denotes the length of the first antenna array in the vertical dimension.

In some embodiments, ${d}_{z} = \frac{λ}{2} , {D}_{z} = {N}_{2} {d}_{z} = {N}_{2} \frac{λ}{2}$, *N₂* = *N*₄ and *O*₂ =*O*₄. The ${n}_{2}^{′}$-th element ${u}_{{n}_{2}^{′}}$ of the second basis vector *u* is:
${u}_{{n}_{2}^{′}} = exp \left(\frac{j 2 {πmn}_{2}^{′}}{\left⌈\frac{2 \sqrt{2}}{3}\left({N}_{2}{O}_{2}-1\right)+1\right⌉}-\frac{jπ \left({\left({n}_{2}^{′}\right)}^{2}-{n}_{2}^{′}\left({N}_{2}+1\right)\right) {O}_{2}^{2}}{2 {o}_{2}^{2}}\right) .$

The number of second angle parameters in the second angle parameter set may be $\left⌈\frac{2 \sqrt{2}}{3}\left({N}_{2}{O}_{2}-1\right)+2\right⌉$. That is, the second codebook may include codewords corresponding to multiple second basis vectors of which second angle parameters are less than or equal to $\left⌈\frac{2 \sqrt{2}}{3}\left({N}_{2}{O}_{2}-1\right)+1\right⌉$.

Optionally, for an odd second angle parameter, the corresponding second distance parameter satisfies *o*₂ ∈ {1, ···,*N*₂*O*₂ -1} ; for an even second angle parameter, the corresponding second distance parameter satisfies ${o}_{2} ∈ \left\{\frac{1}{2},⋯,{N}_{2}{O}_{2}-\frac{1}{2}\right\}$. Alternatively, for an even second angle parameter, the corresponding second distance parameter satisfies *o*₂ ∈ {1, ··· , *N*₂*O*₂ -1} ; for an odd second angle parameter, the corresponding second distance parameter satisfies ${o}_{2} ∈ \left\{\frac{1}{2},\frac{3}{2},⋯,{N}_{2}{O}_{2}-\frac{1}{2}\right\}$.

For example, if *N*₄ *= N*₂ = 64 and *O*₄ = *O*₂ = 4 , then $\left⌈\frac{2 \sqrt{2}}{3}\left({N}_{2}{O}_{2}-1\right)+1\right⌉ = 242$ .When *m* ∈ {1, 3, ··· , 241} and *m* is odd, *o*₂ ∈ {1, ··· , 255} ; when *m* ∈ {2, 4, ··· , 242} and *m* is even, ${o}_{2} ∈ \left\{\frac{1}{2}, \frac{3}{2}, ⋯, \frac{509}{2}\right\}$. Alternatively, when *m* ∈ {1, 3, ··· , 241} and *m* is even, *o*₂ ∈ {1, ··· , 255} ; when *m* ∈ {2, 4, ··· , 242} and *m* is odd, ${o}_{2} ∈ \left\{\frac{1}{2}, \frac{3}{2}, ⋯, \frac{509}{2}\right\}$.

It can be understood that the above-mentioned first angle parameters may be divided into multiple first angle parameter sets, and meanwhile, the second angle parameters may also be divided into multiple second angle parameter sets. The quantity of the multiple first angle parameter sets and the quantity of the multiple second angle parameter sets may be the same or different, which is not limited by the embodiments of the present disclosure. That is, the number of the first angle-distance parameter subsets and the number of the second angle parameter subsets may take the same value or different values.

For example, if the number of first angle parameter subsets is equal to the number of second angle parameter subsets and both equal to *K,* the horizontal and vertical antenna spacing of the antenna array satisfies ${d}_{x} = {d}_{z} = \frac{λ}{2}$, the length in horizontal dimension and the length in vertical dimension of the antenna array are ${D}_{x} = {N}_{1} {d}_{x} = {N}_{1} \frac{λ}{2}$ and ${D}_{z} = {N}_{2} {d}_{z} = {N}_{2} \frac{λ}{2}$ respectively, and provided that *N*₁ = *N*₃, *N*₂ = *N*₄, *O*₁ = *O*₃ and *O*₂ = *O*₄, then the horizontal-dimension basis vector and vertical-dimension basis vector of the first codebook can be expressed as: ${ν}_{{n}_{1}^{′}} = exp \left(\frac{j 2 {πln}_{1}^{′}}{{N}_{1} {O}_{1}}-\frac{jπ \left({\left({n}_{1}^{′}\right)}^{2}-{n}_{1}^{′}\left({N}_{1}+1\right)\right) {\left⌈\frac{2 \sqrt{2}}{3}\left({N}_{1}{O}_{1}-1\right)+1\right⌉}^{2}}{2 {o}_{1}^{2} {N}_{1}^{2}}\right)$; ${u}_{{n}_{2}^{′}} = exp \left(\frac{j 2 {πmn}_{2}^{′}}{{N}_{2} {O}_{2}}-\frac{jπ \left({\left({n}_{2}^{′}\right)}^{2}-{n}_{2}^{′}\left({N}_{2}+1\right)\right) {\left⌈\frac{2 \sqrt{2}}{3}\left({N}_{2}{O}_{2}-1\right)+1\right⌉}^{2}}{2 {o}_{2}^{2} {N}_{2}^{2}}\right)$. When *N*₃ *= N*₁ = 64 , *N*₄ *= N*₂ =64, *O*₃ = *O*₁ = 4 and *O*₂ = O₂ = 4, $\left⌈\frac{2 \sqrt{2}}{3}\left({N}_{1}{O}_{1}-1\right)+1\right⌉ = \left⌈\frac{2 \sqrt{2}}{3}\left({N}_{3}{O}_{3}-1\right)+1\right⌉ = 242$.

Similarly, the above-mentioned first distance parameters may be divided into multiple first distance parameter sets, and meanwhile the second distance parameters may also be divided into multiple second distance parameter sets. The number of the multiple first distance parameter sets and the number of the multiple second distance parameter sets may be the same or different, which is not limited by the embodiments of the present disclosure. That is, the value of K representing the number of first distance parameter subsets and the value of K representing the number of second distance parameter subsets may be identical or different.

In some embodiments, K corresponding to each parameter may be configured in any one of the following manners: configured by RRC; indicated via MAC-CE; indicated by control signaling. For example, the value range of K may be [1,4], in which case the value of K may be indicated by 2 bits. Optionally, the value range of K or the value of K may also be predefined by the protocol, such as being defined as 2.

In some embodiments, the first codebook is constructed based on angle parameters, distance parameters and co-phase coefficients. Optionally, the first codebook is constructed based on the first basis vector, the second basis vector and co-phase coefficients. Optionally, the first basis vector may be determined based on the first angle parameter and the first distance parameter, and the second basis vector may be determined based on the second angle parameter and the second distance parameter.

In some embodiments, the first codebook is used for single-polarization single-layer transmission. The first codebook may be the Kronecker product of any type of first basis vector and any type of second basis vector in the above optional embodiments.

In some embodiments, the first codebook is used for dual-polarization multi-layer transmission, where the first codebook is constructed based on angle parameters, distance parameters and co-phase coefficients, and the co-phase coefficients correspond to the number of layers of the dual-polarization multi-layer transmission.

Optionally, the first codebook is constructed based on the first basis vector, the second basis vector and co-phase coefficients. Optionally, the first basis vector may be determined based on the first angle parameter and the first distance parameter, and the second basis vector may be determined based on the second angle parameter and the second distance parameter.

In some embodiments, the co-phase coefficient includes at least one of the following: Binary Phase Shift Keying (BPSK), Quadrature Phase Shift Keying (QPSK), and 8-ary Phase Shift Keying (8-PSK).

With reference to some of the foregoing embodiments, the first codebook may be constructed based on any type of first basis vector, any type of second basis vector and co-phase coefficients in the foregoing embodiments. The first codebook may be constructed based on the co-phase coefficient after separately calculating the Kronecker product of each first basis vector and each second basis vector.

In dual-polarization multi-layer transmission, in the case of QPSK, the co-phase coefficient may be any one of the four values [1, -1, j, -j]; in the case of BPSK, the co-phase coefficient may be any one of [1, -1]; and in the case of 8-PSK, the co-phase coefficient may be any one of the eight values in $\left[1,-1,j,-j,\frac{1}{\sqrt{2}}\left(1+j\right),\frac{1}{\sqrt{2}}\left(1-j\right),\frac{1}{\sqrt{2}}\left(-1+j\right),\frac{1}{\sqrt{2}}\left(-1-j\right)\right]$. Optionally, the near-field codebook may include codewords constructed based on each angle parameter, each distance parameter and each co-phase coefficient.

The first basis vector may include multiple basis vectors corresponding to various first angle parameters and various first distance parameters, and the second basis vector may include multiple basis vectors corresponding to various second angle parameters and various second distance parameter.

The terminal may perform channel estimation based on CSI-RS, traverse all possible values of the first angle parameter, the second angle parameter, the first distance parameter and the second distance parameter respectively, so as to obtain the best-matched first basis vector and second basis vector, then determine the best-matched codeword in the first codebook based on the co-phase coefficient, and further obtain the first codeword.

In step S2102, the terminal sends first information to the network device.

In some embodiments, the first information is used to indicate the codeword determined by the terminal. Optionally, the first information is used to indicate the first codeword. Optionally, the first information is used to indicate the angle parameter and/or distance parameter corresponding to the first codeword. Optionally, the first information is used to indicate the best-matched first basis vector and second basis vector determined by the terminal.

The distance parameters corresponding to the first codeword may be the first distance parameter and the second distance parameter determined by the terminal; the angle parameters corresponding to the first codeword may be the best-matched first angle parameter and second angle parameter determined by the terminal.

In some embodiments, the first information includes at least one of the following: a first indication field, configured to indicate the first angle parameter corresponding to the first codeword; a second indication field, configured to indicate the second angle parameter corresponding to the first codeword; a third indication field, configured to indicate the first distance parameter corresponding to the first codeword; a fourth indication field, configured to indicate the second distance parameter corresponding to the first codeword.

It can be understood that the first codeword may be determined according to the best-matched first basis vector and the best-matched second basis vector. The first angle parameter corresponding to the first codeword is the first angle parameter corresponding to the best-matched first basis vector; the second angle parameter corresponding to the first codeword is the second angle parameter corresponding to the best-matched second basis vector; the first distance parameter corresponding to the first codeword is the first distance parameter corresponding to the best-matched first basis vector; the second distance parameter corresponding to the first codeword is the second distance parameter corresponding to the best-matched first basis vector.

In some embodiments, the first indication field includes at least $\left⌈{log}_{2} {N}_{1}{O}_{1}\right⌉$ bits; the second indication field includes at least $\left⌈{log}_{2} {N}_{2}{O}_{2}\right⌉$ bits; the third indication field includes at least $\left⌈{log}_{2} {N}_{3}{O}_{3}\right⌉$ bits; the fourth indication field includes at least $\left⌈{log}_{2} {N}_{4}{O}_{4}\right⌉$ bits.

For example, if the number of angle parameters of the near-field codebook in the horizontal dimension and vertical dimension satisfies *N*₁*O*₁ = *N*₂*O*₂ = 4, and the number of distance parameters in the horizontal dimension and vertical dimension satisfies *N*₃*O*₃ = *N*₄*O*₄ = 4, the first indication field, the second indication field, the third indication field and the fourth indication field may each contain 2 bits. When the first indication field is 00, the second indication field is 01, the third indication field is 10, and the fourth indication field is 11, the first codeword indicated by the first information is the codeword with the first angle parameter being 0, the second angle parameter being 1, the first distance parameter being 3, and the second distance parameter being 4.

In some embodiments, the first indication field includes at least $\left⌈{log}_{2} {N}_{1}{O}_{1}\right⌉$ bits; the second indication field includes at least $\left⌈{log}_{2} {N}_{2}{O}_{2}\right⌉$ bits; the third indication field includes at least $\left⌈{log}_{2}\left⌈\frac{2 \sqrt{2}}{3}\left({N}_{3}{O}_{3}-1\right)+1\right⌉\right⌉$ bits; the fourth indication field includes at least $\left⌈{log}_{2}\left⌈\frac{2 \sqrt{2}}{3}\left({N}_{4}{O}_{4}-1\right)+1\right⌉\right⌉$ bits.

Wherein, the first distance parameters may be distributed into two first distance parameter subsets, and/or the second distance parameters may be distributed into two second distance parameter subsets. That is, the first distance parameters may be obtained via hexagonal quantization, and the second distance parameters may also be obtained via hexagonal quantization.

In some embodiments, the first indication field includes at least $\left⌈{log}_{2}\left⌈\frac{2 \sqrt{2}}{3}\left({N}_{1}{O}_{1}-1\right)+1\right⌉\right⌉$ bits; the second indication field includes at least $\left⌈{log}_{2}\left⌈\frac{2 \sqrt{2}}{3}\left({N}_{2}{O}_{2}-1\right)+1\right⌉\right⌉$ bits; the third indication field includes at least $\left⌈{log}_{2} {N}_{3}{O}_{3}\right⌉$ bits; the fourth indication field includes at least $\left⌈{log}_{2} {N}_{4}{O}_{4}\right⌉$ bits.

The first angle parameters may be distributed into two first angle parameter subsets, and/or the second angle parameters may be distributed into two second angle parameter subsets. That is, the first angle parameters may be obtained via hexagonal quantization, and the second angle parameters may also be obtained via hexagonal quantization.

It can be understood that when the first antenna array is a uniform linear array, the terminal does not need to feed back relevant parameters of the vertical dimension. For example, the first information may only contain relevant parameters of the horizontal dimension, such that the first information merely includes the first indication field and the third indication field. When the terminal is located in the near-field region in only one of the horizontal dimension or the vertical dimension, the terminal may only feed back the relevant parameters of the dimension corresponding to the near-field region among the best-matched first basis vectors. For instance, if the first antenna array is a uniform planar array and the terminal is only in the near-field region along the horizontal dimension, the terminal may configure the first information to include the first indication field, the second indication field and the third indication field.

In some embodiments, the network device receives the first information. Optionally, the network device determines the first codeword according to the first information. Optionally, the network device determines the best-matched first basis vector and second basis vector derived by the terminal based on the first information, and then determines the first codeword according to the best-matched first basis vector and the best-matched second basis vector.

In some embodiments, the network device determines, according to the first angle parameter and the first distance parameter indicated by the first information, the best-matched first basis vector obtained by the terminal; determines, according to the second distance parameter and the second angle parameter indicated by the first information, the best-matched second basis vector obtained by the terminal; and further determines the first codeword based on the best-matched first basis vector and the best-matched second basis vector.

In some embodiments, the first information may be "codeword feedback information", "codeword indication information", etc., and the name thereof is not limited by the embodiments of the present disclosure.

In step S2103, the terminal sends second information to the network device.

In some embodiments, the second information is used to indicate the co-phase coefficient corresponding to the first codeword.

In some embodiments, the second information is used to indicate that the first codeword is applied to dual-polarization multi-layer transmission. Optionally, the second information is used to indicate that the codebook corresponding to the first codeword is applied to dual-polarization multi-layer transmission. In some embodiments, the second information may contain N bits, where N is used to indicate the co-phase coefficient. For example, when N equals 1, the second information indicates that the co-phase coefficient corresponding to the first codeword is BPSK; when N equals 2, the second information indicates that the co-phase coefficient corresponding to the first codeword is QPSK; when N equals 3, the second information indicates that the co-phase coefficient corresponding to the first codeword is 8-PSK.

It can be understood that for QPSK, the co-phase coefficient corresponding to the first codeword may be any one of the four values [1,-1,j,-j], which can be indicated by 2 bits; for BPSK, the co-phase coefficient corresponding to the first codeword may be any one of [1,-1], which can be indicated by 1 bit; for 8-PSK, the co-phase coefficient corresponding to the first codeword may be any one of the eight values in $\left[1,-1,j,-j,\frac{1}{\sqrt{2}}\left(1+j\right),\frac{1}{\sqrt{2}}\left(1-j\right),\frac{1}{\sqrt{2}}\left(-1+j\right),\frac{1}{\sqrt{2}}\left(-1-j\right)\right]$, which can be indicated by 3 bits.

For example, when the second information contains 1 bit, if the value of the bit is 1, the co-phase coefficient corresponding to the first codeword may be 1; if the value of the bit is 0, the co-phase coefficient corresponding to the first codeword may be -1.

In some embodiments, the network device receives the second information. Optionally, the network device determines the number of layers of dual-polarization multi-layer transmission corresponding to the codebook of the first codeword according to the second information. Optionally, the network device determines the first codeword according to the first information and the second information.

For example, the network device determines the angle parameter and distance parameter corresponding to the first codeword based on the first information; the network device may further determine the co-phase coefficient corresponding to the codebook of the first codeword based on the second information. The network device may then determine the codebook with the optimal communication quality for the terminal and the corresponding codeword on the basis of the angle parameter, distance parameter and co-phase coefficient, and such codeword is the first codeword determined by the terminal.

In some embodiments, the first information and the second information may be the same piece of information, for example, they may be different fields within the identical information. Optionally, the first information and the second information may also be separate pieces of information, for instance, they may be carried by different information elements. The embodiments of the present disclosure impose no limitation on this arrangement.

In some embodiments, the second information may be "co-phase coefficient indication information", "transmission type indication information", etc., and the name thereof is not limited by the embodiments of the present disclosure.

With reference to some of the foregoing embodiments, in one example, the first antenna array is a uniform planar array. The terminal may perform channel estimation based on CSI-RS. When it is determined that both the horizontal dimension and the vertical dimension switch to the near-field region, the terminal further determines the best-matched first basis vector, the best-matched second basis vector and the co-phase coefficient in the first codebook, that is, determines the first codeword in the first codebook. Specifically, the terminal may determine the best-matched first angle parameter, second angle parameter, first distance parameter, second distance parameter and co-phase coefficient, and generate the corresponding first information and second information.

After receiving the first information, the network device may determine, according to the first information, the best-matched first distance parameter, second distance parameter, first angle parameter and second angle parameter derived by the terminal, and then determine the best-matched first basis vector and second basis vector of the terminal. Further, the network device may determine the first codeword determined by the terminal according to the first basis vector, the second basis vector and the co-phase coefficient indicated by the second information, and transmit wireless signals based on the first codeword.

In the foregoing embodiments, the angle domain / distance domain may be divided into multiple subsets, and a "staggered" quantization scheme is adopted in different subsets to reduce the number of quantization points. Typically, when divided into 2 subsets, the coverage range of precoding changes from a rectangle to a hexagon. Since the "distance" between adjacent precoders in the polarization domain remains unchanged, there is theoretically no performance loss. In addition, as the area of the hexagon is larger than that of the rectangle under this scheme, the number of quantization points can be reduced, which potentially reduces bit overhead.

It can be understood that the terminal may further construct the first codebook that is used only when one of the horizontal dimension and vertical dimension is in the near-field region, and may also construct the first codebook corresponding to a uniform linear array. The specific implementation manners thereof can be referred to the descriptions in the foregoing embodiments, which will not be repeated herein.

In some embodiments, the names of information and the like are not limited to those recorded in the embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", and "chip" may be used interchangeably.

In some embodiments, terms such as "codebook", "codeword", and "precoding matrix" may be used interchangeably. For example, a codebook may be a collection of one or more codewords or precoding matrices.

In some embodiments, terms such as "UL", "uplink ", and "physical uplink link" may be used interchangeably; terms such as "DL", "downlink", and "physical downlink link" may be used interchangeably; terms such as "side", "sidelink", "sidelink communication", "direct link", "direct communication", and "direct link communication" may be used interchangeably.

In some embodiments, terms such as "downlink control information (DCI)", "downlink (DL) assignment", "DL DCI", "uplink (UL) grant", and "UL DCI" may be used interchangeably.

In some embodiments, terms such as "physical downlink shared channel (PDSCH)" and "DL data" may be used interchangeably; terms such as "physical uplink shared channel (PUSCH)" and "UL data" may be used interchangeably.

In some embodiments, terms such as "moment", "time instant", "time", and "time position" may be used interchangeably; terms such as "duration", "time period", "time window", and "window" may be used interchangeably.

In some embodiments, terms such as "wireless access scheme" and "waveform" may be used interchangeably.

In some embodiments, terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "number of layers", "rank", "resource", "resource set", "resource group", "beam", "beam width", "beam angular degree", "antenna", "antenna element", and "panel" may be used interchangeably.

In some embodiments, terms such as "frame", "radio frame", "subframe", "slot", "sub-slot", "mini-slot", "symbol", and "transmission time interval (TTI)" may be used interchangeably.

In some embodiments, terms "acquire", "obtain", "receive", "transmit", "bidirectional transmission", "transmit and/or receive" may be used interchangeably and can be interpreted in multiple meanings including receiving from another entity, acquiring from a protocol, obtaining from a higher layer, deriving via internal processing, autonomous implementation, etc.

In some embodiments, terms such as "transmit", "emit", "report", "deliver ", "bidirectional transmission", and "transmit and/or receive" may be used interchangeably.

In some embodiments, terms such as "certain", "preset", "predetermined ", "set", "indicated", "a certain", "any", and "first" may be used interchangeably. Expressions like "certain A", "preset A", "configured A", "indicated A", "a certain A", "any A", and "first A" may be interpreted as A predefined in a protocol or the like, A obtained through configuration or indication, certain A, a certain A, any A, first A, etc., but are not limited thereto.

In some embodiments, judgment or determination may be performed via a 1-bit value (0 or 1), a boolean value represented by true or false, or numerical comparison (for example, comparison with a preset value), but is not limited thereto.

In some embodiments, "not expect to receive" may be interpreted as not receiving on time-domain resources and/or frequency-domain resources, or not performing subsequent processing on data or the like after reception; "not expect to transmit" may be interpreted as not transmitting, or transmitting without expecting a response from the receiver for the transmitted content.

The communication method involved in the embodiments of the present disclosure may include at least one of step S2101 to step S2103. For example, step S2101 may be implemented as a standalone embodiment; step S2102 may be implemented as a standalone embodiment; step S2101 and step S2103 may be implemented as a standalone embodiment; step S2102 and step S2103 may be implemented as a standalone embodiment, but are not limited thereto.

In some embodiments, step S2102 and step S2103 may be executed in an alternate order or simultaneously.

In some embodiments, step S2102 to step S2103 are optional, and one or more of these steps may be omitted or substituted in different embodiments.

In some embodiments, step S2101 and step S2103 are optional, and one or more of these steps may be omitted or substituted in different embodiments.

In some embodiments, reference may be made to other optional implementations described before or after the specification corresponding to FIG. 2A.

FIG. 3A is a schematic flowchart illustrating a communication method according to an embodiment of the present disclosure. As shown in FIG. 3A, the embodiment of the present disclosure involves a communication method (terminal side) and the method includes the following steps.

In step S3101: a first codeword in a first codebook is determined.

For optional implementations of step S3101, reference may be made to the optional implementations of step S2101 in FIG. 2A and other relevant parts of the embodiments related to FIG. 2A, which will not be repeated herein.

In step S3102, first information is sent.

For optional implementations of step S3102, reference may be made to the optional implementations of step S2102 in FIG. 2A and other relevant parts of the embodiments related to FIG. 2A, which will not be repeated herein.

In some embodiments, the network device transmits the first information to the terminal, but is not limited thereto. The first information may also be transmitted to other entities.

In step S3103, second information is sent.

For optional implementations of step S3103, reference may be made to the optional implementations of step S2102 in FIG. 2A and other relevant parts of the embodiments related to FIG. 2A, which will not be repeated herein.

In some embodiments, the network device transmits the first information to the terminal, but is not limited thereto. The first information may also be transmitted to other entities.

The communication method involved in the embodiments of the present disclosure may include at least one of step S3101 to step S3103. For example, step S3101 may be implemented as a standalone embodiment; step S3102 may be implemented as a standalone embodiment; step S3101 and step S3103 may be implemented as a standalone embodiment; step S3102 and step S3103 may be implemented as a standalone embodiment, but it is not limited thereto.

In some embodiments, step S3102 and step S3103 may be executed in an alternate order or simultaneously.

In some embodiments, step S3102 to step S3103 are optional, and one or more of these steps may be omitted or replaced in different embodiments.

In some embodiments, step S3101 and step S3103 are optional, and one or more of these steps may be omitted or replaced in different embodiments.

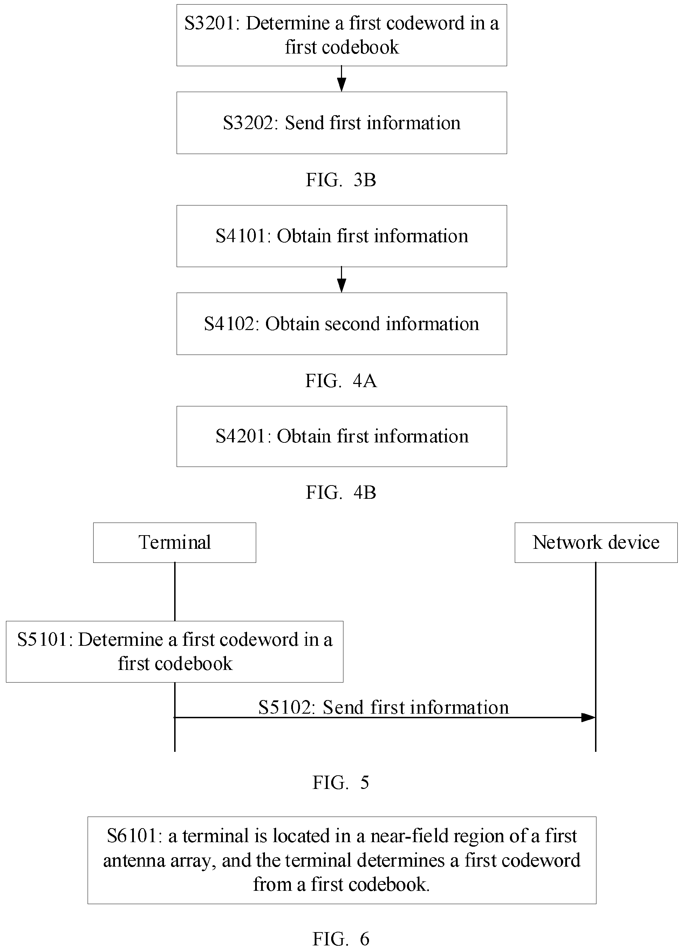

FIG. 3B is a schematic flowchart illustrating a communication method according to an embodiment of the present disclosure. As shown in FIG. 3B, the embodiment of the present disclosure involves a communication method (terminal side) and the method includes the following steps.

In step S3201, a first codeword in a first codebook is determined.

For optional implementations of step S3201, reference may be made to the optional implementations of step S2101 in FIG. 2A and step S3101 in FIG. 3A, as well as other relevant parts of the embodiments corresponding to FIG. 2A and FIG. 3A, which will not be repeated herein.

In step S3202, first information is sent.

For optional implementations of step S3202, reference may be made to the optional implementations of step S2101 in FIG. 2A and step S3102 in FIG. 3A, as well as other relevant parts of the embodiments corresponding to FIG. 2A and FIG. 3A, which will not be repeated herein.

In some embodiments, the terminal determines a first codeword in a first codebook. The first codebook is constructed based on an angle parameter set and a distance parameter set. The first codebook is a codebook used when the terminal is located in the near-field region of a first antenna array, where the first antenna array is the antenna array used by the network device to transmit wireless signals to the terminal.

The terminal sends first information to the network device, and the first information is used to indicate the first codeword.

In some embodiments, the first antenna array is one of: a uniform linear array; or a uniform planar array.

In some embodiments, the first antenna array includes *N*₁ antenna ports in a horizontal dimension and *N*₂ antenna ports in a vertical dimension, where *N*₁ is greater than or equal to 1, and *N*₂ is greater than or equal to 1.

In some embodiments, an angle parameter includes: at least one first angle parameter, where the first angle parameter is obtained by quantifying a horizontal-dimension angle domain in the near-field region according to the number of antenna ports *N*₁ in the horizontal dimension and an oversampling factor *O*₁ of the horizontal-dimension angle domain; and/or, at least one second angle parameter, where the second angle parameter is obtained by quantifying a vertical-dimension angle domain in the near-field region according to the number of antenna ports *N*₂ in the vertical dimension and an oversampling factor *O*₂ of the vertical-dimension angle domain.

The distance parameter includes: at least one first distance parameter, where the first distance parameter is obtained by quantifying a horizontal-dimension distance domain in the near-field region according to the number of sampling points *N*₃ in the horizontal dimension and an oversampling factor *O*₃ of the horizontal-dimension distance domain; and/or, at least one second distance parameter, where the second distance parameter is obtained by quantifying a vertical-dimension distance domain in the near-field region according to the number of sampling points *N*₄ in the vertical dimension and an oversampling factor *O*₄ of the vertical-dimension distance domain.

In some embodiments, multiple first distance parameters are distributed in *K* first distance parameter subsets, and quantization offsets of first angle parameters corresponding to the first distance parameters distributed in different first distance parameter subsets are different; and/or,

multiple second distance parameters are distributed in *K* second distance parameter subsets, and quantization offsets of second angle parameters corresponding to the second distance parameters distributed in different second distance parameter subsets are different.

In some embodiments, a quantization offset of a first angle parameter corresponding to a first distance parameter in a first distance parameter subset with index *k* is $\frac{k}{K}$, and the first angle parameter corresponding to the first distance parameter in the first distance parameter subset with index *k* satisfy $l ∈ \left\{\frac{k}{K},1+\frac{k}{K},⋯,{N}_{1}{O}_{1}-1+\frac{k}{K}\right\}$; and/or, a quantization offset of a second angle parameter corresponding to a second distance parameter in a second distance parameter subset with index *k* is $\frac{k}{K}$, and the second angle parameter corresponding to the second distance parameter in the second distance parameter subset with index *k* satisfy $m ∈ \left\{\frac{k}{K},1+\frac{k}{K},⋯,{N}_{2}{O}_{2}-1+\frac{k}{K}\right\}$; where 0 ≤ *k* ≤ *K* -1, and *k* is an integer.

In some embodiments, *K* =2, the first distance parameter ${o}_{1} ∈ \left\{1, 2, ⋯, \left⌈\frac{2 \sqrt{2}}{3}\left({N}_{3}{O}_{3}-1\right)+1\right⌉\right\}$; and/or, the second distance parameter ${o}_{2} ∈ \left\{1, 2, ⋯, \left⌈\frac{2 \sqrt{2}}{3}\left({N}_{4}{O}_{4}-1\right)+1\right⌉\right\}$.

In some embodiments, a basis vector of the first codebook is a Kronecker product of a first basis vector in the horizontal dimension and a second basis vector in the vertical dimension; an ${n}_{1}^{′}$-th element ${ν}_{{n}_{1}^{′}}$ in the first basis vector *ν* is: ${ν}_{{n}_{1}^{′}} = exp \left(j\frac{2 π}{λ}\left(\frac{2 {ln}_{1}^{′} {d}_{x}}{{N}_{1} {O}_{1}}-\frac{\left({\left({n}_{1}^{′}\right)}^{2}-{n}_{1}^{′}\left({N}_{1}+1\right)\right) {d}_{x}^{2} λ {\left⌈\frac{2 \sqrt{2}}{3}\left({N}_{3}{O}_{3}-1\right)+1\right⌉}^{2}}{4 {o}_{1}^{2} {D}_{x}^{2}}\right)\right)$; and/or an ${n}_{2}^{′}$-th element ${u}_{{n}_{2}^{′}}$ in the second basis vector *u* is: ${u}_{{n}_{2}^{′}} = exp \left(j\frac{2 π}{λ}\left(\frac{2 {mn}_{2}^{′} {d}_{z}}{{N}_{2} {O}_{2}}-\frac{\left({\left({n}_{2}^{′}\right)}^{2}-{n}_{2}^{′}\left({N}_{2}+1\right)\right) {d}_{z}^{2} λ {\left⌈\frac{2 \sqrt{2}}{3}\left({N}_{4}{O}_{4}-1\right)+1\right⌉}^{2}}{4 {o}_{2}^{2} {D}_{z}^{2}}\right)\right)$; where J is an imaginary unit, *λ* represents a wavelength of wireless signal, *dₓ* represents a horizontal-dimension antenna spacing of the first antenna array, *Dₓ* represents a horizontal-dimension length of the first antenna array, *d_{z}* represents a vertical-dimension antenna spacing of the first antenna array, and *D_{z}* represents a vertical-dimension length of the first antenna array.

In some embodiments, ${d}_{x} = \frac{λ}{2} , {D}_{x} = {N}_{1} {d}_{x} = {N}_{1} \frac{λ}{2}$, *N*₁ *= N*₃ and *O*₁ = *O*₃, the ${n}_{1}^{′}$ -th element ${ν}_{{n}_{1}^{′}}$ in the first basis vector V is: ${ν}_{{n}_{1}^{′}} = exp \left(\frac{j 2 {πln}_{1}^{′}}{{N}_{1} {O}_{1}}-\frac{jπ \left({\left({n}_{1}^{′}\right)}^{2}-{n}_{1}^{′}\left({N}_{1}+1\right)\right) {\left⌈\frac{2 \sqrt{2}}{3}\left({N}_{1}{O}_{1}-1\right)+1\right⌉}^{2}}{2 {o}_{1}^{2} {N}_{1}^{2}}\right)$; and/or, ${d}_{z} = \frac{λ}{2} , {D}_{z} = {N}_{2} {d}_{z} = {N}_{2} \frac{λ}{2}$, *N*₂ *= N*₄ and *O*₂ = *O*₄ , the ${n}_{2}^{′}$ -th element ${u}_{{n}_{2}^{′}}$ in the second basis vector *u* is: ${u}_{{n}_{2}^{′}} = exp \left(\frac{j 2 {πmn}_{2}^{′}}{{N}_{2} {O}_{2}}-\frac{jπ \left({\left({n}_{2}^{′}\right)}^{2}-{n}_{2}^{′}\left({N}_{2}+1\right)\right) {\left⌈\frac{2 \sqrt{2}}{3}\left({N}_{2}{O}_{2}-1\right)+1\right⌉}^{2}}{2 {o}_{2}^{2} {N}_{2}^{2}}\right)$.

In some embodiments, multiple first angle parameters are distributed in K first angle parameter subsets, and quantization offsets of first distance parameters corresponding to the first angle parameters distributed in different first angle parameter subsets are different; and/or, multiple second angle parameters are distributed in K second angle parameter subsets, and quantization offsets of second distance parameters corresponding to the second angle parameters distributed in different second angle parameter subsets are different.

In some embodiments, a quantization offset of a first distance parameter corresponding to a first angle parameter in a first angle parameter subset with index k is $\frac{k}{K}$, and the first distance parameter corresponding to the first angle parameter in the first angle parameter subset with index k satisfy ${o}_{1} ∈ \left\{\frac{k}{K},1+\frac{k}{K},⋯,{N}_{3}{O}_{3}-1+\frac{k}{K}\right\}$; and/or, a quantization offset of a second distance parameter corresponding to a second angle parameter in a second angle parameter subset with index *k* is $\frac{k}{K}$, and the second distance parameters corresponding to the second angle parameter in the second angle parameter subset with index *k* satisfy ${o}_{2} ∈ \left\{\frac{k}{K},1+\frac{k}{K},⋯,{N}_{4}{O}_{4}-1+\frac{k}{K}\right\}$; where 0 < *k* ≤ *K* , and *k* is an integer.

In some embodiments, where *K* =2, the first angle parameter $l ∈ \left\{0, 1, 2, ⋯, \left⌈\frac{2 \sqrt{2}}{3}\left({N}_{1}{O}_{1}-1\right)\right⌉\right\}$; and/or, the second angle parameter $m ∈ \left\{0, 1, 2, ⋯, \left⌈\frac{2 \sqrt{2}}{3}\left({N}_{2}{O}_{2}-1\right)\right⌉\right\}$.

In some embodiments, an ${n}_{1}^{′}$ -th element ${ν}_{{n}_{1}^{′}}$ in the first basis vector V is: ${ν}_{{n}_{1}^{′}} = exp \left(j\frac{2 π}{λ}\left(\frac{2 {ln}_{1}^{′} {d}_{x}}{\left⌈\frac{2 \sqrt{2}}{3}\left({N}_{1}{O}_{1}-1\right)+1\right⌉}-\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)\right)$; and/or, an ${n}_{2}^{′}$-th element ${u}_{{n}_{2}^{′}}$ in the second basis vector *u* is: ${u}_{{n}_{2}^{′}} = exp \left(j\frac{2 π}{λ}\left(\frac{2 {mn}_{2}^{′} {d}_{z}}{\left⌈\frac{2 \sqrt{2}}{3}\left({N}_{2}{O}_{2}-1\right)+1\right⌉}-\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)\right)$; where *j* is an imaginary unit, *λ* represents a wavelength of wireless signal, *dₓ* represents a horizontal-dimension antenna spacing of the first antenna array, *Dₓ* represents a horizontal-dimension length of the first antenna array, *d_{z}* represents a vertical-dimension antenna spacing of the first antenna array, and *D_{z}* represents a vertical-dimension length of the first antenna array.

In some embodiments, ${d}_{x} = \frac{λ}{2} , {D}_{x} = {N}_{1} {d}_{x} = {N}_{1} \frac{λ}{2}$, *N*₁ *= N*₃ and *O*₁ = *O*₃, the ${n}_{1}^{′}$ -th element ${ν}_{{n}_{1}^{′}}$ in the first basis vector *ν* is: ${ν}_{{n}_{1}^{′}} = exp \left(\frac{j 2 {πln}_{1}^{′}}{\left⌈\frac{2 \sqrt{2}}{3}\left({N}_{1}{O}_{1}-1\right)+1\right⌉}-\frac{jπ \left({\left({n}_{1}^{′}\right)}^{2}-{n}_{1}^{′}\left({N}_{1}+1\right)\right) {O}_{1}^{2}}{2 {o}_{1}^{2}}\right)$; and/or, ${d}_{z} = \frac{λ}{2} , {D}_{z} = {N}_{2} {d}_{z} = {N}_{2} \frac{λ}{2}$*, N*₂ *= N*₄ and *O*₂ = *O*₄ , the ${n}_{2}^{′}$ -th element ${u}_{{n}_{2}^{′}}$ in the second basis vector *u* is: ${u}_{{n}_{2}^{′}} = exp \left(\frac{j 2 {πmn}_{2}^{′}}{\left⌈\frac{2 \sqrt{2}}{3}\left({N}_{2}{O}_{2}-1\right)+1\right⌉}-\frac{jπ \left({\left({n}_{2}^{′}\right)}^{2}-{n}_{2}^{′}\left({N}_{2}+1\right)\right) {O}_{2}^{2}}{2 {o}_{2}^{2}}\right)$.

In some embodiments, the first information includes at least one of the following: a first indication field, where the first indication field is used to indicate a first angle parameter corresponding to the first codeword; a second indication field, where the second indication field is used to indicate a second angle parameter corresponding to the first codeword; a third indication field, where the third indication field is used to indicate a first distance parameter corresponding to the first codeword; a fourth indication field, where the fourth indication field is used to indicate a second distance parameter corresponding to the first codeword.

In some embodiments, the first indication field includes at least $\left⌈{log}_{2} {N}_{1}{O}_{1}\right⌉$ bits; the second indication field includes at least $\left⌈{log}_{2} {N}_{2}{O}_{2}\right⌉$ bits; the third indication field includes at least $\left⌈{log}_{2}\left⌈\frac{2 \sqrt{2}}{3}\left({N}_{3}{O}_{3}-1\right)+1\right⌉\right⌉$ bits; and the fourth indication field includes at least $\left⌈{log}_{2}\left⌈\frac{2 \sqrt{2}}{3}\left({N}_{4}{O}_{4}-1\right)+1\right⌉\right⌉$ bits.

In some embodiments, the first indication field includes at least $\left⌈{log}_{2}\left⌈\frac{2 \sqrt{2}}{3}\left({N}_{1}{O}_{1}-1\right)+1\right⌉\right⌉$ bits; the second indication field includes at least $\left⌈{log}_{2}\left⌈\frac{2 \sqrt{2}}{3}\left({N}_{2}{O}_{2}-1\right)+1\right⌉\right⌉$ bits; the third indication field includes at least $\left⌈{log}_{2} {N}_{3}{O}_{3}\right⌉$ bits; and the fourth indication field includes at least $\left⌈{log}_{2} {N}_{4}{O}_{4}\right⌉$ bits.

In some embodiments, the first codebook is used for single-polarization single-layer transmission; or,
the first codebook is used for dual-polarization multi-layer transmission, and the first codebook is constructed based on an angle parameter, a distance parameter and a co-phase coefficient.

In some embodiments, the method further includes: sending, by the terminal, second information to the network device, where the second information is used to indicate a co-phase coefficient corresponding to the first codeword.

In some embodiments, the co-phase coefficient includes at least one of: binary phase shift keying (BPSK), quadrature phase shift keying (QPSK), and 8 phase shift keying (8-PSK).

FIG. 4A is a schematic flowchart illustrating a communication method according to an embodiment of the present disclosure. As shown in FIG. 4A, an embodiment of the present disclosure involves a communication method (network device side), and the method includes:
In step S4101, first information is obtained.

For optional implementations of step S4101, reference may be made to the optional implementations of step S2101 in FIG. 2A and other relevant parts of the embodiments related to FIG. 2A, which will not be repeated herein.

In some embodiments, the network device receives first information sent by the terminal, but is not limited thereto; it may also receive first information sent by other entities.

In some embodiments, the network device obtains the first information as defined by the protocol.

In some embodiments, the network device obtains the first information from the upper layer(s).

In some embodiments, the network device performs processing to obtain the first information.

In step S4102, second information is obtained.

For optional implementations of step S4102, reference may be made to the optional implementations of step S2101 in FIG. 2A and other relevant parts of the embodiments related to FIG. 2A, which will not be repeated herein.

In some embodiments, the network device receives second information sent by the terminal, but is not limited thereto; it may also receive second information sent by other entities.

In some embodiments, the network device obtains second information as defined by the protocol.

In some embodiments, the network device obtains second information from the upper layer(s).

In some embodiments, the network device performs processing to obtain the second information.

In some embodiments, step S 4102 is omitted, and the terminal autonomously implements the function indicated by the second information, or the above function is default.

The communication method involved in the embodiments of the present disclosure may include at least one of step S4101 to step S4102. For example, step S4101 may be implemented as a standalone embodiment, step S4102 may be implemented as a standalone embodiment, but are not limited thereto.

In some embodiments, steps S4101 and S4102 may be performed in an alternate order or simultaneously.

In some embodiments, step S4101 is optional, and one or more of these steps may be omitted or substituted in different embodiments.

In some embodiments, step S4102 is optional, and one or more of these steps may be omitted or substituted in different embodiments.

FIG. 4B is a schematic flowchart illustrating a communication method according to an embodiment of the present disclosure. As shown in FIG. 4B, an embodiment of the present disclosure involves a communication method (network device side), and the method includes:
In step S4201, first information is obtained.

For optional implementations of step S4201, reference may be made to the optional implementations of step S2101 in FIG. 2A and step S4101 in FIG. 4A, as well as other relevant parts of the embodiments corresponding to FIG. 2A, which will not be repeated herein.

In some embodiments, the network device receives the first information sent by the terminal. The first information is used to indicate a first codeword, which is a codeword in a first codebook. The first codebook is constructed based on an angle parameter set and a distance parameter set, and is used when the terminal is located in the near-field region of a first antenna array. The first antenna array is the antenna array adopted by the network device to transmit wireless signals to the terminal.

In some embodiments, the first antenna array is one of: a uniform linear array; or a uniform planar array.

In some embodiments, the first antenna array includes *N*₁ antenna ports in a horizontal dimension and *N*₂ antenna ports in a vertical dimension, where *N*₁ is greater than or equal to 1, and *N*₂ is greater than or equal to 1.

In some embodiments, an angle parameter includes: at least one first angle parameter, where the first angle parameter is obtained by quantifying a horizontal-dimension angle domain in the near-field region according to the number of antenna ports *N*₁ in the horizontal dimension and an oversampling factor *O*₁ of the horizontal-dimension angle domain; and/or, at least one second angle parameter, where the second angle parameter is obtained by quantifying a vertical-dimension angle domain in the near-field region according to the number of antenna ports *N*₂ in the vertical dimension and an oversampling factor *O*₂ of the vertical-dimension angle domain.

The distance parameter includes: at least one first distance parameter, where the first distance parameter is obtained by quantifying a horizontal-dimension distance domain in the near-field region according to the number of sampling points *N*₃ in the horizontal dimension and an oversampling factor *O*₃ of the horizontal-dimension distance domain; and/or, at least one second distance parameter, wherein the second distance parameter is obtained by quantifying a vertical-dimension distance domain in the near-field region according to the number of sampling points *N*₄ in the vertical dimension and an oversampling factor *O*₄ of the vertical-dimension distance domain.

In some embodiments, multiple first distance parameters are distributed in K first distance parameter subsets, and quantization offsets of first angle parameters corresponding to the first distance parameters distributed in different first distance parameter subsets are different; and/or, multiple second distance parameters are distributed in K second distance parameter subsets, and quantization offsets of second angle parameters corresponding to the second distance parameters distributed in different second distance parameter subsets are different.

In some embodiments, a quantization offset of a first angle parameter corresponding to a first distance parameter in a first distance parameter subset with index k is $\frac{k}{K}$, and the first angle parameter corresponding to the first distance parameter in the first distance parameter subset with index *k* satisfy $l ∈ \left\{\frac{k}{K},1+\frac{k}{K},⋯,{N}_{1}{O}_{1}-1+\frac{k}{K}\right\}$; and/or, a quantization offset of a second angle parameter corresponding to a second distance parameter in a second distance parameter subset with index *k* is $\frac{k}{K}$, and the second angle parameter corresponding to the second distance parameter in the second distance parameter subset with index *k* satisfy $m ∈ \left\{\frac{k}{K},1+\frac{k}{K},⋯,{N}_{2}{O}_{2}-1+\frac{k}{K}\right\}$; where 0 ≤ *k* ≤ *K* -1, and *k* is an integer.

In some embodiments, *K* =2, the first distance parameter ${o}_{1} ∈ \left\{1, 2, ⋯, \left⌈\frac{2 \sqrt{2}}{3}\left({N}_{3}{O}_{3}-1\right)+1\right⌉\right\}$; and/or, the second distance parameter ${o}_{2} ∈ \left\{1, 2, ⋯, \left⌈\frac{2 \sqrt{2}}{3}\left({N}_{4}{O}_{4}-1\right)+1\right⌉\right\}$.

In some embodiments, a basis vector of the first codebook is a Kronecker product of a first basis vector in the horizontal dimension and a second basis vector in the vertical dimension; an ${n}_{1}^{′}$-th element ${ν}_{{n}_{1}^{′}}$ in the first basis vector *v* is: ${ν}_{{n}_{1}^{′}} = exp \left(j\frac{2 π}{λ}\left(\frac{2 {ln}_{1}^{′} {d}_{x}}{{N}_{1} {O}_{1}}-\frac{\left({\left({n}_{1}^{′}\right)}^{2}-{n}_{1}^{′}\left({N}_{1}+1\right)\right) {d}_{x}^{2} λ {\left⌈\frac{2 \sqrt{2}}{3}\left({N}_{3}{O}_{3}-1\right)+1\right⌉}^{2}}{4 {o}_{1}^{2} {D}_{x}^{2}}\right)\right)$; and/or an ${n}_{2}^{′}$-th element ${u}_{{n}_{2}^{′}}$ in the second basis vector *u* is: ${u}_{{n}_{2}^{′}} = exp \left(j\frac{2 π}{λ}\left(\frac{2 {mn}_{2}^{′} {d}_{z}}{{N}_{2} {O}_{2}}-\frac{\left({\left({n}_{2}^{′}\right)}^{2}-{n}_{2}^{′}\left({N}_{2}+1\right)\right) {d}_{z}^{2} λ {\left⌈\frac{2 \sqrt{2}}{3}\left({N}_{4}{O}_{4}-1\right)+1\right⌉}^{2}}{4 {o}_{2}^{2} {D}_{z}^{2}}\right)\right)$; where *j* is an imaginary unit, *λ* represents a wavelength of wireless signal, *dₓ* represents a horizontal-dimension antenna spacing of the first antenna array, *Dₓ* represents a horizontal-dimension length of the first antenna array, *d_{z}* represents a vertical-dimension antenna spacing of the first antenna array, and *D_{z}* represents a vertical-dimension length of the first antenna array.

In some embodiments, ${d}_{x} = \frac{λ}{2} , {D}_{x} = {N}_{1} {d}_{x} = {N}_{1} \frac{λ}{2}$, *N*₁ = *N*₃ and *O*₁ = *O*₃, the ${n}_{1}^{′}$- th element ${ν}_{{n}_{1}^{′}}$ in the first basis vector *v* is: ${ν}_{{n}_{1}^{′}} = exp \left(\frac{j 2 {πln}_{1}^{′}}{{N}_{1} {O}_{1}}-\frac{jπ \left({\left({n}_{1}^{′}\right)}^{2}-{n}_{1}^{′}\left({N}_{1}+1\right)\right) {\left⌈\frac{2 \sqrt{2}}{3}\left({N}_{1}{O}_{1}-1\right)+1\right⌉}^{2}}{2 {o}_{1}^{2} {N}_{1}^{2}}\right)$; and/or, ${d}_{z} = \frac{λ}{2} , {D}_{z} = {N}_{2} {d}_{z} = {N}_{2} \frac{λ}{2}$, *N*₂ = *N*₄ and *O*₂ = *O*₄ , the ${n}_{2}^{′}$ -th element ${u}_{{n}_{2}^{′}}$ in the second basis vector *u* is: ${u}_{{n}_{2}^{′}} = exp \left(\frac{j 2 {πmn}_{2}^{′}}{{N}_{2} {O}_{2}}-\frac{jπ \left({\left({n}_{2}^{′}\right)}^{2}-{n}_{2}^{′}\left({N}_{2}+1\right)\right) {\left⌈\frac{2 \sqrt{2}}{3}\left({N}_{2}{O}_{2}-1\right)+1\right⌉}^{2}}{2 {o}_{2}^{2} {N}_{2}^{2}}\right)$.

In some embodiments, multiple first angle parameters are distributed in *K* first angle parameter subsets, and quantization offsets of first distance parameters corresponding to the first angle parameters distributed in different first angle parameter subsets are different; and/or,
multiple second angle parameters are distributed in *K* second angle parameter subsets, and quantization offsets of second distance parameters corresponding to the second angle parameters distributed in different second angle parameter subsets are different.

In some embodiments, a quantization offset of a first distance parameter corresponding to a first angle parameter in a first angle parameter subset with index k is $\frac{k}{K}$, and the first distance parameter corresponding to the first angle parameter in the first angle parameter subset with index *k* satisfy ${o}_{1} ∈ \left\{\frac{k}{K},1+\frac{k}{K},⋯,{N}_{3}{O}_{3}-1+\frac{k}{K}\right\}$; and/or, a quantization offset of a second distance parameter corresponding to a second angle parameter in a second angle parameter subset with index *k* is $\frac{k}{K}$, and the second distance parameters corresponding to the second angle parameter in the second angle parameter subset with index *k* satisfy ${o}_{2} ∈ \left\{\frac{k}{K},1+\frac{k}{K},⋯,{N}_{4}{O}_{4}-1+\frac{k}{K}\right\}$; where 0<*k*≤*K*, and *k* is an integer.

In some embodiments, *K*=2, the first angle parameter $l ∈ \left\{0, 1, 2, ⋯, \left⌈\frac{2 \sqrt{2}}{3}\left({N}_{1}{O}_{1}-1\right)\right⌉\right\}$; and/or, the second angle parameter $m ∈ \left\{0, 1, 2, ⋯, \left⌈\frac{2 \sqrt{2}}{3}\left({N}_{2}{O}_{2}-1\right)\right⌉\right\}$.

In some embodiments, an ${n}_{1}^{′}$-th element ${ν}_{{n}_{1}^{′}}$ in the first basis vector *v* is: ${ν}_{{n}_{1}^{′}} = exp \left(j\frac{2 π}{λ}\left(\frac{2 {ln}_{1}^{′} {d}_{x}}{\left⌈\frac{2 \sqrt{2}}{3}\left({N}_{1}{O}_{1}-1\right)+1\right⌉}-\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)\right)$; and/or, an ${n}_{2}^{′}$-th element ${u}_{{n}_{2}^{′}}$ in the second basis vector *u* is: ${u}_{{n}_{2}^{′}} = exp \left(j\frac{2 π}{λ}\left(\frac{2 {mn}_{2}^{′} {d}_{z}}{\left⌈\frac{2 \sqrt{2}}{3}\left({N}_{2}{O}_{2}-1\right)+1\right⌉}-\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)\right)$;
where *j* is an imaginary unit, *λ* represents a wavelength of wireless signal, *dₓ* represents a horizontal-dimension antenna spacing of the first antenna array, *Dₓ* represents a horizontal-dimension length of the first antenna array, *d_{z}* represents a vertical-dimension antenna spacing of the first antenna array, and *D_{z}* represents a vertical-dimension length of the first antenna array.

In some embodiments, ${d}_{x} = \frac{λ}{2} , {D}_{x} = {N}_{1} {d}_{x} = {N}_{1} \frac{λ}{2}$, *N*₁ = *N*₃ and *O*₁ = *O*₃, the ${n}_{1}^{′}$- th element ${ν}_{{n}_{1}^{′}}$ in the first basis vector *v* is: ${ν}_{{n}_{1}^{′}} = exp \left(\frac{j 2 {πln}_{1}^{′}}{\left⌈\frac{2 \sqrt{2}}{3}\left({N}_{1}{O}_{1}-1\right)+1\right⌉}-\frac{jπ \left({\left({n}_{1}^{′}\right)}^{2}-{n}_{1}^{′}\left({N}_{1}+1\right)\right) {O}_{1}^{2}}{2 {o}_{1}^{2}}\right)$; and/or, ${d}_{z} = \frac{λ}{2} , {D}_{z} = {N}_{2} {d}_{z} = {N}_{2} \frac{λ}{2}$*, N*₂ *= N*₄ and *O*₂ = *O*₄ , the ${n}_{2}^{′}$ -th element ${u}_{{n}_{2}^{′}}$ in the second basis vector *u* is: ${u}_{{n}_{2}^{′}} = exp \left(\frac{j 2 {πmn}_{2}^{′}}{\left⌈\frac{2 \sqrt{2}}{3}\left({N}_{2}{O}_{2}-1\right)+1\right⌉}-\frac{jπ \left({\left({n}_{2}^{′}\right)}^{2}-{n}_{2}^{′}\left({N}_{2}+1\right)\right) {O}_{2}^{2}}{2 {o}_{2}^{2}}\right)$.

In some embodiments, the first information includes at least one of the following:
a first indication field, where the first indication field is used to indicate a first angle parameter corresponding to the first codeword; a second indication field, where the second indication field is used to indicate a second angle parameter corresponding to the first codeword; a third indication field, where the third indication field is used to indicate a first distance parameter corresponding to the first codeword; a fourth indication field, where the fourth indication field is used to indicate a second distance parameter corresponding to the first codeword.

In some embodiments, the first indication field includes at least $\left⌈{log}_{2} {N}_{1}{O}_{1}\right⌉$ bits; the second indication field includes at least $\left⌈{log}_{2} {N}_{2}{O}_{2}\right⌉$ bits; the third indication field includes at least $\left⌈{log}_{2}\left⌈\frac{2 \sqrt{2}}{3}\left({N}_{3}{O}_{3}-1\right)+1\right⌉\right⌉$ bits; and the fourth indication field includes at least $\left⌈{log}_{2}\left⌈\frac{2 \sqrt{2}}{3}\left({N}_{4}{O}_{4}-1\right)+1\right⌉\right⌉$ bits.

In some embodiments, the first indication field comprises at least $\left⌈{log}_{2}\left⌈\frac{2 \sqrt{2}}{3}\left({N}_{1}{O}_{1}-1\right)+1\right⌉\right⌉$ bits; the second indication field comprises at least $\left⌈{log}_{2}\left⌈\frac{2 \sqrt{2}}{3}\left({N}_{2}{O}_{2}-1\right)+1\right⌉\right⌉$ bits; the third indication field comprises at least $\left⌈{log}_{2} {N}_{3}{O}_{3}\right⌉$ bits; and the fourth indication field comprises at least $\left⌈{log}_{2} {N}_{4}{O}_{4}\right⌉$ bits.

In some embodiments, the first codebook is used for single-polarization single-layer transmission; or, the first codebook is used for dual-polarization multi-layer transmission, and the first codebook is constructed based on an angle parameter, a distance parameter and a co-phase coefficient.

In some embodiments, the method further includes: receiving, by the network device, second information sent by the terminal, where the second information is used to indicate a co-phase coefficient corresponding to the first codeword.

In some embodiments, the co-phase coefficient includes at least one of the following: binary phase shift keying (BPSK), quadrature phase shift keying (QPSK), and 8 phase shift keying (8-PSK).

FIG. 5 is a schematic interaction diagram illustrating a communication method according to an embodiment of the present disclosure. As shown in FIG. 5, an embodiment of the present disclosure relates to a communication method and the method includes the following steps.

In step S5101, the terminal determines a first codeword in a first codebook.

For optional implementations of step S5101, reference may be made to the optional implementations of step S2101 in FIG. 2A, step S3101 in FIG. 3A, step S3201 in FIG. 3B, as well as other relevant parts of the embodiments corresponding to FIG. 2A, FIG. 3A, FIG. 3B, FIG. 4A and FIG. 4B, which will not be repeated herein.

In step S5102, the terminal sends first information to a network device.

For optional implementations of step S5102, reference may be made to the optional implementations of step S2102 in FIG. 2A, step S3102 in FIG. 3A, step S3202 in FIG. 3B, step S4101 in FIG. 4A, step S4201 in FIG. 4B, as well as other relevant parts of the embodiments corresponding to FIG. 2A, FIG. 3A, FIG. 3B, FIG. 4A and FIG. 4B, which will not be repeated herein.

In some embodiments, the foregoing method may incorporate the methods described in the foregoing embodiments on the terminal side and the network device side, which will not be repeated herein.

FIG. 6 is a schematic interaction diagram illustrating a communication method according to an embodiment of the present disclosure. As shown in FIG. 6, an embodiment of the present disclosure relates to a communication method and the method includes the following steps.

In step S6101, the terminal is located in a near-field region of a first antenna array, and determines a first codeword from a first codebook.

In some embodiments, the first codebook is a codebook used when the terminal is in the near-field region of the first antenna array, and the first antenna array is the antenna array adopted by the network device to transmit wireless signals to the terminal.

In some embodiments, the first antenna array is a uniform linear array.

For a uniform linear array, in some embodiments, the first codebook may be represented as a precoding vector *v*, and the ${n}_{1}^{′}$-th element of the precoding vector *v* can be calculated as: ${ν}_{{n}_{1}^{′}} = exp \left(j\frac{2 π}{λ}⋅\frac{2 {ln}_{1}^{′} {d}_{x}}{{N}_{1} {O}_{1}}\right) \times exp \left(-j\frac{2 π}{λ}⋅\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)$

*N*₁ and *N*₃ respectively represent the number of sampling points in the horizontal-dimension angle domain and horizontal-dimension distance domain; *O*₁ and *O*₃ respectively represent the oversampling factors of the horizontal-dimension angle domain and horizontal-dimension distance domain; *l* = 0,1, ··· *, N*₁*O*₁ -1, and *o*₁ = 1, 2,· ·· , *N*₃*O*₃*.*

In this case, the indication information of the precoding matrix includes *l* = 0,1, ··· , *N*₁*O*₁ -1 and *o*₁ = 1, 2, ··· *, N*₃*O*₃ (together with co-phase coefficients). To reduce the quantity of precoding matrices and potentially cut down bit overhead, the angle domain may be divided into multiple subsets, and different quantization starting points are adopted for the distance domain within different angle-domain subsets. Alternatively, the distance domain may be divided into multiple subsets, and different quantization starting points are adopted for the angle domain within different distance-domain subsets. For example, the following indication scheme can be adopted: when mod (*o*₁, *K) = k* , $l = \frac{k}{K} , 1 + \frac{k}{K} , ⋯ , {N}_{1} {O}_{1} - 1 + \frac{k}{K}$, where the integer K is a preconfigured parameter, 0 ≤ *k* ≤ *K* -1 and *k* is an integer; the specific value range of index *o*₁ can be calculated separately according to different scenarios.

In some embodiments, K may be configured via any one of the following manners: configured by RRC; indicated by MAC-CE; indicated by control signaling. For example, the value range of K may be [1, 4], and in this case, the value of K can be indicated by 2 bits. Optionally, the value range of K or the value of K may also be predefined by the protocol, for example, defined as 2.

In some embodiments, with reference to FIG. 2B and FIG. 2C, the circles in the figures may represent quantization points, and each quantization point may correspond to one precoding matrix or one codeword. In FIG. 2B, a "rectangular quantization" scheme is adopted, that is, the polarization domain is quantized in rectangular regions. Any codeword can be used to quantize channels within its corresponding rectangular region, which means the coverage range of any precoding matrix is a rectangle. FIG. 2C adopts a "hexagonal quantization" scheme, that is, the coverage range of any precoding matrix is a rectangle.

Assuming that the distance-domain quantization interval under "rectangular quantization" is 2d , and the total number of quantization points is *N*₃*O*₃; the distance-domain quantization interval under "hexagonal quantization" is $\frac{3 \sqrt{2}}{2} d$, and the total number of quantization points is X. Therefore, it is only necessary to satisfy $2 d \left({N}_{3}{O}_{3}-1\right) = \frac{3 \sqrt{2}}{2} d \left(X-1\right)$ to ensure that the distance from any codeword to the center under hexagonal quantization is consistent with that under rectangular quantization. To guarantee that the performance of hexagonal quantization is better than or equal to that of rectangular quantization, it is only necessary to satisfy $X = \left⌈\frac{2 \sqrt{2}}{3}\left({N}_{3}{O}_{3}-1\right)+1\right⌉$.

In this case, the feedback coefficient can be designed into the following two cases. In case 1: when ${o}_{1} ∈ \left\{1, 2, ⋯, \left⌈\frac{2 \sqrt{2}}{3}\left({N}_{3}{O}_{3}-1\right)+1\right⌉\right\}$ and *o*₁ is an odd number, *l* = 0,1,··· , *N*₁*O*₁ -1; when ${o}_{1} ∈ \left\{1, 2, ⋯, \left⌈\frac{2 \sqrt{2}}{3}\left({N}_{3}{O}_{3}-1\right)+1\right⌉\right\}$ and *o*₁ is an even number, $l = \frac{1}{2} , \frac{3}{2} , ⋯ , {N}_{1} {O}_{1} - \frac{3}{2}$. In case 2: when ${o}_{1} ∈ \left\{1, 2, ⋯, \left⌈\frac{2 \sqrt{2}}{3}\left({N}_{3}{O}_{3}-1\right)+1\right⌉\right\}$ and *o*₁ is an odd number, $l = \frac{1}{2} , \frac{3}{2} , ⋯ , {N}_{1} {O}_{1} - \frac{3}{2}$; when ${o}_{1} ∈ \left\{1, 2, ⋯, \left⌈\frac{2 \sqrt{2}}{3}\left({N}_{3}{O}_{3}-1\right)+1\right⌉\right\}$ and *o*₁ is an even number, *l* = 0,1,··· , *N*₁*O*₁ -1.

In this case, the precoding matrix corresponding to the first codebook can be represented as:
${ν}_{{n}_{1}^{′}} = exp \left(j\frac{2 π}{λ}\left(\frac{2 {ln}_{1}^{′} {d}_{x}}{{N}_{1} {O}_{1}}-\frac{\left({\left({n}_{1}^{′}\right)}^{2}-{n}_{1}^{′}\left({N}_{1}+1\right)\right) {d}_{x}^{2} λ {\left⌈\frac{2 \sqrt{2}}{3}\left({N}_{3}{O}_{3}-1\right)+1\right⌉}^{2}}{4 {o}_{1}^{2} {D}_{x}^{2}}\right)\right) .$

Assuming the antenna spacing in the horizontal dimension of the antenna array satisfies ${d}_{x} = \frac{λ}{2}$ and the length of the antenna array in the horizontal dimension satisfies ${D}_{x} = {N}_{1} {d}_{x} = {N}_{1} \frac{λ}{2}$, and when *N*₁ = *N*₃ and *O*₁ = *O*₃, the precoding vector can be calculated as: ${ν}_{{n}_{1}^{′}} = exp \left(\frac{j 2 {πln}_{1}^{′}}{{N}_{1} {O}_{1}}-\frac{jπ \left({\left({n}_{1}^{′}\right)}^{2}-{n}_{1}^{′}\left({N}_{1}+1\right)\right) {\left⌈\frac{2 \sqrt{2}}{3}\left({N}_{1}{O}_{1}-1\right)+1\right⌉}^{2}}{2 {o}_{1}^{2} {N}_{1}^{2}}\right)$. When *N*₃ = *N*₁ = 64 and *O*₃ = *O*₁ = 4, then $\left⌈\frac{2 \sqrt{2}}{3}\left({N}_{3}{O}_{3}-1\right)+1\right⌉ = 242$.

In case 1, when *o*₁ E 1, 3, ··· , 241 and *o*₁ is an odd number, *l* = 0, 1, ···, 255; when *o*₁ ∈ 2, ··· , 242 and *o*₁ is an even number, $l = \frac{1}{2} , \frac{3}{2} , ⋯ , \frac{509}{2}$. In case 2: when *o*₁ ∈ 1, 3, ··· , 241 and *o*₁ is an odd number, $l = \frac{1}{2} , \frac{3}{2} , ⋯ , \frac{509}{2}$; when *o*₁ E 2, ··· , 242 and *o*₁ is an even number, *l* = 0, 1, ···, 255.

In some embodiments, the first antenna array is a uniform planar array.

For a uniform planar array, in some embodiments, the first codebook may be expressed as *v* ⊗ *u* . The ${n}_{1}^{′}$-th element of precoding vector V and the ${n}_{2}^{′}$-th element of precoding vector *u* can be calculated as: ${ν}_{{n}_{1}^{′}} = exp \left(j\frac{2 π}{λ}⋅\frac{2 {ln}_{1}^{′} {d}_{x}}{{N}_{1} {O}_{1}}\right) \times exp \left(-j\frac{2 π}{λ}⋅\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)$; ${u}_{{n}_{2}^{′}} = exp \left(j\frac{2 π}{λ}⋅\frac{2 {mn}_{2}^{′} {d}_{z}}{{N}_{2} {O}_{2}}\right) \times exp \left(-j\frac{2 π}{λ}⋅\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)$.

*N*₁, *N*₂, *N*₃ and *N*₄ respectively represent the number of sampling points of the horizontal-dimension angle domain, vertical-dimension angle domain, horizontal-dimension distance domain and vertical-dimension distance domain; *O*₁, *O*₂, *O*₃ and *O*₄ respectively represent the oversampling factors of the horizontal-dimension angle domain, vertical-dimension angle domain, horizontal-dimension distance domain and vertical-dimension distance domain; *l* = 0, 1, ··· , *N*₁*O*₁ -1, *m* = 0, 1, ··· , *N*₂*O*₂ -1, *o*₁ = 1, 2, ··· , *N*₃*O*₃, and *o*₂ = 1, 2, ··· ,*N*₄*O*₄.

In this case, the indication information of the precoding matrix includes *l* = 0, 1, ··· , *N*₁*O*₁ -1, *m* = 0, 1, ··· , *N*₂*O*₂ -1, *o*₁ = 1, 2, ··· , *N*₃*O*₃ and *o*₂ = 1, 2, ··· , *N*₄*O*₄ (together with co-phase coefficients). To reduce the quantity of precoding matrices and potentially cut down bit overhead, the angle domain may be divided into multiple subsets, and different quantization starting points are adopted for the distance domain within different angle-domain subsets. Alternatively, the distance domain may be divided into multiple subsets, and different quantization starting points are adopted for the angle domain within different distance-domain subsets. For example, the following indication scheme can be adopted. When mod(*o*₁, *K*) = *k,* $l = \frac{k}{K} , 1 + \frac{k}{K} , ⋯ , {N}_{1} {O}_{1} - 1 + \frac{k}{K}$, where the integer K is a preconfigured parameter, 0 ≤ *k* ≤ *K* -1 and *k* is an integer; the specific value range of index *o*₁ can be calculated separately according to different scenarios. When mod(*o*₂, *K*)=*k,* $m = \frac{k}{K} , 1 + \frac{k}{K} , ⋯ , {N}_{2} {O}_{2} - 1 + \frac{k}{K}$, where the integer K is a preconfigured parameter, 0 ≤ *k* ≤ *K* -1 and *k* is an integer; the specific value range of index *o*₂ can be calculated separately according to different scenarios. The above K values for the horizontal dimension and vertical dimension may also be set to different values.

Assuming that the configuration parameter K=2, which means dividing the angle domain or distance domain into two sets. Similar to the uniform linear array model, a "hexagonal region quantization" scheme is also adopted to reduce the number of codewords. In this case, the number of quantization points for the horizontal dimension is: $X = \left⌈\frac{2 \sqrt{2}}{3}\left({N}_{3}{O}_{3}-1\right)+1\right⌉$, and the number of quantization points for the vertical region is: $Y = \left⌈\frac{2 \sqrt{2}}{3}\left({N}_{4}{O}_{4}-1\right)+1\right⌉$.

Optionally, the feedback coefficients for the horizontal dimension can be designed into the following two cases.

In case 1: when ${o}_{1} ∈ \left\{1, 2, ⋯, \left⌈\frac{2 \sqrt{2}}{3}\left({N}_{3}{O}_{3}-1\right)+1\right⌉\right\}$ and *o*₁ is an odd number, then *l* = 0, 1, ··· *, N*₁*O*₁ -1; when ${o}_{1} ∈ \left\{1, 2, ⋯, \left⌈\frac{2 \sqrt{2}}{3}\left({N}_{3}{O}_{3}-1\right)+1\right⌉\right\}$ and *o*₁ is an even number, then $l = \frac{1}{2} , \frac{3}{2} , ⋯ , {N}_{1} {O}_{1} - \frac{3}{2}$*.* In case 2: when ${o}_{1} ∈ \left\{1, 2, ⋯, \left⌈\frac{2 \sqrt{2}}{3}\left({N}_{3}{O}_{3}-1\right)+1\right⌉\right\}$ and *o*₁ is an odd number, then $l = \frac{1}{2} , \frac{3}{2} , ⋯ , {N}_{1} {O}_{1} - \frac{3}{2}$; if ${o}_{1} ∈ \left\{1, 2, ⋯, \left⌈\frac{2 \sqrt{2}}{3}\left({N}_{3}{O}_{3}-1\right)+1\right⌉\right\}$ and *o*₁ is an even number, then *l =* 0, 1, ··· , *N*₁*O*₁ -1.

Optionally, the feedback coefficients for the vertical dimension can be designed in the following two cases.

In case 1: when ${o}_{2} ∈ \left\{1, 2, ⋯, \left⌈\frac{2 \sqrt{2}}{3}\left({N}_{4}{O}_{4}-1\right)+1\right⌉\right\}$ and *o*₂ is an odd number, *m* = 0, 1, ··· , *N*₂*O*₂ -1; when ${o}_{2} ∈ \left\{1, 2, ⋯, \left⌈\frac{2 \sqrt{2}}{3}\left({N}_{4}{O}_{4}-1\right)+1\right⌉\right\}$ and is an even number, $m = \frac{1}{2} , \frac{3}{2} , ⋯ , {N}_{2} {O}_{2} - \frac{3}{2}$. In case 2: when ${o}_{2} ∈ \left\{1, 2, ⋯, \left⌈\frac{2 \sqrt{2}}{3}\left({N}_{4}{O}_{4}-1\right)+1\right⌉\right\}$ and *o*₂ is an odd number, $m = \frac{1}{2} , \frac{3}{2} , ⋯ , {N}_{2} {O}_{2} - \frac{3}{2}$; when ${o}_{2} ∈ \left\{1, 2, ⋯, \left⌈\frac{2 \sqrt{2}}{3}\left({N}_{4}{O}_{4}-1\right)+1\right⌉\right\}$ and *o*₂ is an even number, *m* = 0, 1, ··· , *N*₂*O*₂ -1.

The feedback coefficient schemes for the horizontal dimension and vertical dimension can be combined arbitrarily.

In some embodiments, the precoding matrix can be represented as:
${ν}_{{n}_{1}^{′}} = exp \left(j\frac{2 π}{λ}\left(\frac{2 {ln}_{1}^{′} {d}_{x}}{{N}_{1} {O}_{1}}-\frac{\left({\left({n}_{1}^{′}\right)}^{2}-{n}_{1}^{′}\left({N}_{1}+1\right)\right) {d}_{x}^{2} λ {\left⌈\frac{2 \sqrt{2}}{3}\left({N}_{3}{O}_{3}-1\right)+1\right⌉}^{2}}{4 {o}_{1}^{2} {D}_{x}^{2}}\right)\right) ;$${u}_{{n}_{2}^{′}} = exp \left(j\frac{2 π}{λ}\left(\frac{2 {mn}_{2}^{′} {d}_{z}}{{N}_{2} {O}_{2}}-\frac{\left({\left({n}_{2}^{′}\right)}^{2}-{n}_{2}^{′}\left({N}_{2}+1\right)\right) {d}_{z}^{2} λ {\left⌈\frac{2 \sqrt{2}}{3}\left({N}_{4}{O}_{4}-1\right)+1\right⌉}^{2}}{4 {o}_{2}^{2} {D}_{z}^{2}}\right)\right) .$

For example, assuming the antenna spacing in the horizontal and vertical dimensions of the antenna array satisfy ${d}_{x} = {d}_{z} = \frac{λ}{2}$, and the lengths in the horizontal and vertical dimensions of the antenna array respectively satisfy ${D}_{x} = {N}_{1} {d}_{x} = {N}_{1} \frac{λ}{2}$ and ${D}_{z} = {N}_{2} {d}_{z} = {N}_{2} \frac{λ}{2}$. When *N*₁ *= N*₃*, N*₂ = *N*₄, *O*₁ = *O*₃ and *O*₂ = *O*₄, the precoding vectors *v* and *u* can be calculated as:
${ν}_{{n}_{1}^{′}} = exp \left(\frac{j 2 {πln}_{1}^{′}}{{N}_{1} {O}_{1}}-\frac{jπ \left({\left({n}_{1}^{′}\right)}^{2}-{n}_{1}^{′}\left({N}_{1}+1\right)\right) {\left⌈\frac{2 \sqrt{2}}{3}\left({N}_{1}{O}_{1}-1\right)+1\right⌉}^{2}}{2 {o}_{1}^{2} {N}_{1}^{2}}\right) ;$${u}_{{n}_{2}^{′}} = exp \left(\frac{j 2 {πmn}_{2}^{′}}{{N}_{2} {O}_{2}}-\frac{jπ \left({\left({n}_{2}^{′}\right)}^{2}-{n}_{2}^{′}\left({N}_{2}+1\right)\right) {\left⌈\frac{2 \sqrt{2}}{3}\left({N}_{2}{O}_{2}-1\right)+1\right⌉}^{2}}{2 {o}_{2}^{2} {N}_{2}^{2}}\right) .$ When *N*₃ = *N*₁ =64 , *N*₄ = *N*₂ = 64*, O*₃ = *O*₁ = 4 and *O*₂ = *O*₂ =4, then $\left⌈\frac{2 \sqrt{2}}{3}\left({N}_{3}{O}_{3}-1\right)+1\right⌉ = \left⌈\frac{2 \sqrt{2}}{3}\left({N}_{4}{O}_{4}-1\right)+1\right⌉ = 242$.

In some embodiments, different feedback parameters may be indicated via the following information fields, for example:
$\left⌈{log}_{2} {N}_{1}{O}_{1}\right⌉$ bits are used to indicate *l* = 0,···*N*₁*O*₁ -1, with wideband or subband feedback adopted; $\left⌈{log}_{2} {N}_{2}{O}_{2}\right⌉$ bits are used to indicate *m =* 0, ··· *N*₂*O*₂ -1, with wideband or subband feedback adopted; $\left⌈{log}_{2}\left⌈\frac{2 \sqrt{2}}{3}\left({N}_{3}{O}_{3}-1\right)+1\right⌉\right⌉$ bits are used to indicate ${o}_{1} = 1 , ⋯ \left⌈\frac{2 \sqrt{2}}{3}\left({N}_{3}{O}_{3}-1\right)+1\right⌉$, with wideband or subband feedback adopted; $\left⌈{log}_{2}\left⌈\frac{2 \sqrt{2}}{3}\left({N}_{4}{O}_{4}-1\right)+1\right⌉\right⌉$ bits are used to indicate ${o}_{2} = 1 , ⋯ \left⌈\frac{2 \sqrt{2}}{3}\left({N}_{4}{O}_{4}-1\right)+1\right⌉$, with wideband or subband feedback adopted; 1 bit, 2 bits or 3 bits are used to indicate the co-phase coefficients, corresponding to BPSK, QPSK and 8-PSK co-phase coefficients respectively, with wideband or subband feedback adopted.

In the foregoing embodiments, the angle/distance domain may be divided into multiple subsets, and a staggered quantization scheme is adopted in different subsets to reduce the number of quantization points. Typically, when divided into two subsets, the coverage range of precoding changes from a rectangle to a hexagon. Since the distance between adjacent precoders in the polarization domain remains unchanged, there is theoretically no performance loss. Moreover, as the area of a hexagon is larger than that of a rectangle under this scheme, the total number of quantization points can be reduced, which potentially lowers bit overhead.

In the embodiments of the present disclosure, part or all of the steps and the optional implementations thereof may be arbitrarily combined with part or all of the steps in other embodiments, and may also be arbitrarily combined with the optional implementations of other embodiments.

Embodiments of the present disclosure further provide apparatuses for implementing any one of the foregoing methods. For example, an apparatus is provided, which includes units or modules configured to execute various steps performed by the terminal in any one of the foregoing methods. As another example, another apparatus is provided, which includes units or modules configured to execute various steps performed by the network device (such as an access network device, a core network function node, a core network device, etc.) in any one of the foregoing methods.

It should be understood that the division of each unit in the above apparatus is merely a division of logical functions. In actual implementation, all or part of the units may be integrated into a single physical entity, or they may be physically separated. In addition, the units in the apparatus may be implemented in the form of a processor invoking software. For example, the apparatus includes a processor, which is connected to a memory, the memory stores computer instructions, and the processor invokes the computer instructions stored in the memory to implement any one of the above methods or the functions of each unit of the above apparatus. The processor is, for example, a general-purpose processor such as a central processing unit (CPU) or a microprocessor, and the memory is a memory inside the apparatus or a memory outside the apparatus. Alternatively, the units in the apparatus may be implemented in the form of hardware circuits, and the functions of some or all units may be realized through the design of hardware circuits. The above hardware circuits may be understood as one or more processors. For example, in one implementation, the above hardware circuit is an application-specific integrated circuit (ASIC), and the functions of some or all of the above units are realized through the design of the logical relationships of components in the circuit. For another example, in another implementation, the above hardware circuit may be implemented by a programmable logic device (PLD). Taking a field programmable gate array (FPGA) as an example, it may include a large number of logic gate circuits, and the connection relationships between the logic gate circuits are configured through configuration files, thereby realizing the functions of some or all of the above units. All units of the above apparatus may be entirely implemented in the form of the processor invoking software, or entirely in the form of hardware circuits, or part of the units in the form of the processor invoking software and the remaining part in the form of hardware circuits.

In the embodiments of the present disclosure, a processor is a type of circuit with signal processing capability. In one implementation, the processor may be a circuit capable of reading and executing instructions, such as a central processing unit (CPU), a microprocessor, a graphics processing unit (GPU) (which can be understood as a type of microprocessor), or a digital signal processor (DSP), etc. In another implementation, the processor may realize certain functions through the logical relationships of a hardware circuit, where the logical relationships of the aforementioned hardware circuit are either fixed or reconfigurable. For example, the processor is a hardware circuit implemented by an application-specific integrated circuit (ASIC) or a programmable logic device (PLD), such as a field-programmable gate array (FPGA). In a reconfigurable hardware circuit, the process in which the processor loads a configuration file to realize the configuration of the hardware circuit can be understood as the process in which the processor loads instructions to realize the functions of some or all of the aforementioned units. In addition, the processor may also be a hardware circuit designed for artificial intelligence, which can be understood as a type of ASIC, such as a neural network processing unit (NPU), a tensor processing unit (TPU), or a deep learning processing unit (DPU), etc.

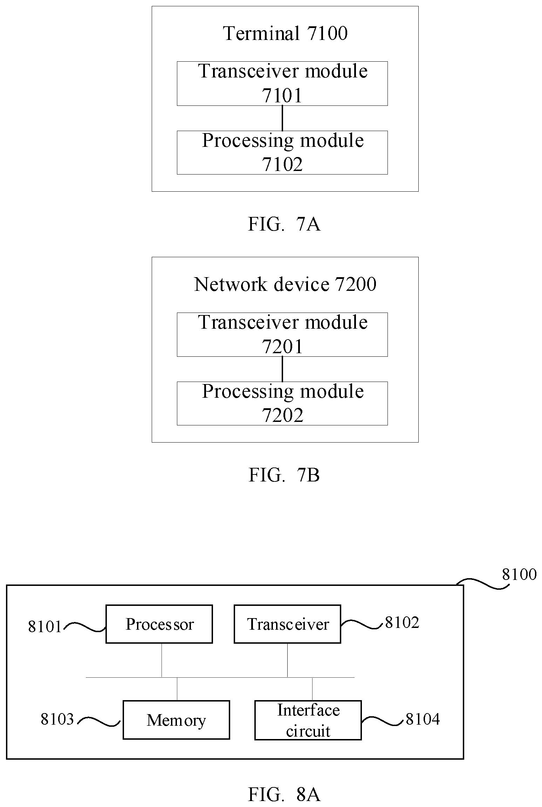

FIG. 7A is a schematic structural diagram of a terminal provided by an embodiment of the present disclosure. As shown in FIG. 7A, the terminal 7100 may include at least one of a transceiver module 7101, a processing module 7102, etc. In some embodiments, the processing module 7102 is configured to determine a first codeword in a first codebook. The first codebook is constructed based on an angle parameter set and a distance parameter set, and the first codebook is a codebook used when the terminal is located in the near-field region of a first antenna array, where the first antenna array is the antenna array adopted by the network device to transmit wireless signals to the terminal. The transceiving module 7101 is configured to send first information to the network device, and the first information is used to indicate the first codeword. Optionally, the transceiving module 7101 is configured to perform at least one of communication steps such as transmission and/or reception executed by the terminal in any one of the foregoing methods (for example, step S2102, step S2103, but not limited thereto), which will not be repeated herein. Optionally, the processing module 7102 is configured to perform at least one of other steps executed by the terminal in any one of the foregoing methods (for example, step S2101), which will not be repeated herein.

FIG. 7B is a schematic structural diagram of a network device provided by an embodiment of the present disclosure. As shown in FIG. 7B, the network device 7200 may include at least one of a transceiver module 7201, a processing module 7202, etc. In some embodiments, the transceiving module 7201 is configured to receive first information sent by the terminal. The first information is used to indicate a first codeword, the first codeword belongs to a first codebook, the first codebook is constructed based on an angle parameter set and a distance parameter set, and the first codebook is a codebook used when the terminal is located in the near-field region of a first antenna array, where the first antenna array is the antenna array adopted by the network device to transmit wireless signals to the terminal. Optionally, the transceiver module 7201 is configured to perform at least one of communication steps such as transmission and/or reception executed by the network device in any one of the foregoing methods (for example, step S2102, step S2103, but not limited thereto), which will not be repeated herein. Optionally, the processing module 7202 is configured to perform at least one of other steps executed by the network device in any one of the foregoing methods, which will not be repeated herein.

In some embodiments, the transceiver module may include a sending module and/or a receiving module, and the sending module and the receiving module may be separated or integrated. Optionally, the transceiver module may be interchangeable with a transceiver.

In some embodiments, the processing module may be a single module or include multiple sub-modules. Optionally, the multiple sub-modules respectively perform all or part of the steps required to be executed by the processing module. Optionally, the processing module may be interchangeable with a processor.

FIG. 8A is a schematic structural diagram of a communication device 8100 provided by an embodiment of the present disclosure. The communication device 8100 may be a network device (such as an access network device, a core network device, etc.), a terminal (such as user equipment, etc.), a chip, a chip system, or a processor that supports a network device to implement any one of the foregoing methods, or a chip, a chip system, or a processor that supports a terminal to implement any one of the foregoing methods. The communication device 8100 may be configured to implement the methods described in the foregoing method embodiments, and reference may be made to the descriptions in the foregoing method embodiments for details.

As shown in FIG. 8A, the communication device 8100 includes one or more processors 8101. The processor 8101 may be a general-purpose processor, a dedicated processor, etc., such as a baseband processor or a central processing unit. The baseband processor may be configured to process communication protocols and communication data; the central processing unit may be configured to control a communication apparatus (e.g., a base station, a baseband chip, a terminal device, a terminal device chip, a DU or a CU, etc.), execute programs, and process program data. Optionally, the communication device 8100 is configured to perform any one of the foregoing methods. Optionally, the one or more processors 8101 are configured to call instructions to cause the communication device 8100 to perform any one of the foregoing methods.

In some embodiments, the communication device 8100 further includes one or more transceivers 8102. When the communication device 8100 includes one or more transceivers 8102, the transceiver 8102 performs at least one of communication steps such as transmission and/or reception in the foregoing methods (for example, step S2102 and step S2103, but is not limited thereto), and the processor 8101 performs at least one of the other steps (for example, step S2101, but is not limited thereto). In optional embodiments, the transceiver may include a receiver and/or a transmitter, and the receiver and the transmitter may be separated or integrated. Optionally, terms including transceiver, transceiving unit, transceiver machine, transceiver circuit, interface circuit and interface may be used interchangeably; terms including transmitter, transmitting unit, transmitting machine and transmitting circuit may be used interchangeably; terms including receiver, receiving unit, receiving machine and receiving circuit may be used interchangeably.

In some embodiments, the communication device 8100 further includes one or more memories 8103 configured to store data. Optionally, all or part of the memories 8103 may also be located outside the communication device 8100. In optional embodiments, the communication device 8100 may include one or more interface circuits 8104. Optionally, the interface circuit 8104 is connected to the memory 8103. The interface circuit 8104 may be configured to receive data from the memory 8103 or other apparatuses, and may be configured to transmit data to the memory 8103 or other apparatuses. For example, the interface circuit 8104 may read data stored in the memory 8103 and transmit the data to the processor 8101.

The communication device 8100 described in the above embodiments may be a network device or a terminal, but the scope of the communication device 8100 defined in the present disclosure is not limited thereto, nor is its structure restricted by FIG. 8A. The communication device may be a standalone device or a part of a larger device. For example, the communication device may be: (1) a standalone integrated circuit (IC), or chip, or chip system or subsystem; (2) a collection of one or more ICs, optionally, the above IC collection may also include storage components for storing data and computer programs; (3) an ASIC, such as a Modem; (4) a module that can be embedded in other devices; (5) a receiver, a terminal device, a smart terminal device, a cellular phone, a wireless device, a handset, a mobile unit, a vehicle-mounted device, a network device, a cloud device, an artificial intelligence device, etc.; (6) others, etc.

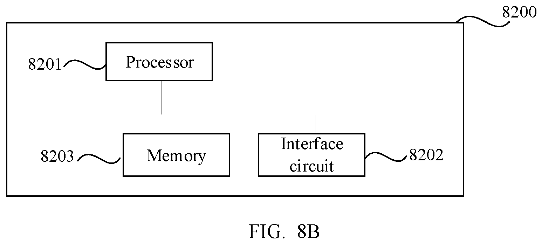

FIG. 8B is a schematic structural diagram of a chip 8200 according to an embodiment of the present disclosure. For the case where the communication device 8100 is a chip or a chip system, reference may be made to the schematic structural diagram of the chip 8200 shown in FIG. 8B, but is not limited thereto.

The chip 8200 includes one or more processors 8201. The chip 8200 is configured to perform any one of the foregoing methods.

In some embodiments, the chip 8200 further includes one or more interface circuits 8202. Optionally, terms such as interface circuit, interface, transmit-receive pin may be used interchangeably. In some embodiments, the chip 8200 further includes one or more memories 8203 for storing data. Optionally, all or part of the memories 8203 may be arranged outside the chip 8200. Optionally, the interface circuit 8202 is connected to the memory 8203. The interface circuit 8202 may be configured to receive data from the memory 8203 or other apparatuses, and may be configured to transmit data to the memory 8203 or other apparatuses. For example, the interface circuit 8202 may read data stored in the memory 8203 and transmit the data to the processor 8201.

In some embodiments, the interface circuit 8202 performs at least one of communication steps such as transmission and/or reception in the foregoing methods (for example, step S2102 and step S2103, but not limited thereto). The interface circuit 8202 performing communication steps such as transmission and/or reception in the foregoing methods means, for example: the interface circuit 8202 implements data interaction among the processor 8201, the chip 8200, the memory 8203 or a transceiver device. In some embodiments, the processor 8201 performs at least one of the other steps (for example, step S2101, but not limited thereto).

The modules and/or devices described in the embodiments such as virtual apparatuses, physical apparatuses and chips may be arbitrarily combined or separated according to actual scenarios. Optionally, part or all of the steps may also be executed collaboratively by multiple modules and/or devices, which is not limited herein.

The present disclosure further provides a storage medium storing instructions thereon. When the instructions run on the communication device 8100, the communication device 8100 is caused to perform any one of the foregoing methods. Optionally, the storage medium is an electronic storage medium. Optionally, the storage medium is a computer-readable storage medium, but is not limited thereto, and may alternatively be a storage medium readable by other apparatuses. Optionally, the storage medium may be a non-transitory storage medium, but is not limited thereto, and may also be a transitory storage medium.

The present disclosure further provides a program product. When executed by the communication device 8100, the program product causes the communication device 8100 to perform any one of the foregoing methods. Optionally, the program product is a computer program product.

The present disclosure further provides a computer program which, when running on a computer, causes the computer to execute any one of the foregoing methods.

## Claims

1. A communication method, comprising:
determining, by a terminal, a first codeword in a first codebook, wherein the first codebook is obtained based on an angle parameter set and a distance parameter set, and the first codebook is a codebook used when the terminal is located in a near-field region of a first antenna array; and
sending, by the terminal, first information to a network device, wherein the first information is used to indicate the first codeword.

2. The method according to claim 1, wherein the first antenna array is one of: a uniform linear array, or a uniform planar array.

3. The method according to any one of claims 1-2, wherein the first antenna array comprises *N*₁ antenna ports in a horizontal dimension and *N*₂ antenna ports in a vertical dimension, wherein *N*₁ is greater than or equal to 1, and *N*₂ is greater than or equal to 1.

4. The method according to any one of claims 1-3, wherein
an angle parameter comprises:
at least one first angle parameter, wherein the first angle parameter is obtained by quantifying a horizontal-dimension angle domain in the near-field region according to the number of antenna ports *N*₁ in the horizontal dimension and an oversampling factor *O*₁ of the horizontal-dimension angle domain; and/or,
at least one second angle parameter, wherein the second angle parameter is obtained by quantifying a vertical-dimension angle domain in the near-field region according to the number of antenna ports *N*₂ in the vertical dimension and an oversampling factor *O*₂ of the vertical-dimension angle domain;
a distance parameter comprises:
at least one first distance parameter, wherein the first distance parameter is obtained by quantifying a horizontal-dimension distance domain in the near-field region according to the number of sampling points *N*₃ in the horizontal dimension and an oversampling factor *O*₃ of the horizontal-dimension distance domain; and/or,
at least one second distance parameter, wherein the second distance parameter is obtained by quantifying a vertical-dimension distance domain in the near-field region according to the number of sampling points *N*₄ in the vertical dimension and an oversampling factor *O*₄ of the vertical-dimension distance domain.

5. The method according to claim 4, wherein
multiple first distance parameters are distributed in K first distance parameter subsets, and quantization offsets of first angle parameters corresponding to the first distance parameters distributed in different first distance parameter subsets are different; and/or,
multiple second distance parameters are distributed in K second distance parameter subsets, and quantization offsets of second angle parameters corresponding to the second distance parameters distributed in different second distance parameter subsets are different.

6. The method according to claim 5, wherein
a quantization offset of a first angle parameter corresponding to a first distance parameter in a first distance parameter subset with index k is $\frac{k}{K}$, and the first angle parameter corresponding to the first distance parameter in the first distance parameter subset with index k satisfy $l ∈ \left\{\frac{k}{K},1+\frac{k}{K},⋯,{N}_{1}{O}_{1}-1+\frac{k}{K}\right\}$; and/or,
a quantization offset of a second angle parameter corresponding to a second distance parameter in a second distance parameter subset with index *k* is $\frac{k}{K}$, and the second angle parameter corresponding to the second distance parameter in the second distance parameter subset with index *k* satisfy $m ∈ \left\{\frac{k}{K},1+\frac{k}{K},⋯,{N}_{2}{O}_{2}-1+\frac{k}{K}\right\}$;
wherein 0 ≤ *k* ≤ *K-1,* and *k* is an integer.

7. The method according to claim 6, wherein K =2,
the first distance parameter ${o}_{1} ∈ \left\{1, 2, ⋯, \left⌈\frac{2 \sqrt{2}}{3}\left({N}_{3}{O}_{3}-1\right)+1\right⌉\right\}$; and/or,
the second distance parameter ${o}_{2} ∈ \left\{1, 2, ⋯, \left⌈\frac{2 \sqrt{2}}{3}\left({N}_{4}{O}_{4}-1\right)+1\right⌉\right\}$.

8. The method according to claim 7, wherein a basis vector of the first codebook is a Kronecker product of a first basis vector in the horizontal dimension and a second basis vector in the vertical dimension;
an ${n}_{1}^{′}$-th element ${ν}_{{n}_{1}^{′}}$ in the first basis vector *v* is ${ν}_{{n}_{1}^{′}} = exp \left(j\frac{2 π}{λ}\left(\frac{2 {ln}_{1}^{′} {d}_{x}}{{N}_{1} {O}_{1}}-\frac{\left({\left({n}_{1}^{′}\right)}^{2}-{n}_{1}^{′}\left({N}_{1}+1\right)\right) {d}_{x}^{2} λ {\left⌈\frac{2 \sqrt{2}}{3}\left({N}_{3}{O}_{3}-1\right)+1\right⌉}^{2}}{4 {o}_{1}^{2} {D}_{x}^{2}}\right)\right) ;$ and/or
an ${n}_{2}^{′}$-th element ${u}_{{n}_{2}^{′}}$ in the second basis vector *u* is: ${u}_{{n}_{2}^{′}} = exp \left(j\frac{2 π}{λ}\left(\frac{2 {mn}_{2}^{′} {d}_{z}}{{N}_{2} {O}_{2}}-\frac{\left({\left({n}_{2}^{′}\right)}^{2}-{n}_{2}^{′}\left({N}_{2}+1\right)\right) {d}_{z}^{2} λ {\left⌈\frac{2 \sqrt{2}}{3}\left({N}_{4}{O}_{4}-1\right)+1\right⌉}^{2}}{4 {o}_{2}^{2} {D}_{z}^{2}}\right)\right) ;$
wherein *j* is an imaginary unit, *λ* represents a wavelength of wireless signal, *dₓ* represents a horizontal-dimension antenna spacing of the first antenna array, *Dₓ* represents a horizontal-dimension length of the first antenna array, *d_{z}* represents a vertical-dimension antenna spacing of the first antenna array, and *D_{z}* represents a vertical-dimension length of the first antenna array.

9. The method according to claim 8, wherein
${d}_{x} = \frac{λ}{2} , {D}_{x} = {N}_{1} {d}_{x} = {N}_{1} \frac{λ}{2}$*, N*₁ = *N*₃ and *O*₁ = *O*₃, the ${n}_{1}^{′}$-th element ${ν}_{{n}_{1}^{′}}$ in the first basis vector *v* is: ${ν}_{{n}_{1}^{′}} = exp \left(\frac{j 2 {πln}_{1}^{′}}{{N}_{1} {O}_{1}}-\frac{jπ \left({\left({n}_{1}^{′}\right)}^{2}-{n}_{1}^{′}\left({N}_{1}+1\right)\right) {\left⌈\frac{2 \sqrt{2}}{3}\left({N}_{1}{O}_{1}-1\right)+1\right⌉}^{2}}{2 {o}_{1}^{2} {N}_{1}^{2}}\right) ;$ and/or,
${d}_{z} = \frac{λ}{2} , {D}_{z} = {N}_{2} {d}_{z} = {N}_{2} \frac{λ}{2}$*, N*₂ = *N*₄ and *O*₂ = *O*₄, the ${n}_{2}^{′}$-th element ${u}_{{n}_{2}^{′}}$ in the second basis vector *u* is: ${u}_{{n}_{2}^{′}} = exp \left(\frac{j 2 {πmn}_{2}^{′}}{{N}_{2} {O}_{2}}-\frac{jπ \left({\left({n}_{2}^{′}\right)}^{2}-{n}_{2}^{′}\left({N}_{2}+1\right)\right) {\left⌈\frac{2 \sqrt{2}}{3}\left({N}_{2}{O}_{2}-1\right)+1\right⌉}^{2}}{2 {o}_{2}^{2} {N}_{2}^{2}}\right) .$

10. The method according to claim 4, wherein
multiple first angle parameters are distributed in K first angle parameter subsets, and quantization offsets of first distance parameters corresponding to the first angle parameters distributed in different first angle parameter subsets are different; and/or,
multiple second angle parameters are distributed in *K* second angle parameter subsets, and quantization offsets of second distance parameters corresponding to the second angle parameters distributed in different second angle parameter subsets are different.

11. The method according to claim 10, wherein
a quantization offset of a first distance parameter corresponding to a first angle parameter in a first angle parameter subset with index *k* is $\frac{k}{K}$, and the first distance parameter corresponding to the first angle parameter in the first angle parameter subset with index *k* satisfy ${o}_{1} ∈ \left\{\frac{k}{K},1+\frac{k}{K},⋯,{N}_{3}{O}_{3}-1+\frac{k}{K}\right\}$; and/or,
a quantization offset of a second distance parameter corresponding to a second angle parameter in a second angle parameter subset with index *k* is $\frac{k}{K}$, and the second distance parameters corresponding to the second angle parameter in the second angle parameter subset with index *k* satisfy ${o}_{2} ∈ \left\{\frac{k}{K},1+\frac{k}{K},⋯,{N}_{4}{O}_{4}-1+\frac{k}{K}\right\}$;
wherein 0 < *k* ≤ *K,* and *k* is an integer.

12. The method according to claim 11, wherein *K*=2,
the first angle parameter $l ∈ \left\{0, 1, 2, ⋯, \left⌈\frac{2 \sqrt{2}}{3}\left({N}_{1}{O}_{1}-1\right)\right⌉\right\}$; and/or,
the second angle parameter $m ∈ \left\{0, 1, 2, ⋯, \left⌈\frac{2 \sqrt{2}}{3}\left({N}_{2}{O}_{2}-1\right)\right⌉\right\}$.

13. The method according to claim 12, wherein,
an ${n}_{1}^{′}$-th element ${ν}_{{n}_{1}^{′}}$ in the first basis vector *v* is: ${ν}_{{n}_{1}^{′}} = exp \left(j\frac{2 π}{λ}\left(\frac{2 {ln}_{1}^{′} {d}_{x}}{\left⌈\frac{2 \sqrt{2}}{3}\left({N}_{1}{O}_{1}-1\right)+1\right⌉}-\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)\right) ;$ and/or
an ${n}_{2}^{′}$-th element ${u}_{{n}_{2}^{′}}$ in the second basis vector *u* is: ${u}_{{n}_{2}^{′}} = exp \left(j\frac{2 π}{λ}\left(\frac{2 {mn}_{2}^{′} {d}_{z}}{\left⌈\frac{2 \sqrt{2}}{3}\left({N}_{2}{O}_{2}-1\right)+1\right⌉}-\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)\right) ;$
wherein *j* is an imaginary unit, *λ* represents a wavelength of wireless signal, *dₓ* represents a horizontal-dimension antenna spacing of the first antenna array, *Dₓ* represents a horizontal-dimension length of the first antenna array, *d_{z}* represents a vertical-dimension antenna spacing of the first antenna array, and *D_{z}* represents a vertical-dimension length of the first antenna array.

14. The method according to claim 13, wherein
${d}_{x} = \frac{λ}{2} , {D}_{x} = {N}_{1} {d}_{x} = {N}_{1} \frac{λ}{2}$*, N*₁ = *N*₃ and *O*₁ = *O*₃, the ${n}_{1}^{′}$-th element ${ν}_{{n}_{1}^{′}}$ in the first basis vector *v* is: ${ν}_{{n}_{1}^{′}} = exp \left(\frac{j 2 {πln}_{1}^{′}}{\left⌈\frac{2 \sqrt{2}}{3}\left({N}_{1}{O}_{1}-1\right)+1\right⌉}-\frac{jπ \left({\left({n}_{1}^{′}\right)}^{2}-{n}_{1}^{′}\left({N}_{1}+1\right)\right) {O}_{1}^{2}}{2 {o}_{1}^{2}}\right) ;$ and/or,
${d}_{z} = \frac{λ}{2} , {D}_{z} = {N}_{2} {d}_{z} = {N}_{2} \frac{λ}{2}$, *N*₂ *= N*₄ and *O*₂ = *O*₄, the ${n}_{2}^{′}$-th element ${u}_{{n}_{2}^{′}}$ in the second basis vector *u* is: ${u}_{{n}_{2}^{′}} = exp \left(\frac{j 2 {πmn}_{2}^{′}}{\left⌈\frac{2 \sqrt{2}}{3}\left({N}_{2}{O}_{2}-1\right)+1\right⌉}-\frac{jπ \left({\left({n}_{2}^{′}\right)}^{2}-{n}_{2}^{′}\left({N}_{2}+1\right)\right) {O}_{2}^{2}}{2 {o}_{2}^{2}}\right) .$

15. The method according to any one of claims 4-14, wherein the first information comprises at least one of:
a first indication field, wherein the first indication field is used to indicate a first angle parameter corresponding to the first codeword;
a second indication field, wherein the second indication field is used to indicate a second angle parameter corresponding to the first codeword;
a third indication field, wherein the third indication field is used to indicate a first distance parameter corresponding to the first codeword; and
a fourth indication field, wherein the fourth indication field is used to indicate a second distance parameter corresponding to the first codeword.

16. The method according to claim 15, wherein
the first indication field comprises at least $\left⌈{log}_{2} {N}_{1}{O}_{1}\right⌉$ bits;
the second indication field comprises at least $\left⌈{log}_{2} {N}_{2}{O}_{2}\right⌉$ bits;
the third indication field comprises at least $\left⌈{log}_{2}\left⌈\frac{2 \sqrt{2}}{3}\left({N}_{3}{O}_{3}-1\right)+1\right⌉\right⌉$ bits; and
the fourth indication field comprises at least $\left⌈{log}_{2}\left⌈\frac{2 \sqrt{2}}{3}\left({N}_{4}{O}_{4}-1\right)+1\right⌉\right⌉$ bits.

17. The method according to claim 15, wherein
the first indication field comprises at least $\left⌈{log}_{2}\left⌈\frac{2 \sqrt{2}}{3}\left({N}_{1}{O}_{1}-1\right)+1\right⌉\right⌉$ bits;
the second indication field comprises at least $\left⌈{log}_{2}\left⌈\frac{2 \sqrt{2}}{3}\left({N}_{2}{O}_{2}-1\right)+1\right⌉\right⌉$ bits;
the third indication field comprises at least $\left⌈{log}_{2} {N}_{3}{O}_{3}\right⌉$ bits; and
the fourth indication field comprises at least $\left⌈{log}_{2} {N}_{4}{O}_{4}\right⌉$ bits.

18. The method according to any one of claims 1-17, wherein the first codebook is used for single-polarization single-layer transmission; or,
the first codebook is used for dual-polarization multi-layer transmission, and the first codebook is constructed based on an angle parameter, a distance parameter and a co-phase coefficient.

19. The method according to claim 18, further comprising:
sending, by the terminal, second information to the network device, wherein the second information is used to indicate a co-phase coefficient corresponding to the first codeword.

20. The method according to any one of claims 19-20, wherein the co-phase coefficient comprises at least one of:
binary phase shift keying (BPSK), quadrature phase shift keying (QPSK), and 8 phase shift keying (8-PSK).

21. A communication method, comprising:
receiving, by a network device, first information sent by a terminal, wherein the first information is used to indicate a first codeword, the first codeword is a codeword in a first codebook, the first codebook is obtained based on an angle parameter set and a distance parameter set, and the first codebook is a codebook used when the terminal is located in a near-field region of a first antenna array.

22. The method according to claim 21, wherein the first antenna array is one of: a uniform linear array; or a uniform planar array.

23. The method according to any one of claims 21-22, wherein the first antenna array comprises *N*₁ antenna ports in a horizontal dimension and *N*₂ antenna ports in a vertical dimension, wherein *N*₁ is greater than or equal to 1, and *N*₂ is greater than or equal to 1.

24. The method according to any one of claims 21-23, wherein,
an angle parameter comprises:
at least one first angle parameter, wherein the first angle parameter is obtained by quantifying a horizontal-dimension angle domain in the near-field region according to the number of antenna ports *N*₁ in the horizontal dimension and an oversampling factor *O*₁ of the horizontal-dimension angle domain; and/or,
at least one second angle parameter, wherein the second angle parameter is obtained by quantifying a vertical-dimension angle domain in the near-field region according to the number of antenna ports *N*₂ in the vertical dimension and an oversampling factor *O*₂ of the vertical-dimension angle domain;
a distance parameter comprises:
at least one first distance parameter, wherein the first distance parameter is obtained by quantifying a horizontal-dimension distance domain in the near-field region according to the number of sampling points *N*₃ in the horizontal dimension and an oversampling factor *O*₃ of the horizontal-dimension distance domain; and/or,
at least one second distance parameter, wherein the second distance parameter is obtained by quantifying a vertical-dimension distance domain in the near-field region according to the number of sampling points *N*₄ in the vertical dimension and an oversampling factor *O*₄ of the vertical-dimension distance domain.

25. The method according to claim 24, wherein
multiple first distance parameters are distributed in K first distance parameter subsets, and quantization offsets of first angle parameters corresponding to the first distance parameters distributed in different first distance parameter subsets are different; and/or,
multiple second distance parameters are distributed in K second distance parameter subsets, and quantization offsets of second angle parameters corresponding to the second distance parameters distributed in different second distance parameter subsets are different.

26. The method according to claim 25, wherein,
a quantization offset of a first angle parameter corresponding to a first distance parameter in a first distance parameter subset with index k is $\frac{k}{K}$, and the first angle parameter corresponding to the first distance parameter in the first distance parameter subset with index *k* satisfy $l ∈ \left\{\frac{k}{K},1+\frac{k}{K},⋯,{N}_{1}{O}_{1}-1+\frac{k}{K}\right\}$; and/or,
a quantization offset of a second angle parameter corresponding to a second distance parameter in a second distance parameter subset with index *k* is $\frac{k}{K}$, and the second angle parameter corresponding to the second distance parameter in the second distance parameter subset with index *k* satisfy $m ∈ \left\{\frac{k}{K},1+\frac{k}{K},⋯,{N}_{2}{O}_{2}-1+\frac{k}{K}\right\}$;
wherein 0 ≤ *k* ≤ *K-1,* and *k* is an integer.

27. The method according to claim 26, wherein *K*=2,
the first distance parameter ${o}_{1} ∈ \left\{1, 2, ⋯, \left⌈\frac{2 \sqrt{2}}{3}\left({N}_{3}{O}_{3}-1\right)+1\right⌉\right\}$; and/or,
the second distance parameter ${o}_{2} ∈ \left\{1, 2, ⋯, \left⌈\frac{2 \sqrt{2}}{3}\left({N}_{4}{O}_{4}-1\right)+1\right⌉\right\}$.

28. The method according to claim 27, wherein a basis vector of the first codebook is a Kronecker product of a first basis vector in the horizontal dimension and a second basis vector in the vertical dimension;
an ${n}_{1}^{′}$-th element ${ν}_{{n}_{1}^{′}}$ in the first basis vector *v* is ${ν}_{{n}_{1}^{′}} = exp \left(j\frac{2 π}{λ}\left(\frac{2 {ln}_{1}^{′} {d}_{x}}{{N}_{1} {O}_{1}}-\frac{\left({\left({n}_{1}^{′}\right)}^{2}-{n}_{1}^{′}\left({N}_{1}+1\right)\right) {d}_{x}^{2} λ {\left⌈\frac{2 \sqrt{2}}{3}\left({N}_{3}{O}_{3}-1\right)+1\right⌉}^{2}}{4 {o}_{1}^{2} {D}_{x}^{2}}\right)\right) ;$ and/or
an ${n}_{2}^{′}$-th element ${u}_{{n}_{2}^{′}}$ in the second basis vector *u* is: ${u}_{{n}_{2}^{′}} = exp \left(j\frac{2 π}{λ}\left(\frac{2 {mn}_{2}^{′} {d}_{z}}{{N}_{2} {O}_{2}}-\frac{\left({\left({n}_{2}^{′}\right)}^{2}-{n}_{2}^{′}\left({N}_{2}+1\right)\right) {d}_{z}^{2} λ {\left⌈\frac{2 \sqrt{2}}{3}\left({N}_{4}{O}_{4}-1\right)+1\right⌉}^{2}}{4 {o}_{2}^{2} {D}_{z}^{2}}\right)\right) ;$
wherein *j* is an imaginary unit, *λ* represents a wavelength of wireless signal, *dₓ* represents a horizontal-dimension antenna spacing of the first antenna array, *Dₓ* represents a horizontal-dimension length of the first antenna array, *d_{z}* represents a vertical-dimension antenna spacing of the first antenna array, and *D_{z}* represents a vertical-dimension length of the first antenna array.

29. The method according to claim 28, wherein,
${d}_{x} = \frac{λ}{2} , {D}_{x} = {N}_{1} {d}_{x} = {N}_{1} \frac{λ}{2}$*, N*₁ = *N*₃ and *O*₁ = *O*₃, the ${n}_{1}^{′}$-th element ${ν}_{{n}_{1}^{′}}$ in the first basis vector v is: ${ν}_{{n}_{1}^{′}} = exp \left(\frac{j 2 {πln}_{1}^{′}}{{N}_{1} {O}_{1}}-\frac{jπ \left({\left({n}_{1}^{′}\right)}^{2}-{n}_{1}^{′}\left({N}_{1}+1\right)\right) {\left⌈\frac{2 \sqrt{2}}{3}\left({N}_{1}{O}_{1}-1\right)+1\right⌉}^{2}}{2 {o}_{1}^{2} {N}_{1}^{2}}\right) ;$ and/or,
${d}_{z} = \frac{λ}{2} , {D}_{z} = {N}_{2} {d}_{z} = {N}_{2} \frac{λ}{2}$, *N*₂ *= N*₄ and *O*₂ = *O*₄ , the ${n}_{2}^{′}$-th element ${u}_{{n}_{2}^{′}}$ in the second basis vector *u* is: ${u}_{{n}_{2}^{′}} = exp \left(\frac{j 2 {πmn}_{2}^{′}}{{N}_{2} {O}_{2}}-\frac{jπ \left({\left({n}_{2}^{′}\right)}^{2}-{n}_{2}^{′}\left({N}_{2}+1\right)\right) {\left⌈\frac{2 \sqrt{2}}{3}\left({N}_{2}{O}_{2}-1\right)+1\right⌉}^{2}}{2 {o}_{2}^{2} {N}_{2}^{2}}\right) .$

30. The method according to claim 24, wherein
multiple first angle parameters are distributed in *K* first angle parameter subsets, and quantization offsets of first distance parameters corresponding to the first angle parameters distributed in different first angle parameter subsets are different; and/or,
multiple second angle parameters are distributed in *K* second angle parameter subsets, and quantization offsets of second distance parameters corresponding to the second angle parameters distributed in different second angle parameter subsets are different.

31. The method according to claim 30, wherein
a quantization offset of a first distance parameter corresponding to a first angle parameter in a first angle parameter subset with index *k* is $\frac{k}{K}$, and the first distance parameter corresponding to the first angle parameter in the first angle parameter subset with index *k* satisfy ${o}_{1} ∈ \left\{\frac{k}{K},1+\frac{k}{K},⋯,{N}_{3}{O}_{3}-1+\frac{k}{K}\right\}$; and/or,
a quantization offset of a second distance parameter corresponding to a second angle parameter in a second angle parameter subset with index *k* is $\frac{k}{K}$, and the second distance parameters corresponding to the second angle parameter in the second angle parameter subset with index k satisfy ${o}_{2} ∈ \left\{\frac{k}{K},1+\frac{k}{K},⋯,{N}_{4}{O}_{4}-1+\frac{k}{K}\right\}$;
wherein 0 *< k* ≤ *K* , and *k* is an integer.

32. The method according to claim 31, wherein *K* =2,
the first angle parameter $l ∈ \left\{0, 1, 2, ⋯, \left⌈\frac{2 \sqrt{2}}{3}\left({N}_{1}{O}_{1}-1\right)\right⌉\right\}$; and/or,
the second angle parameter $m ∈ \left\{0, 1, 2, ⋯, \left⌈\frac{2 \sqrt{2}}{3}\left({N}_{2}{O}_{2}-1\right)\right⌉\right\}$.

33. The method according to claim 32, wherein
an ${n}_{1}^{′}$-th element ${ν}_{{n}_{1}^{′}}$ in the first basis vector *v* is: ${ν}_{{n}_{1}^{′}} = exp \left(j\frac{2 π}{λ}\left(\frac{2 {ln}_{1}^{′} {d}_{x}}{\left⌈\frac{2 \sqrt{2}}{3}\left({N}_{1}{O}_{1}-1\right)+1\right⌉}-\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)\right) ;$ and/or
an ${n}_{2}^{′}$-th element ${u}_{{n}_{2}^{′}}$ in the second basis vector *u* is: ${u}_{{n}_{2}^{′}} = exp \left(j\frac{2 π}{λ}\left(\frac{2 {mn}_{2}^{′} {d}_{z}}{\left⌈\frac{2 \sqrt{2}}{3}\left({N}_{2}{O}_{2}-1\right)+1\right⌉}-\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)\right) ;$
wherein *j* is an imaginary unit, *λ* represents a wavelength of wireless signal, *dₓ* represents a horizontal-dimension antenna spacing of the first antenna array, *Dₓ* represents a horizontal-dimension length of the first antenna array, *d_{z}* represents a vertical-dimension antenna spacing of the first antenna array, and *D_{z}* represents a vertical-dimension length of the first antenna array.

34. The method according to claim 33, wherein,
${d}_{x} = \frac{λ}{2} , {D}_{x} = {N}_{1} {d}_{x} = {N}_{1} \frac{λ}{2}$, *N*₁ *= N*₃ and *O*₁ = *O*₃ , the ${n}_{1}^{′}$-th element ${ν}_{{n}_{1}^{′}}$ in the first basis vector *V* is: ${ν}_{{n}_{1}^{′}} = exp \left(\frac{j 2 {πln}_{1}^{′}}{\left⌈\frac{2 \sqrt{2}}{3}\left({N}_{1}{O}_{1}-1\right)+1\right⌉}-\frac{jπ \left({\left({n}_{1}^{′}\right)}^{2}-{n}_{1}^{′}\left({N}_{1}+1\right)\right) {O}_{1}^{2}}{2 {o}_{1}^{2}}\right) ;$ and/or,
${d}_{z} = \frac{λ}{2} , {D}_{z} = {N}_{2} {d}_{z} = {N}_{2} \frac{λ}{2}$, *N*₂ *= N*₄ and *O*₂ = *O*₄ , the ${n}_{2}^{′}$-th element ${u}_{{n}_{2}^{′}}$ in the second basis vector *u* is: ${u}_{{n}_{2}^{′}} = exp \left(\frac{j 2 {πmn}_{2}^{′}}{\left⌈\frac{2 \sqrt{2}}{3}\left({N}_{2}{O}_{2}-1\right)+1\right⌉}-\frac{jπ \left({\left({n}_{2}^{′}\right)}^{2}-{n}_{2}^{′}\left({N}_{2}+1\right)\right) {O}_{2}^{2}}{2 {o}_{2}^{2}}\right) .$

35. The method according to any one of claims 24-34, wherein the first information comprises at least one of:
a first indication field, wherein the first indication field is used to indicate a first angle parameter corresponding to the first codeword;
a second indication field, wherein the second indication field is used to indicate a second angle parameter corresponding to the first codeword;
a third indication field, wherein the third indication field is used to indicate a first distance parameter corresponding to the first codeword; and
a fourth indication field, wherein the fourth indication field is used to indicate a second distance parameter corresponding to the first codeword.

36. The method according to claim 35, wherein
the first indication field comprises at least $\left⌈{log}_{2} {N}_{1}{O}_{1}\right⌉$ bits;
the second indication field comprises at least $\left⌈{log}_{2} {N}_{2}{O}_{2}\right⌉$ bits;
the third indication field comprises at least $\left⌈{log}_{2}\left⌈\frac{2 \sqrt{2}}{3}\left({N}_{3}{O}_{3}-1\right)+1\right⌉\right⌉$ bits; and
the fourth indication field comprises at least $\left⌈{log}_{2}\left⌈\frac{2 \sqrt{2}}{3}\left({N}_{4}{O}_{4}-1\right)+1\right⌉\right⌉$ bits.

37. The method according to claim 35, wherein
the first indication field comprises at least $\left⌈{log}_{2}\left⌈\frac{2 \sqrt{2}}{3}\left({N}_{1}{O}_{1}-1\right)+1\right⌉\right⌉$ bits;
the second indication field comprises at least $\left⌈{log}_{2}\left⌈\frac{2 \sqrt{2}}{3}\left({N}_{2}{O}_{2}-1\right)+1\right⌉\right⌉$ bits;
the third indication field comprises at least $\left⌈{log}_{2} {N}_{3}{O}_{3}\right⌉$ bits; and
the fourth indication field comprises at least $\left⌈{log}_{2} {N}_{4}{O}_{4}\right⌉$ bits.

38. The method according to any one of claims 21-37, wherein the first codebook is used for single-polarization single-layer transmission; or,
the first codebook is used for dual-polarization multi-layer transmission, and the first codebook is constructed based on an angle parameter, a distance parameter and a co-phase coefficient.

39. The method according to claim 38, further comprising:
receiving, by the network device, second information sent by the terminal, wherein the second information is used to indicate a co-phase coefficient corresponding to the first codeword.

40. The method according to any one of claims 19-20, wherein the co-phase coefficient comprises at least one of:
binary phase shift keying (BPSK), quadrature phase shift keying (QPSK), and 8 phase shift keying (8-PSK).

41. A terminal, comprising:
a processing module, configured to determine a first codeword in a first codebook, wherein the first codebook is obtained based on an angle parameter set and a distance parameter set, and the first codebook is a codebook used when the terminal is located in a near-field region of a first antenna array; and
a transceiver module, configured to send first information to a network device, wherein the first information is used to indicate the first codeword.

42. A network device, comprising:
a transceiver module, configured to receive first information sent by a terminal, wherein the first information is used to indicate a first codeword, the first codeword is a codeword in a first codebook, the first codebook is obtained based on an angle parameter set and a distance parameter set, and the first codebook is a codebook used when the terminal is located in a near-field region of a first antenna array.

43. A terminal, comprising:
one or more processors; and
a memory coupled to the one or more processors, wherein the memory stores executable instructions that, when executed by the one or more processors, cause the terminal to perform the communication method according to any one of claims 1 to 20.

44. A network device, comprising:
one or more processors; and
a memory coupled to the one or more processors, wherein the memory stores executable instructions that, when executed by the one or more processors, cause the network device to perform the communication method according to any one of claims 21 to 40.

45. A communication system, comprising a terminal and a network device, wherein the terminal is configured to implement the communication method according to any one of claims 1-20, and the network device is configured to implement the communication method according to any one of claims 21-40.

46. A storage medium, wherein the storage medium stores instructions that, when run on a communication device, cause the communication device to perform the communication method according to any one of claims 1 to 20 or claims 21 to 40.
